# EUROPEAN PATENT APPLICATION

(11) **EP 4 492 753 A1**
(43) Date of publication of application: **15.01.2025**
(21) Application number: 23778023.4
(22) Date of filing: 23.03.2023
(51) Int. Cl.: H04L 67/10

(54) **COMMUNICATION METHOD AND APPARATUS**

(30) Priority: 30.03.2022 CN 202210334628; 10.05.2022 CN 202210509572; 15.06.2022 CN 202210682397
(71) Applicant: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN)
(74) Representative: Isarpatent
(86) International application number: PCT/CN2023/083506
(87) International publication number: WO 2023/185654

(57) **Abstract**

A communication method and apparatus are provided, to improve a success rate of application context transfer. According to the method, a source EES may obtain information about at least one group of target EASs from a first target EES based on first information. The information about the at least one group of target EASs is determined based on information about a group of EASs. Therefore, when a plurality of EASs serve a terminal device, the source EES performs application context transfer based on information about a group of target EASs, to improve a success rate of application context transfer.

## Description

### CROSS-REFERENCE TO RELATED APPLICATIONS

This application claims priority to Chinese Patent Application No. 202210334628.X, filed with the China National Intellectual Property Administration on March 30, 2022 and entitled "COMMUNICATION METHOD AND APPARATUS", which is incorporated herein by reference in its entirety. This application claims priority to content of Chinese Patent Application No. 202210509572.7, filed with the China National Intellectual Property Administration on May 10, 2022 and entitled "COMMUNICATION METHOD AND APPARATUS", except all content in the application document No. 202210334628.X, which is incorporated herein by reference in its entirety. This application claims priority to content of Chinese Patent Application No. 202210682397.1, filed with the China National Intellectual Property Administration on June 15, 2022 and entitled "COMMUNICATION METHOD AND APPARATUS", except all content in the application document No. 202210509572.7, which is incorporated herein by reference in its entirety.

### TECHNICAL FIELD

This application relates to the field of mobile communication technologies, and in particular, to a communication method and apparatus.

### BACKGROUND

In a current edge computing technology, an application deployed in an edge data network (edge data network, EDN) may be referred to as an application instance. One or more edge application servers (edge application server, EAS) may be deployed for one application in one or more EDNs. EASs deployed and run in different EDNs may be considered as different EASs of one application. Therefore, after accessing a network, a terminal device may select an application instance in a nearby edge data network to execute a service. Due to mobility of the terminal device, an application instance previously selected by the terminal device may not be able to continuously provide a service for the terminal device well. To meet a service continuity requirement of an application, the network reselects an application instance in a new edge data network nearby for the terminal device to continue the service. This implements switching from a source application instance to a target application instance.

In addition, with continuous enrichment of current application types and expansion of application functions, a plurality of EASs need to provide services for a same terminal device. How to improve a success rate of application context transfer in this scenario is a problem worth considering.

### SUMMARY

This application provides a communication method and apparatus, to improve a success rate of application context transfer in a scenario in which a plurality of EASs provide services for a same terminal device.

According to a first aspect, a communication method is provided. The method may be applied to a scenario in which EASs provide services for a same terminal device. Specifically, the method may be implemented by a source edge enabler server (edge enabler server, EES) or a component in the source EES. The component is, for example, at least one of a processor, a transceiver, a processing module, or a transceiver module. For example, an execution body is the source EES. The method includes: the source EES sends first information to a target EES, where the first information includes information about a group of EASs, the group of EASs includes a plurality of associated edge application servers (edge application server, EAS), and the plurality of associated EASs serve a first application or the plurality of associated EASs serve a same terminal device or application client (application client, AC); and the source EES receives information about at least one group of target EASs from the target EES, where the at least one group of target EASs is determined based on the information about the group of EASs.

Optionally, the group of EASs may be a group of source EASs, and the group of source EASs may include a plurality of associated source EASs that currently serve the first application, the terminal device, or the AC.

According to the method, the source EES may obtain the information about the at least one group of target EASs from the target EES based on the first information. The information about the at least one group of target EASs is determined based on the information about the group of EASs. Therefore, when the plurality of EASs serve the terminal device, the source EES performs application context transfer based on information about a group of target EASs, so that a success rate of application context transfer can be improved.

In a possible implementation of the first aspect, the at least one group of target EASs is at least one group of second target EASs, and the source EES may further determine a group of first target EASs from the at least one group of second target EASs, where the group of first target EASs includes a plurality of associated target EASs, and the plurality of associated target EASs are configured to serve the first application after application context transfer. It may be understood that, when the source EES receives one group of target EASs, the action of determining a group of first target EASs from the at least one group of second target EASs may be ignored. In this case, the group of target EASs is the group of first target EASs.

According to a second aspect, a communication method is provided. The method may be applied to a scenario in which EASs provide services for a same terminal device. Specifically, the method may be implemented by a source EES or a component in the source EES. The component is, for example, at least one of a processor, a transceiver, a processing module, or a transceiver module. For example, an execution body is the source EES. The method includes: the source EES receives information about EASs managed by a target EES from the target EES; and the source EES determines, based on first information and the information about the EASs managed by the target EES, a group of target EASs from the EASs managed by the target EES, where the first information includes information about a group of EASs, the group of EASs includes a plurality of associated edge application servers EASs, the plurality of associated EASs serve a first application or the plurality of associated EASs serve a same terminal device or AC, the group of target EASs includes a plurality of associated target EASs, and the plurality of associated target EASs are configured to serve the first application after application context transfer.

According to the method, the source EES may obtain the information about the EASs managed by the target EES from the target EES, and determine, based on the first information and the information about the EASs managed by the target EES, the group of target EASs from the EASs managed by the target EES. Therefore, information about the group of target EASs is determined based on the information about the group of EASs. When the plurality of EASs serve the terminal device, the source EES performs application context transfer based on the information about the group of target EASs, so that a success rate of application context transfer can be improved.

In a possible implementation of the second aspect, the EASs managed by the target EES include at least one group of third target EASs, and the source EES may determine information about first target EASs from information about the at least one group of third target EASs based on the first information, where EASs in any group of third target EASs serve a same application.

Based on this implementation, the EASs managed by the target EES may include the at least one group of third target EASs, and any group of third target EASs corresponds to a same application. Therefore, the source EES may determine the group of target EASs from the at least one group of third target EASs based on the first information, so that efficiency of determining the group of target EASs can be improved.

In a possible implementation of the first aspect or the second aspect, the plurality of associated EASs correspond to the source EES; or the plurality of associated EASs correspond to the source EES and at least one EES other than the source EES. Alternatively, the source EES includes at least one EES.

In a possible implementation of the first aspect or the second aspect, the source EES sends the first information to an edge configuration server (edge configuration server, ECS); and the source EES receives information about the target EES from the ECS, where the target EES is determined based on the first information.

Based on this implementation, the ECS may determine the target EES based on the first information, to avoid selecting, as the target EES, an EES that does not support the group of EASs, thereby further improving a success rate of application context transfer.

In a possible implementation of the first aspect or the second aspect, the target EES is a plurality of target EESs.

In a possible implementation of the first aspect or the second aspect, the plurality of target EESs correspond to a same data center.

In a possible implementation of the first aspect or the second aspect, the source EES may further receive second information from the ECS, where the second information indicates that the plurality of target EESs serve the group of EASs.

In a possible implementation of the first aspect or the second aspect, that the source EES receives information about the target EES from the ECS is that the source EES receives information about at least one target EES (also referred to as second target EES) from the ECS, where the at least one target EES includes a first target EES, and the at least one target EES is determined based on the first information; and the method further includes: the source EES determines the first target EES from the at least one target EES. Alternatively, the source EES receives information about at least one EES and information about EASs corresponding to the at least one EES from the ECS; and the source EES determines the target EES from the at least one EES based on the first information, the information about the at least one EES, and the information about the EASs corresponding to the at least one EES.

In a possible implementation of the first aspect or the second aspect, the information about the at least one EES includes information about a data center of the at least one EES.

In a possible implementation of the first aspect or the second aspect, the source EES may determine one target EES from the at least one EES, where EASs corresponding to the target EES include the group of EASs; or the source EES determines a plurality of target EESs from the at least one EES, where EASs corresponding to each of the plurality of target EESs include some EASs in the group of EASs.

In a possible implementation of the first aspect or the second aspect, the plurality of target EESs correspond to a same data center.

In a possible implementation of the first aspect or the second aspect, the source EES may send the first information to the at least one second target EES.

Based on this implementation, the source EES may send the first information to a plurality of target EESs, to further improve a success rate of application context transfer.

In a possible implementation of the first aspect or the second aspect, the source EES may alternatively receive, from the ECS, information about EASs managed by at least one EES; and the source EES determines the target EES from the at least one EES based on the first information and the information about the EASs managed by the at least one EES.

Based on this implementation, the source EES may determine the target EES based on the first information, to avoid selecting, as the target EES, an EES that does not support the group of EASs, thereby further improving a success rate of application context transfer.

In a possible implementation of the first aspect or the second aspect, the source EES may further receive the first information from a terminal device (including, for example, an AC and/or an edge enabler client (edge enabler client, EEC)); or the source EES may further receive the first information from one or more EASs in the group of EASs.

Based on this implementation, the source EES can flexibly obtain the first information.

In a possible implementation of the first aspect or the second aspect, the source EES may further determine, based on the first information, the group of EASs from EASs managed by the source EES. For example, the terminal device may send the first information to the source EES in an EAS discovery process, and the source EES may discover source EASs based on the first information, thereby improving EAS discovery efficiency.

In a possible implementation of the first aspect or the second aspect, the first information further includes information indicating that the plurality of associated EASs in the group of EASs serve the first application.

In a possible implementation of the first aspect or the second aspect, the information about the group of EASs includes identifiers and/or type information of the plurality of associated EASs.

Based on this implementation, the identifiers and/or the type information of the EASs in the first information may indicate the plurality of associated EASs, and the source EES may determine the target EASs based on the identifiers and/or the type information of the EASs, to implement accurate determining of the target EASs.

According to a third aspect, a communication method is provided. The method may be applied to a scenario in which EASs provide services for a same terminal device. Specifically, the method may be implemented by a target EES or a component in the target EES. The component is, for example, at least one of a processor, a transceiver, a processing module, or a transceiver module. For example, an execution body is the target EES. The method includes: the target EES receives first information from a source EES, where the first information includes information about a group of EASs, the group of EASs includes a plurality of associated EASs, and the plurality of associated EASs serve a first application or the plurality of associated EASs serve a same terminal device or AC; the target EES determines information about at least one group of target EASs based on the first information; and the target EES sends the information about the at least one group of target EASs to the source EES.

Based on the method, the target EES may determine the information about the at least one group of target EASs based on the first information, and send the information about the at least one group of target EASs to the source EES. When the plurality of EASs serve the terminal device, the source EES performs application context transfer based on information about a group of target EASs, so that a success rate of application context transfer can be improved.

In a possible implementation, the target EES may determine, based on the first information and information about EASs managed by the target EES, the information about the at least one group of target EASs from the EASs managed by the target EES.

In a possible implementation, the at least one group of target EASs may include a group of first target EASs, the group of first target EASs may include a plurality of associated target EASs, and the plurality of associated target EASs are configured to serve the first application after application context transfer.

In a possible implementation, the target EES may further send the information about the EASs managed by the target EES to an ECS. Optionally, the ECS may receive information about EASs managed by a plurality of EESs, including but not limited to the information about the EASs managed by the target EES from the target EES.

In a possible implementation, the information about the EASs managed by the target EES includes identifiers of the EASs managed by the target EES, and includes at least one of uniform resource identifiers (uniform resource identifier, URI), fully qualified domain names (fully qualified domain name, FQDN), or internet protocol (internet protocol, IP) addresses of the EASs managed by the target EES.

In a possible implementation, the first information further includes information indicating that the plurality of associated EASs in the group of EASs serve the first application.

In a possible implementation, the information about the group of EASs includes identifiers and/or type information of the plurality of associated EASs.

According to a fourth aspect, a communication method is provided. The method may be applied to a scenario in which EASs provide services for a same terminal device. Specifically, the method may be implemented by an ECS or a component in the ECS. The component is, for example, at least one of a processor, a transceiver, a processing module, or a transceiver module. For example, an execution body is the ECS. The method includes: the ECS receives first information from a source EES, where the first information includes information about a group of EASs, the group of EASs includes a plurality of associated edge application servers EASs, and the plurality of associated EASs serve a first application or the plurality of associated EASs serve a same terminal device or AC; the ECS may further determine at least one target EES from at least one EES based on the first information; and the ECS may further send information about the at least one target EES to the source EES. Based on the method, the ECS may determine the at least one target EES based on the first information, and send the information about the at least one target EES to the source EES. When the plurality of EASs serve the terminal device, the source EES may perform EAS discovery based on the information about the target EES, so that a success rate of application context transfer can be improved.

In a possible implementation, the ECS may determine the at least one target EES from the at least one EES based on the first information and information about EASs managed by the at least one EES; or the ECS determines the at least one target EES from the at least one EES based on the first information, information about the at least one EES, and information about EASs corresponding to the at least one EES.

In a possible implementation, the ECS determines one target EES from the at least one EES, where EASs corresponding to the target EES include the group of EASs; or the ECS determines a plurality of target EESs from the at least one EES, where EASs corresponding to each of the plurality of target EESs include some EASs in the group of EASs.

In a possible implementation, the plurality of target EESs correspond to a same data center.

In a possible implementation, the target EES is a plurality of target EESs, and the ECS may further send second information to the source EES, where the second information indicates that the plurality of target EESs serve the group of EASs.

In a possible implementation, the ECS may receive the information about the EASs managed by the at least one EES from the at least one EES.

In a possible implementation, the first information further includes information indicating that the plurality of associated EASs in the group of EASs serve the first application.

In a possible implementation, the information about the group of EASs may include identifiers and/or type information of the plurality of associated EASs.

In a possible implementation, the at least one target EES includes a first target EES, and the first target EES is configured to discover at least one group of target EASs.

In any one of the first aspect, the second aspect, the third aspect, or the fourth aspect, the information about the target EASs include at least one of URIs, FQDNs, or IP addresses of the target EASs.

In any one of the first aspect, the second aspect, the third aspect, or the fourth aspect, the first information may further include information indicating that the plurality of EASs are associated. The information indicating that the plurality of EASs are associated may indicate that the group of EASs needs to provide services for the terminal device. Alternatively, the information indicating that the plurality of EASs are associated may indicate that target EASs need to be selected for the group of EASs, and therefore may indicate that a group of target EASs needs to be selected. Alternatively, the information indicating that the plurality of EASs are associated may indicate that one of the plurality of associated EASs performs application context transfer or more of the plurality of associated EASs perform application context transfer together.

According to a fifth aspect, a communication method is provided. The method may be applied to a scenario in which EASs provide services for a same terminal device. The EASs may be managed by a plurality of different EESs. In the fifth aspect, the method may be implemented by a first source EES or a component in the first source EES. The component is, for example, at least one of a processor, a transceiver, a processing module, or a transceiver module. For example, an execution body is the first source EES. The method includes: the first source edge enabler server EES obtains third information, where EASs corresponding to the first source EES include a first source EAS, the first source EAS and a second source EAS are included in a group of EASs, the second source EAS corresponds to a second source EES, the group of EASs includes a plurality of associated EASs, and the plurality of associated EASs serve a first application; and the first source EES sends the third information to the second source EES, where EASs corresponding to the second source EES include the second source EAS, where the third information is used to determine a target EAS corresponding to the second source EAS.

In a possible implementation, the third information includes at least one of the following: information about a target EES; information about EASs corresponding to the target EES, where the EASs corresponding to the target EES include the target EAS corresponding to the second source EAS; information about one or more data centers; or information about the target EAS corresponding to the second source EAS, where the information about the one or more data centers includes, for example, information about a data center in which the target EES is located; information about at least one data center in which at least one EES is located, where one or more of the at least one EES may be determined as target EESs; or information about at least one data center, and is used by the source EES to determine the target EES based on information about EESs corresponding to the one or more data centers.

In a possible implementation, the first source EES may further receive fourth information from the second source EES, where the fourth information is used to request the first source EES to discover the target EES and/or the target EAS.

In a possible implementation, the first source EES may further receive, from a terminal device, information about the second source EES and/or information indicating that the first source EAS and the second source EAS are to perform application context transfer together.

In a possible implementation, the first source EES may further send information about the group of EASs to an edge configuration server ECS; and the first source EES receives the information about the target EES from the ECS, where the target EES is determined based on the information about the group of EASs.

In a possible implementation, the first source EES may further receive, from an ECS, information about at least one EES and information about EASs corresponding to the at least one EES; and the first source EES determines the target EES from the at least one EES based on information about the group of EASs, the information about the at least one EES, and the information about the EASs corresponding to the at least one EES.

In a possible implementation, the information about the at least one EES includes information about a data center of the at least one EES.

In a possible implementation, the first source EES may further send an EAS discovery request to the target EES, where the EAS discovery request includes information about the second source EAS; and the first source EES receives the information about the target EAS corresponding to the second source EAS from the target EES.

In a possible implementation, the first source EES may further receive the information about the EASs corresponding to the target EES from the target EES; and the first source EES determines, based on the information about the second source EAS and the information about the EASs corresponding to the target EES, the target EAS corresponding to the second source EAS from at least one EAS corresponding to the target EAS.

In a possible implementation, the first source EES may further receive the information about the second source EAS from the terminal device.

In a possible implementation, the first source EES may further send fifth information to the second source EES, where the fifth information may indicate at least one of the following: that the first source EES performs EES discovery and/or EAS discovery; that an application context transfer ACR event is detected; or that application context transfer needs to be performed. When the fifth information indicates that the first source EES performs EES discovery and/or EAS discovery, it may be clear that the first source EES performs EES discovery and/or EAS discovery for the group of EASs; or when the fifth information indicates that an application context transfer ACR event is detected, or indicates that application context transfer needs to be performed, the second source EES performs EES discovery and/or EAS discovery. Therefore, a case in which discovery results are inconsistent because the first source EES and the second source EES repeatedly perform EES discovery or EAS discovery can be avoided.

According to a sixth aspect, a communication method is provided. The method may be applied to a scenario in which EASs provide services for a same terminal device. The EASs may be managed by a plurality of different EESs. In the sixth aspect, the method may be implemented by a second source EES or a component in the second source EES. The component is, for example, at least one of a processor, a transceiver, a processing module, or a transceiver module. For example, an execution body is the second source EES. The method includes: the second source edge enabler server EES receives third information from a first source EES, where EASs corresponding to the first source EES include a first source EAS, EASs corresponding to the second source EES include a second source EAS, the first source EAS and the second source EAS are included in a group of EASs, the group of EASs includes a plurality of associated EASs, and the plurality of associated EASs serve a first application; and the second source EES determines, based on the third information, a target EAS corresponding to the second source EAS.

In a possible implementation, the third information includes at least one of the following: information about a target EES; information about EASs corresponding to the target EES, where the EASs corresponding to the target EES include the target EAS corresponding to the second source EAS; information about one or more data centers; or information about the target EAS corresponding to the second source EAS, where the information about the one or more data centers includes, for example, information about a data center in which the target EES is located; information about at least one data center in which at least one EES is located, where one or more of the at least one EES may be determined as target EESs; or information about at least one data center, and is used by the source EES to determine the target EES based on information about EESs corresponding to the one or more data centers.

In a possible implementation, if the third information includes information about a plurality of data centers, the second source EES may further determine a data center from the plurality of data centers. Therefore, when the third information indicates only the data centers, the second source EES may determine the data center from the plurality of data centers based on the information about the data centers.

In a possible implementation, the second source EES may further determine the target EES from at least one EES corresponding to the data center. According to this implementation, the second source EES may further determine the target EES based on information about the at least one EES corresponding to the data center, for example, determine, as the target EES from a plurality of EESs corresponding to the data center, an EES managing the associated EASs. Likewise, when the third information indicates information about one data center, the second source EES may further determine the target EES based on information about at least one EES corresponding to the data center. Therefore, the target EES can be flexibly determined based on this implementation.

In a possible implementation, the second source EES may further obtain the information about the target EAS from the target EES, or the second source EES may further determine the target EAS from the EASs managed by the target EES.

In a possible implementation, the third information includes the information about the target EES; and the second source EES sends an EAS discovery request to the target EES; and the second source EES receives the information about the target EAS from the target EES.

In a possible implementation, the third information includes the information about the EASs corresponding to the target EES; and the second source EES determines, based on information about the second source EAS and the information about the EASs corresponding to the target EES, the target EAS from the EASs corresponding to the target EES.

In a possible implementation, the third information includes the information about the data center in which the target EES is located; and the second source EES may further send an EES discovery request to an ECS, where the EES discovery request includes the information about the data center; and the second source EES receives the information about the target EES from the ECS.

In a possible implementation, the second source EES may further receive, from a terminal device, information about the first source EES and/or information indicating that the first source EAS and the second source EAS are to perform application context transfer together.

In a possible implementation, the second source EES may further receive fifth information from the first source EES, where the fifth information may indicate at least one of the following: that the first source EES performs EES discovery and/or EAS discovery; that an application context transfer ACR event is detected; or that application context transfer needs to be performed.

According to a seventh aspect, a communication method is provided. The method may be applied to a scenario in which EASs provide services for a same terminal device. The EASs may be managed by a plurality of different EESs. In the seventh aspect, the method may be implemented by an ECS or a component in the ECS. The component is, for example, at least one of a processor, a transceiver, a processing module, or a transceiver module. For example, an execution body is the ECS. The method includes: the terminal device obtains information about a group of EESs, where the group of EASs includes a first source EES and a second source EES, a first source EAS corresponds to the first source EES, and a second source EAS corresponds to the second source EES; and the terminal device sends information about the second source EES to the first source EES; and/or the terminal device sends information about the first source EES to the second source EES.

In a possible implementation, the terminal device may send the information about the group of EESs to the first source EES.

In a possible implementation, the terminal device may send the information about the group of EESs to the first source EES.

In a possible implementation, the terminal device may further send information about the second source EAS to the first source EES.

In a possible implementation, the terminal device may send information about a group of EASs to the first source EES.

In a possible implementation, the terminal device may send information about the first source EAS to the second source EES.

In a possible implementation, the terminal device may send the information about the group of EASs to the second source EES.

In a possible implementation, the terminal device sends, to the first source EES, information indicating that the first source EAS and the second source EAS are to perform application context transfer together; and/or the terminal device sends, to the second source EES, information indicating that the first source EAS and the second source EAS are to perform application context transfer together.

According to an eighth aspect, a communication method is provided. The method may be applied to a scenario in which EASs provide services for a same terminal device. The EASs may be managed by a plurality of different EESs. In the eighth aspect, the method may be performed by an EES or a component in the EES. The component is, for example, at least one of a processor, a transceiver, a processing module, or a transceiver module. The EES is one of a plurality of EESs configured to manage a group of EASs, the plurality of EESs may be referred to as associated EESs, and the group of EASs may be referred to as associated EASs. For example, an execution body is a first EES. The method includes: the first EES sends a subscription request to a second EES, where the first EES and the second EES are associated EESs. The subscription request may be used to subscribe to at least one of ACR event information, target EES information, or target EAS information in an associated EAS scenario, or the subscription request may be used to subscribe to an associated EES (for example, a target EES) and/or an associated EAS (for example, a target EAS). Correspondingly, the first EES may receive a notification message from the second EES. The notification message may indicate existence of at least one of an ACR event, a target EES discovery event, or a target EAS discovery event. Based on the method, the EESs may subscribe to events from each other, to learn of the ACR event information, the target EES information, or the target EAS information in the associated EAS scenario in time, thereby improving a success rate of application context transfer of the group of EASs.

The ACR event may mean that when an EAS managed by the second EES needs to perform application context transfer, the second EES detects that the EAS is one of associated EASs, and the second EES determines, depending on whether another EAS needs to perform transfer together, whether to notify another associated EES of an ACR event, to trigger the associated EAS and/or EES to perform application context transfer. In this case, the second EES may notify the another associated EES that there is an ACR requirement.

The target EES discovery event may mean that after the first EES subscribes to the foregoing information from the second EES, when the second EES detects an ACR event, and the second EES discovers a target EES for an EAS in the group or discovers a corresponding target EES for an EAS in another associated EES, the second EES may send a target EES discovery result, such as address information of the target EES corresponding to the second EES, to a corresponding associated EES (including but not limited to the first EES). Alternatively, the second EES may send information about all target EESs to the associated EES.

The target EAS discovery event means that after the first EES subscribes to the foregoing information from the second EES, when the second EES detects an ACR event, and the second EES discovers a target EES and/or a target EAS for an EAS in the group or discovers a corresponding target EAS for an EAS in another associated EES, the second EES may send a target EAS discovery result, such as address information of the target EAS corresponding to the associated EAS in the second EES, to a corresponding associated EES (including but not limited to the first EES). Alternatively, the second EES may send information about all target EASs to the associated EES.

According to a ninth aspect, a communication method is provided. The method may be applied to a scenario in which EASs provide services for a same terminal device. The EASs may be managed by a plurality of different EESs. In the ninth aspect, the method may be performed by an EAS or a component in the EAS. The component is, for example, at least one of a processor, a transceiver, a processing module, or a transceiver module. The EAS is one of a group of EASs, a plurality of EESs may be referred to as associated EESs, and the group of EASs may be referred to as associated EASs. For example, an execution body is an EAS managed by a first EES. The method includes: the EAS managed by the first EES sends a subscription request to a second EES, where the first EES and the second EES are associated EESs. The subscription request may be used to subscribe to at least one of ACR event information, target EES information, or target EAS information in an associated EAS scenario, or the subscription request may be used to subscribe to an associated EES (for example, a target EES) and/or an associated EAS (for example, a target EAS). Correspondingly, the EAS managed by the first EES may receive a notification message from the second EES. The notification message may indicate existence of at least one of an ACR event, a target EES discovery event, or a target EAS discovery event. Based on the method, the EAS may subscribe to an event from the EES, to learn of the ACR event information, the target EES information, or the target EAS information in the associated EAS scenario in time, thereby improving a success rate of application context transfer of the group of EASs.

For descriptions of the ACR event, the target EES discovery event, and the target EAS discovery event, refer to the descriptions in the seventh aspect.

According to a tenth aspect, a communication method is provided. The method may be applied to a scenario in which EASs provide services for a same terminal device. The EASs may be managed by a plurality of different EESs. In the tenth aspect, the method may be performed by an EES or a component in the EES. The component is, for example, at least one of a processor, a transceiver, a processing module, or a transceiver module. For example, an execution body is a second EES. The method includes: the second EES receives a subscription request, where a first EES and the second EES are associated EESs. The subscription request may be used to subscribe to at least one of ACR event information, target EES information, or target EAS information in an associated EAS scenario, or the subscription request may be used to subscribe to an associated EES (for example, a target EES) and/or an associated EAS (for example, a target EAS). For descriptions of the ACR event, the target EES discovery event, and the target EAS discovery event, refer to the descriptions in the seventh aspect. Based on the method, the EES may provide the ACR event information, the target EES information, or the target EAS information in the associated EAS scenario for a subscriber (for example, the first EES or an EAS) in time based on the subscription request, thereby improving a success rate of application context transfer of a group of EASs.

According to an eleventh aspect, an embodiment of this application provides a communication apparatus. The apparatus has a function of implementing the source EES in any one of the first aspect or the possible implementations of the first aspect, a function of implementing the source EES in any one of the second aspect or the possible implementations of the second aspect, a function of implementing the target EES in any one of the third aspect or the possible implementations of the third aspect, a function of implementing the ECS in any one of the fourth aspect or the possible implementations of the fourth aspect, a function of implementing the first source EES in any one of the fifth aspect or the possible implementations of the fifth aspect, a function of implementing the second source EES in any one of the sixth aspect or the possible implementations of the sixth aspect, a function of implementing the terminal device in any one of the seventh aspect or the possible implementations of the seventh aspect, a function of implementing the first EES in any one of the eighth aspect or the possible implementations of the eighth aspect, a function of implementing the EAS managed by the first EES in any one of the ninth aspect or the possible implementations of the ninth aspect, or a function of implementing the second EES in any one of the tenth aspect or the possible implementations of the tenth aspect. The communication apparatus may be specifically a terminal device, a component in the terminal device, a source EES, a target EES, an ECS, a component in the source EES, a component in the target EES, or a component in the ECS.

The function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transceiver module. The processing module is configured to support the apparatus in performing the function of the source EES in any one of the first aspect or the possible implementations of the first aspect or any one of the second aspect or the possible implementations of the second aspect; is configured to support the apparatus in performing the function of the target EES in any one of the third aspect or the possible implementations of the third aspect; or is configured to support the apparatus in performing the function of the ECS in any one of the fourth aspect or the possible implementations of the fourth aspect, the function of the first source EES in any one of the fifth aspect or the possible implementations of the fifth aspect, the function of the second source EES in any one of the sixth aspect or the possible implementations of the sixth aspect, the function of the terminal device in any one of the seventh aspect or the possible implementations of the seventh aspect, the function of the first EES in any one of the eighth aspect or the possible implementations of the eighth aspect, the function of the EAS managed by the first EES in any one of the ninth aspect or the possible implementations of the ninth aspect, or the function of the second EES in any one of the tenth aspect or the possible implementations of the tenth aspect. The transceiver module is configured to support communication between the apparatus and another communication device. For example, when the apparatus is a source EES, the transceiver module is configured to receive information from an EEC, a target EES, an ECS, or the like. The communication apparatus may further include a storage module. The storage module is coupled to the processing module, and stores program instructions and data that are necessary for the apparatus. As an example, the processing module may be a processor, the communication module may be a transceiver, and the storage module may be a memory. The memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to enable the apparatus to perform the method in any one of the first aspect or the possible implementations of the first aspect, perform the method in any one of the second aspect or the possible implementations of the second aspect, perform the method in any one of the third aspect or the possible implementations of the third aspect, perform the method in any one of the fourth aspect or the possible implementations of the fourth aspect, perform the method in any one of the fifth aspect or the possible implementations of the fifth aspect, perform the method in any one of the sixth aspect or the possible implementations of the sixth aspect, perform the method in any one of the seventh aspect or the possible implementations of the seventh aspect, perform the method in any one of the eighth aspect or the possible implementations of the eighth aspect, perform the method according to any one of the ninth aspect or the possible implementations of the ninth aspect, or perform the method according to any one of the tenth aspect or the possible implementations of the tenth aspect. Optionally, the apparatus further includes a communication interface, and the processor is coupled to the communication interface. When the apparatus is a source EES, a target EES, or an ECS, the communication interface may be a transceiver or an input/output interface. When the apparatus is a chip included in the source EES, a chip included in the target EES, or a chip included in the ECS, the communication interface may be an input/output interface of the chip. Optionally, the transceiver may be a transceiver circuit, and the input/output interface may be an input/output circuit.

According to a twelfth aspect, an embodiment of this application provides a communication system. The communication system may include a communication apparatus configured to implement the method in any one or more of the first aspect to the fourth aspect or the possible implementations thereof. Alternatively, the communication system may include one or more of an EES, a source EES, a target EES, an ECS, a terminal device (including an AC and/or an EEC), or an EAS. The source EES may be configured to implement the method according to any one of the first aspect, the second aspect, the fifth aspect, the sixth aspect, or the possible implementations thereof. The target EES may be configured to implement the method according to any one of the third aspect or the possible implementations thereof. The ECS may be configured to implement the method according to any one of the fourth aspect or the possible implementations thereof. The terminal device (including the AC and/or the EEC) may be configured to implement the method according to any one of the seventh aspect or the possible implementations thereof. The EES may be configured to implement the method according to any one of the eighth aspect or the tenth aspect or the possible implementations thereof. The EAS may be configured to implement the method according to any one of the ninth aspect or the possible implementations thereof.

According to a thirteenth aspect, an embodiment of this application provides a computer-readable storage medium. The computer-readable storage medium stores program instructions. When the program instructions are run on a computer, the computer is enabled to perform the method in any one of the first aspect to the tenth aspect or the possible implementations thereof in embodiments of this application. For example, the computer-readable storage medium may be any usable medium accessible by a computer. By way of example but not limitation, the computer-readable medium may include a non-transitory computer-readable medium, a random access memory (random-access memory, RAM), a read-only memory (read-only memory, ROM), an electrically erasable programmable read-only memory (electrically erasable programmable read-only memory, EEPROM), a CD-ROM or another optical disk storage, a magnetic disk storage medium or another magnetic storage device, or any other medium that can be configured to carry or store desired program code in a form of instructions or a data structure and that can be accessed by a computer.

According to a fourteenth aspect, an embodiment of this application provides a computer program product, including computer program code or instructions. When the computer program code is or the instructions are run on a computer, the method in any one of the first aspect to the tenth aspect or the possible implementations is performed.

According to a fifteenth aspect, this application further provides a chip, including a processor. The processor is coupled to a memory, and is configured to read and execute program instructions stored in the memory, to enable the chip to implement the method according to any one of the first aspect to the tenth aspect or the possible implementations thereof.

For each of the eleventh aspect to the fifteenth aspect and technical effects that can be achieved by each aspect, refer to the descriptions of the beneficial effects of the method in any one of the first aspect to the tenth aspect or the possible implementations thereof. Details are not described herein again.

### BRIEF DESCRIPTION OF DRAWINGS

FIG. 1 is a diagram of an architecture of a wireless communication system according to this application;
FIG. 2 is a diagram of an architecture of another wireless communication system according to this application;
FIG. 3A is a diagram of an architecture of another wireless communication system according to this application;
FIG. 3B is a diagram of an architecture of another wireless communication system according to this application;
FIG. 4 is a schematic flowchart of a communication method according to this application;
FIG. 5 is a schematic flowchart of another communication method according to this application;
FIG. 6 is a schematic flowchart of another communication method according to this application;
FIG. 7 is a schematic flowchart of another communication method according to this application;
FIG. 8 is a schematic flowchart of another communication method according to this application;
FIG. 9A is a diagram of a structure of another communication apparatus according to this application;
FIG. 9B is a diagram of a structure of another communication apparatus according to this application;
FIG. 9C is a diagram of a structure of another communication apparatus according to this application;
FIG. 9D is a diagram of a structure of another communication apparatus according to this application;
FIG. 9E is a diagram of a structure of another communication apparatus according to this application;
FIG. 9F is a diagram of a structure of another communication apparatus according to this application;
FIG. 9G is a diagram of a structure of another communication apparatus according to this application;
FIG. 9H is a diagram of a structure of another communication apparatus according to this application;
FIG. 9I is a diagram of a structure of another communication apparatus according to this application;
FIG. 9J is a diagram of a structure of another communication apparatus according to this application;
FIG. 10 is a diagram of a structure of a communication apparatus according to this application; and
FIG. 11 is a diagram of a structure of another communication apparatus according to this application.

### DESCRIPTION OF EMBODIMENTS

The following describes the technical solutions in embodiments of this application with reference to the accompanying drawings in embodiments of this application. In the descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of network architectures and emergence of new service scenarios, the technical solutions provided in embodiments of this application are also applicable to similar technical problems.

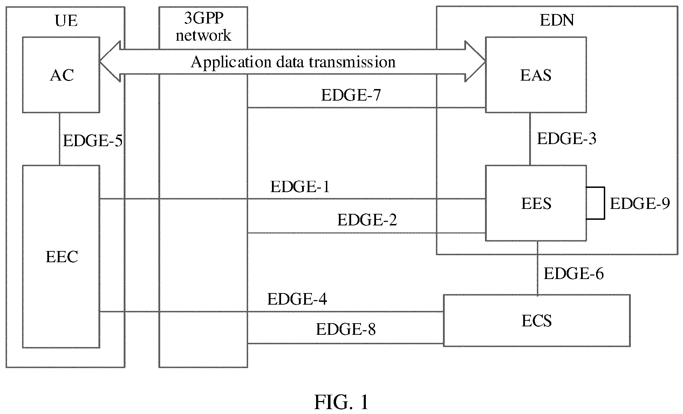

With reference to FIG. 1, the following architecture model is defined in research on multi-access edge computing (multi-access edge computing, MEC) of SA6 of the 3rd Generation Partnership Project (3rd generation partnership project, 3GPP).

Edge data network (edge data network, EDN): In an understanding, the EDN corresponds to only one data network, is a special local data network (local data network, DN), includes an edge enabler function, may be identified by using a data network access identifier (DN access identifier, DNAI) and a data network name (data network name, DNN), and is a network logical concept. In another understanding, the EDN is an equivalent concept of a central cloud, may be understood as a local data center (a geographical location concept), may be identified by using a DNAI, and may include a plurality of local data networks (local DNs).

For example, for an application program X in a mobile phone, a center cloud of the application program X may be set in a city A. To make it convenient for users in a city B and a city C to use the application program, local EDN networks of the application program X may be separately set in the city B and the city C. Subsequently, a user in the city B may obtain an application service of the application program X by using a local EDN network that is of the application program X and that is set in the city B, and a user in the city C may obtain the application service of the application program X by using a local EDN network that is of the application program X and that is set in the city C. Therefore, EDN networks can provide an application service for users nearby, to provide higher-quality network experience for the users.

Application instance or edge application: An application deployed in an EDN is referred to as an application instance. The application instance or the edge application is specifically an instance (instance) deployed and run in the EDN for a server application program, for example, social media software, augmented reality (augmented reality, AR), or virtual reality (virtual reality, VR). One or more EASs may be deployed for one application in one or more EDNs. EASs deployed and run in different EDNs may be considered as different EASs of one application. The EASs may share one domain name, or may use one anycast IP address, different IP addresses, or the like. This is not limited. The EAS may also be referred to as an MEC application server, an EAS function, or the like.

AC: The AC is an equivalent entity of an EAS on a terminal device (UE) side. The AC is used by an application user to obtain an application service from the EAS, to implement data transmission. The AC is a client program of an application on the terminal side. The AC may be connected to an EAS on a central cloud to obtain an application service, or may be connected to EASs deployed and run in one or more EDNs to obtain a service application.

EES: The EES may provide an enabler capability for an instance deployed in an EDN, to better support deployment of an application in MEC. For example, the EES may support registration of an edge application, support authentication and authorization of a terminal device, and provide IP address information of an application instance for the terminal device. Further, the EES may obtain identity (identity, ID) and IP address information of the application instance, and send the identity and IP address information of the application instance to an ECS. The EES is deployed in the EDN. Usually, an EAS is registered with an EES, or information about an EAS is configured in an EES by using a management system. The EES is referred to as an EES associated with the EAS. For example, the EES may control, manage, register, or configure the EAS associated with the EES. Optionally, the EES may also be referred to as an EES platform or an MEC platform.

EEC: The EEC is an equivalent entity of an EES on a terminal device side. The EEC is configured to: register information about the EEC and information about an application client with the EES, perform security authentication and authorization, obtain an IP address of an EAS from the EES, and provide an edge computing enabler capability, for example, an EAS discovery service, for the application client, to return the IP address of the EAS to the application client.

ECS: The ECS is responsible for configuring an EDN, for example, providing information about an EES for a terminal device. The ECS may further provide information about an application instance for the terminal device, and interact with a DNS of an application to obtain the information about the application instance. Further, the ECS may obtain information about the application instance, an IP address, and the like from another functional entity and store the information.

For example, in this application, an EEC may obtain an ECS address in any one of the following five manners.
(1) The ECS address may be preconfigured in the EEC. For example, the ECS address is stored in an EEC profile (profile).
(2) An AC may configure the ECS address for the EEC.
(3) A user specifies an ECS in a terminal device, to be specific, the user operates the terminal device to select an ECS from an ECS list, and the terminal device may indicate the ECS to the EEC.
(4) If UE is capable of delivering ECS profile information to the EEC in the UE, a mobile network operator (mobile network operator, MNO) provides the ECS address for the UE over a 5G core (5G core, 5GC) network, and the UE provides the ECS address for the EEC.
(5) The ECS address is derived from a home public land mobile network (home public land mobile network, HPLMN) identifier in a non-roaming scenario or from a visited public land mobile network (visited public land mobile network, VPLMN) identifier in a roaming scenario.

In this application, an application user signs a service agreement with an application provider, so that the application provider provides a service for the application user. The application user logs in to an application client in a terminal device, and performs communication through a connection between the application client and an EAS, to obtain the service provided by the application provider. An enabler client is a middleware layer, and is usually located in an operating system of the terminal device or located between an application client and the operating system. The application client may obtain an edge enabler service from the enabler client through an application programming interface (application program interface, API).

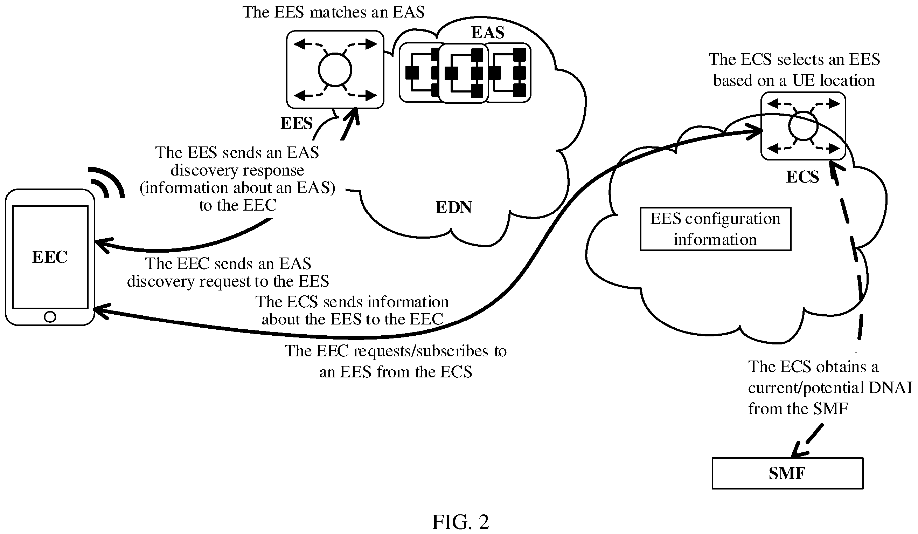

An EES and EAS discovery procedure is described herein based on an architecture shown in FIG. 2. The procedure may be used to implement EES discovery and application instance discovery. An EES may be considered as a local domain name system (domain name system, DNS) server (local DNS server), and a terminal device may obtain address information of an application instance from the EES. A two-level discovery mechanism is used in the EES platform and EAS discovery procedure. To be specific, the terminal device first discovers the EES platform, and then discovers an EAS from the EES platform, to obtain a service of the application instance through the EAS.

A process in which an EEC of the terminal device discovers the EES platform from an ECS includes the following steps.
(1) The EEC requests/subscribes to an EES from the ECS, and the EEC discovers an interested EES from the ECS.
(2) The ECS has detailed information about the application instance. The ECS obtains, based on a UE location, a DNAI corresponding to the location, and selects one or more appropriate EESs for each application based on the DNAI, an FQDN, and EES profile. The platform is selected with reference to the UE location and other optional filter (filter) information or parameters.
(3) Optionally, an EDN ECS platform may obtain, from a session management function (session management function, SMF) network element, a current/potential DNAI corresponding to the UE location.
(4) The ECS returns information about one or more EESs to the EEC.

A process in which the EEC discovers the EAS application instance from the EES may include the following steps.
(1) The EEC sends an EAS discovery request to the EES, where the EAS discovery request may include information about a to-be-accessed application, for example, include an application identifier and/or a UE identifier.
(2) The EES matches an EAS registered with the EES. The EES matches, based on information about locally registered and/or online EASs and information provided by a user, an EAS that meets a user request. If a plurality of EASs meet the user request, the EES may return addresses of the plurality of EASs.
(3) The EES sends an EAS discovery response to the EEC, where the EAS discovery response includes information about the EAS. Further, the EEC may provide the information about the EAS for an application client, so that the client is connected to the edge application instance to obtain the service.

In addition, an application context transfer (or application context relocation) process based on the architecture shown in FIG. 1 or FIG. 2 may be mainly divided into four phases.
(1) Detection of application context transfer: It is determined that context transfer may need to be performed. In this case, mostly, a detection entity (detection entity) detects a specific event. The specific event may be referred to as an application client transfer event, or may be referred to as an application context transfer event or an application context relocation (application context relocation, ACR) event. For example, the specific event includes a change in a UE location, or an update on a UE user plane path. The detection entity may include an AC, an EEC, an EES, or an EAS. This application makes no specific requirement.
(2) Decision-making of application context transfer: A decision-making entity (decision-making entity) determines that context transfer needs to be performed. The decision-making entity may include an AC, an EEC, an EES, or an EAS. This application makes no specific requirement.
(3) Execution of application context transfer: An execution entity (execution entity), for example, an EAS or an EES, performs application context transfer, and mainly transmits an application context from a source EAS to a target EAS. The execution entity may further notify a terminal device of information about the target EAS, and notify a network of context transfer completion and the related information of the target EAS (for example, an address of the target EAS or N6 routing information corresponding to the target EAS).
(4) Cleanup work after application context transfer: The cleanup work relates to a plurality of entities in an AC, an EEC, an EES, or an EAS. For example, an application client initiates a new socket (socket) connection to the target EAS.

In this application, an EAS that provides a service for the terminal device before application context transfer may be referred to as a source EAS, and an EAS that can be configured to provide a service for the terminal device after the application context transfer may be referred to as a target EAS. In addition, an EES in which the source EAS is located may be referred to as a source EES, and an EES in which the target EAS is located may be referred to as a target EES.

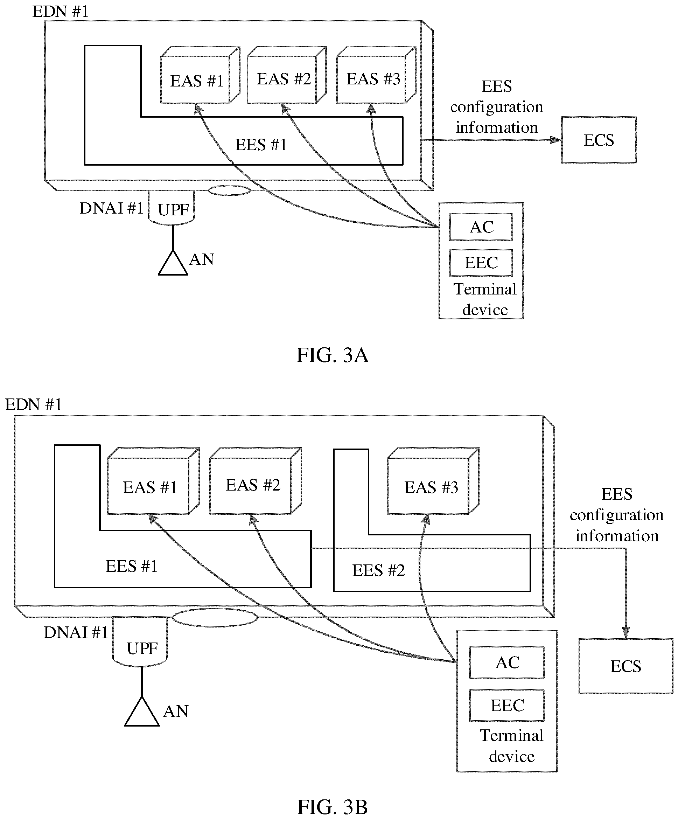

In addition, in a current edge computing technology, a plurality of EASs need to provide services for one AC. The plurality of EASs may be registered with one or more EESs. For example, for an application of an online game type, a plurality of EASs such as a server EAS #1 of a game status and user information management type, a chat server EAS #2 for communication between players, and a server EAS #3 for image capture and rendering need to provide services for the AC simultaneously. It should be understood that in FIG. 3A, the EAS #1, the EAS #2, and the EAS #3 are managed by an EES #1, the EES #1 is located in an EDN #1, and a DNAI of the EDN #1 is a DNAI #1. Alternatively, it may be understood that, as shown in FIG. 3B, the EAS #1 and the EAS #2 are managed by an EES #1, the EAS #3 is managed by an EES #2, the EES #1 and the EES #2 are located in an EDN #1, and a DNAI of the EDN #1 is a DNAI #1.

Optionally, if EASs that provide services for a same AC are registered with a plurality of EESs, the plurality of EESs may be located in a same data center. It should be understood that the data center in this application may be distinguished or represented by using an EDN identifier and/or a DNAI identifier. For example, as shown in FIG. 3B, the EES #1 and the EES #2 may have a same EDN (EDN #1) identifier and a same DNAI (DNAI #1) identifier.

In addition, as shown in FIG. 3A and FIG. 3B, a user plane function (user plane function, UPF) network element may transmit data to a terminal device through a (radio) access network ((radio) access network, (R)AN) device (for example, in FIG. 3, an access network device is an AN), to implement communication between the terminal device and the EAS.

If all the EASs are separately discovered, controlled, and relocated, overall service quality is affected. For example, during application context transfer, when the chat server EAS #2 fails in transfer, service interruption or quality of service deterioration may be caused. In addition, in this case, the server EAS #1 for game status and user information management and the server EAS #3 for image capture and rendering do not need to perform transfer.

Therefore, currently, when a plurality of EASs need to provide services for a same terminal device, if the plurality of EASs separately perform application context transfer, a failure in application context transfer of one of the EASs may cause service interruption of the terminal device or quality of service deterioration. Therefore, a problem of a low transfer success rate exists.

To improve an application transfer success rate, embodiments of this application provide a communication method.

The following describes, in detail with reference to the accompanying drawings, the communication method provided in embodiments of this application.

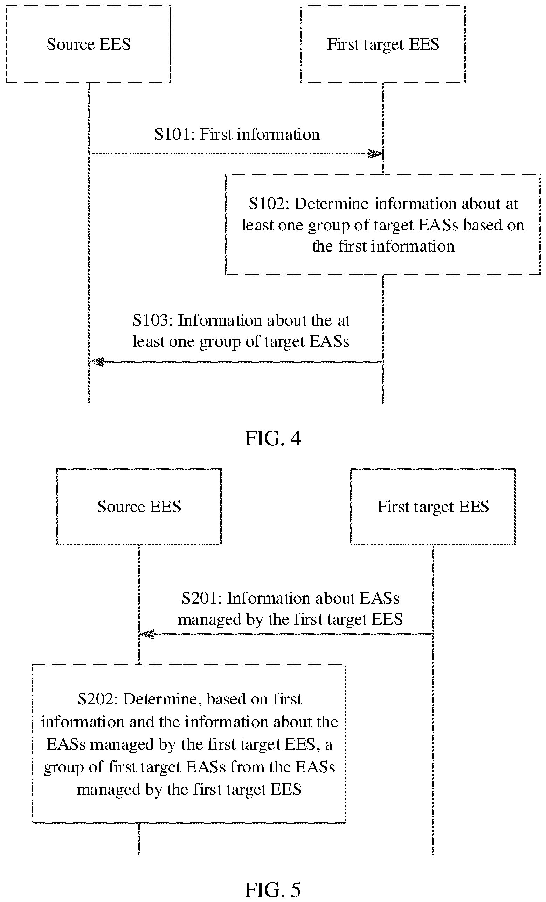

As shown in FIG. 4, a communication method provided in an embodiment of this application may be performed by a source EES and a target EES (optionally, in this application, the target EES is a first target EES; or the target EES includes a second target EES, the second target EES includes at least one target EES, and the at least one target EES may include a first target EES), and may include the following steps.

S101: The source EES sends first information to the first target EES.

Correspondingly, the first target EES receives the first information from the source EES.

The first information includes information about a group of EASs, and the group of EASs includes a plurality of associated EASs. The association means that the plurality of EASs serve a first application, or serve a same terminal device or AC. Optionally, the first information may further include information about a plurality of associated EESs, for example, identifiers of the associated EESs and/or information about EASs managed by the associated EESs. EASs managed by any one of the plurality of associated EESs include some EASs in the group of EASs. Optionally, the first information may further include association relationships between the group of associated EASs and the associated EESs.

It should be understood that, in this application, the associated EASs are a plurality of EASs that can be configured to serve a same application, or the associated EASs are a plurality of EASs that serve a same terminal device or AC.

Optionally, the plurality of associated EASs include EASs of at least two types, and different EASs may be of different types. In this application, a type of an EAS may be related to a function of an application instance of the EAS. For example, the first application is an online game. Types of the plurality of EASs corresponding to the first application may separately include an EAS that is of a game engine type and that is responsible for game status and user information management, an EAS of a chat function type, a server of an image capture or rendering type, and the like. Therefore, it may also be understood that the first application includes a plurality of application instances. For example, the online game application in the foregoing example may include an application instance responsible for game status and user information management, an application instance of a chat function type, and an application instance of an image capture or rendering type.

It may be understood that, if the plurality of associated EASs currently provide services for the first application, the plurality of associated EASs may be referred to as a plurality of associated source EASs. Therefore, optionally, the group of EASs may include a group of source EASs, the group of source EASs may include a plurality of associated source EASs, and the plurality of associated source EASs may currently serve the first application, or the plurality of associated source EASs currently serve a same terminal device or AC. That the plurality of associated source EASs currently serve the first application may be understood as that the plurality of associated source EASs serve the first application when S101 is performed, or the plurality of associated source EASs serve the first application before application context transfer is performed. The first application may be an application program, for example, an online game, that is currently run on a terminal device and for which the plurality of EASs provide services.

In this application, the first information may include identifiers (for example, EAS IDs) and/or type information of the plurality of associated EASs.

As a possible implementation, the first information may include an associated EAS list (linkage EAS list). The associated EAS list includes the identifiers and/or the type information of the plurality of associated EASs, and optionally, may further include an identifier of the first application. In this application, the associated EAS list may indicate an association relationship between the plurality of EASs. For example, in this application, an AC, an EEC, EESs (including a source EES and a target EES), an ECS, and the like learn, through protocol definition, predefinition, or preconfiguration, that EASs located in an associated EAS list are a group of associated EASs. As shown in Table 1, when a list name is an associated EAS list, it indicates that EASs in the EAS list are associated EASs.

**Table 1**

| | |
|---|---|
| Name | Associated EAS list |
| EAS identifiers | EAS ID #1, EAS ID #2, and EAS ID #3 |
| EAS type information | Type #1, type #2, and type #3 |
| Information about a first application | Information indicating the first application, for example, an application identifier |

As shown in Table 1, Table 1 may include the EAS identifiers and/or the EAS type information. Optionally, Table 1 may further include the information about the first application, for example, type information of EASs included in the first application and/or the identifier of the first application, to indicate the first application.

As another possible implementation, the first information may include information indicating that the plurality of EASs are associated, and include the identifiers and/or the type information of the plurality of associated EASs. Optionally, the information indicating that the plurality of EASs are associated and the identifiers and/or the type information of the plurality of associated EASs may be included in an EAS list.

The information indicating that the plurality of EASs are associated may indicate that the plurality of EASs serve a same application or AC. For example, the information indicating that the plurality of EASs are associated may indicate, by using a value of a specific bit, whether the plurality of EASs serve a same application. When the value of the bit is 0, it indicates that the plurality of EASs serve a same application; and when the value of the bit is 1, it indicates that the plurality of EASs serve a same application. Alternatively, when the value of the bit is 1, it indicates that the plurality of EASs serve a same application; and when the value of the bit is 0, it indicates that the plurality of EASs serve a same application.

In addition, the information indicating that the plurality of EASs are associated may further indicate that a group of EASs is needed to provide services for the terminal device. Alternatively, the information indicating that the plurality of EASs are associated may indicate that target EASs need to be selected for a group of EASs, and therefore may indicate that a group of target EASs needs to be selected. Alternatively, the information indicating that the plurality of EASs are associated may indicate that one or more of the plurality of associated EASs are to perform application context transfer simultaneously or together, and may include, for example, some EAS identifiers and/or type information, to indicate that EASs having the EAS identifiers and/or type information need to perform application context transfer simultaneously or together.

Further optionally, the information indicating that the plurality of EASs are associated may include information indicating that the plurality of associated EASs serve the first application. For example, the information is an identifier of the first application.

In addition, optionally, the EAS list may further include information about the first application.

As shown in Table 2, when the EAS list includes the information indicating that the plurality of associated EASs serve the first application, it indicates that the EASs in the list are associated EASs.

**Table 2**

| | |
|---|---|
| Name | EAS list |
| EAS identifiers | EAS ID #1, EAS ID #2, and EAS ID #3 |
| EAS type information | Type #1, type #2, and type #2 |
| Information indicating that a plurality of EASs are associated | The information is, for example, information about a first application, used by EASs in the list to serve the first application; or may include a specific identifier or indication information, indicating that a group of EASs is needed to provide services for a terminal device, indicating that target EASs need to be selected for a group of EASs, or indicating that EASs in the EAS list need to perform application context transfer simultaneously, for example, indicating that an EAS having the EAS ID #1 and an EAS having the EAS ID #2 are to perform application context transfer simultaneously. |

As shown in Table 2, Table 2 may include the information indicating that the plurality of associated EASs serve the first application, and include the EAS identifiers and/or the EAS type information.

It may be understood that the source EES may obtain the first information from the terminal device (for example, an EEC) or an EAS (including but not limited to a source EAS).

The first information may be preconfigured in the terminal device. For example, a list of EASs associated with a same application is configured in AC profile information (AC profile) or EEC profile information (EEC profile) of the terminal device. The EEC may send the first information to the source EES. In this application, there is no limitation that the EAS list configured in the terminal device can be associated only with the first application, and a list of EASs associated with another application may be further configured in the terminal device. Optionally, the EES may obtain the AC profile information to obtain the EAS list or other information.

Optionally, the EAS list stored in the terminal device may include the associated EAS list, or include the information indicating that the plurality of associated EASs serve the first application. In other words, the first information in the terminal device may be stored in the form shown in Table 1 or Table 2. This is not specifically limited.

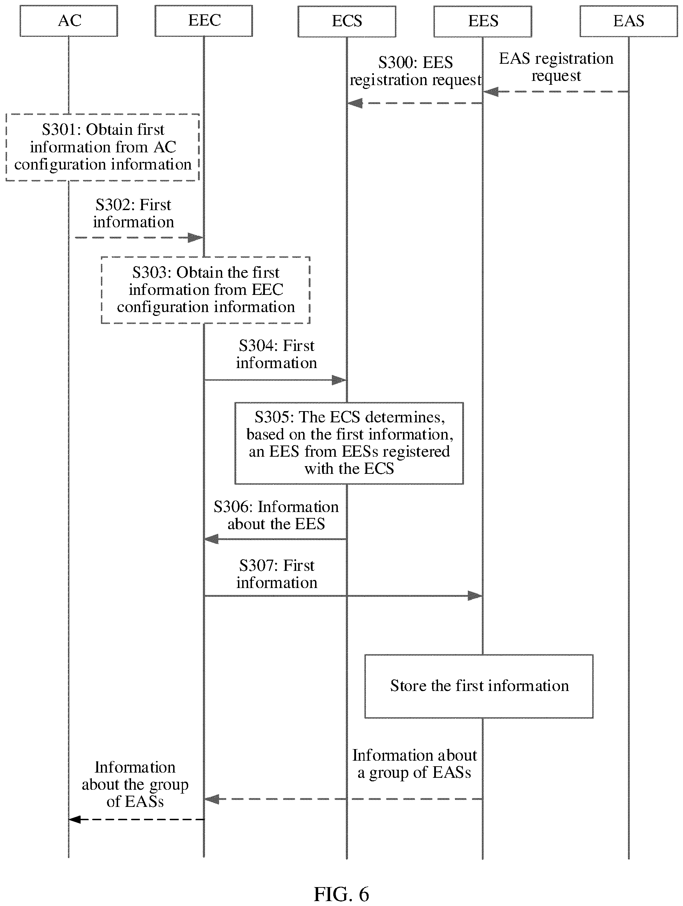

In a possible implementation, the terminal device may send the first information to the source EES in an EES discovery process. Optionally, the first information may be further used by the source EES to select an EAS (including but not limited to a source EAS). The following describes this implementation with reference to a procedure shown in FIG. 6, and details are not described herein.

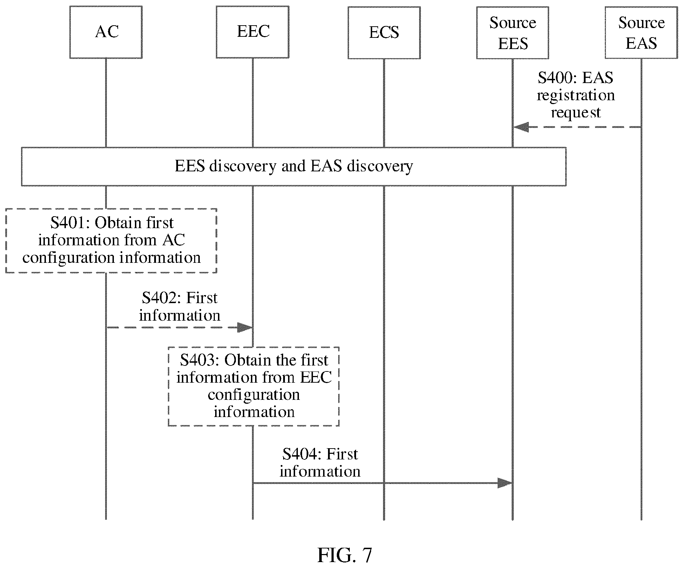

In another possible implementation, the terminal device may alternatively send the first information to the source EES after accessing an EAS. The following describes this implementation with reference to a procedure shown in FIG. 7, and details are not described herein.

In addition, the EAS (including but not limited to the source EAS) may alternatively send the first information to the source EES. For example, after the terminal device accesses the EAS, the EAS may send the first information to the source EES. For another example, in an EAS registration process, the EAS may send the first information to the source EES. For example, the first information is stored in EAS profile information (EAS profile), and the EAS carries the EAS profile information in an EAS registration request (EAS registration request), and sends the EAS registration request to the source EES, so that the first information can be sent to the source EES. Alternatively, after detecting that an ACR event is triggered, the EAS may send the first information to the source EES. As described in this application, the ACR event includes, for example, a change in a UE location, or an update on a UE user plane path.

Optionally, an EAS list stored in the EAS may include the associated EAS list, or include the information indicating that the plurality of associated EASs serve the first application. In other words, the first information in the EAS may be stored in the form shown in Table 1 or Table 2. This is not specifically limited.

As an example manner in which the EAS obtains the first information, a list of EASs associated with a same application may be configured in the EAS through preconfiguration or the like. In this application, there is no limitation that the EAS list configured in the EAS can be associated only with the first application, and a list of EASs associated with another application may be further configured in the EAS. When providing a service for the first application of the UE, the EAS may obtain, from the profile based on the information about the first application, information about the plurality of associated EASs that provide services for the first application, namely, the first information.

As another example manner in which the EAS obtains the first information, the EAS may obtain the first information from the terminal device. For example, after the terminal device accesses the EAS, the terminal device sends the first information to the EAS.

Optionally, the first information in S101 may be carried in an EAS discovery request (EAS discovery request) sent by the source EES to the first target EES. For example, before S101, the terminal device, the source EAS, the source EES, or the like may initiate application context transfer, so that in S101, the source EES sends the EAS discovery request to the first target EES, to request the first target EES to provide information about a group of target EASs. The information about the group of target EASs may be determined based on the first information. For details of the target EASs, refer to the following descriptions in S102. The details are not described herein.

Further optionally, application context transfer may be triggered due to movement of the terminal device. For example, when the terminal device moves out of an EDN of the source EES, the terminal device, the source EAS, the source EES, or the like may initiate application context transfer, and the source EES may obtain information about the first target EES through the ECS, to send, to the first target EES based on the information about the first target EES, the EAS discovery request including the first information.

Optionally, the information about the first target EES may be determined based on the first information, to avoid selecting, as the first target EES, an EES that does not support the group of EASs in performing application context transfer, thereby further improving a success rate of application context transfer. For the EES that does not support the group of EASs in performing application context transfer, for example, EASs in the EES do not include EASs that have same identifiers and/or type information as the group of EASs indicated by the first information. In this case, the EASs managed by the EES cannot serve the first application.

As an implementation of obtaining the information about the first target EES, the source EES may send the first information to the ECS in an EES discovery process, and the ECS determines at least one target EES based on the first information, and sends information about the target EES to the source EES. Optionally, the target EES is the first target EES, or the target EES includes the first target EES and at least one second target EES. Therefore, it may also be understood that the at least one target EES and/or the first target EES are/is determined based on the first information. The ECS may determine the at least one target EES from at least one EES based on the first information and information about EASs managed by the at least one EES, or the ECS may determine the at least one target EES from at least one EES based on the first information, information about the at least one EES, and information about EASs managed by the at least one EES. The information about the at least one EES may include an identifier, an address, or information about a data center of the at least one EES. The information about the data center is, for example, an EDN identifier or a DNAI identifier. In this application, EASs managed by an EES may be replaced with EASs corresponding to the EES, and the EASs corresponding to the EES may include the EASs managed by the EES, EASs registered with the EES, EASs configured in EES profile information, or the like. It may be understood that descriptions such as "EASs corresponding to the EES", "EASs managed by the EES", "EASs configured in EES profile information", and "EASs registered with the EES" in this application may be replaced with each other.

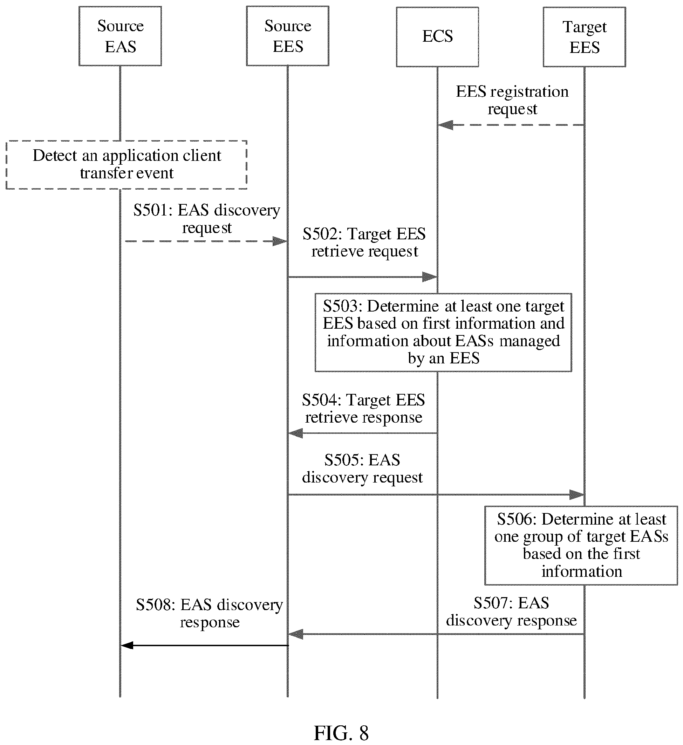

Optionally, in this application, the at least one EES may be an EES corresponding to the ECS. For example, the at least one EES includes an EES registered with the ECS, an EES managed by the ECS, or an EES that is online in the ECS. It may be understood that descriptions such as "an EES corresponding to the ECS", "an EES managed by the ECS", "an EES registered with the ECS", and "an EES that is online in the ECS" in this application may be replaced with each other. Further optionally, the information about the EASs managed by the at least one EES may be sent to the ECS in a process in which the EES is registered with the ECS. The following describes a procedure in which the source EES obtains the at least one target EES in this implementation in FIG. 8, and details are not described herein.

It should be understood that in this application, the first target EES may be one EES. EASs managed by the EES include a group of EASs, and the group of EASs is indicated by the first information; or information about the EASs managed by the EES includes the information about the group of EASs in the first information. Therefore, when the ECS determines that EASs managed by an EES include the group of EASs, the ECS may determine the EES as a target EES.

The first target EES may alternatively include a plurality of EESs. EASs managed by any EES may include the group of EASs, or EASs managed by any EES include a part of the group of EASs. Therefore, when the ECS determines that EASs managed by each of a plurality of EESs include some EASs in the group of EASs, and a set of EASs managed by the plurality of EESs includes the group of EASs, the ECS may determine the plurality of EESs as target EESs. In an optional example, when the ECS determines that the plurality of EESs have same data center information, the EASs managed by each of the plurality of EESs include the some EASs in the group of EASs, and the set of the EASs managed by the plurality of EESs includes the group of EASs, the ECS may determine the plurality of EESs as target EESs. Optionally, when the ECS determines that EASs managed by each of the at least one EES do not include all EASs in the group of EASs, the ECS may determine a plurality of EESs from the EAS as first target EESs.

If the first target EES includes a plurality of EESs, and EASs managed by any one of the plurality of EESs include only a part of the group of EASs, in S101, the source EES may separately send the first information to the plurality of EESs. Optionally, the plurality of EESs are located in a same data center. For example, the plurality of EESs have a same EDN identifier and/or a same DNAI. For example, as shown in FIG. 3B, the first target EES may include an EES #1 and an EES #2, and the source EES may separately send the first information to the EES #1 and the EES #2. Optionally, the EES #1 and the EES #2 are located in a same data center. For example, an EDN identifier of the EES #1 is the same as an EDN identifier of the EES #2; and/or a DNAI identifier of the EES #1 is the same as a DNAI identifier of the EES #2.

It may be understood that when the at least one target EES includes one EES, the EES is the first target EES.

When the at least one target EES includes a plurality of EESs, as an optional manner, the at least one target EES may include the first target EES and at least one second target EES. In this case, the source EES may determine the first target EES from the at least one target EES based on a service key performance indicator (key performance indicator, KPI), a load, and/or another indicator of the at least one target EES. Optionally, EASs managed by any target EES include at least one group of associated EASs serving the first application. For example, EASs managed by any target EES include EASs having same identifiers and/or type information as the group of EASs in the first information. In this application, information about EASs managed by an EES may include information about EASs registered with the EES, information about EESs that is configured in EES profile, or the like. This application makes no specific requirement. This is specifically described in the following S102 with reference to EASs managed by the first target EES.

In addition, as another optional manner, when the at least one target EES includes a plurality of EESs, the source EES may alternatively consider by default that the first target EES is a plurality of first target EESs, and EASs managed by any one of the plurality of EESs include a part of the group of EASs. Alternatively, when receiving second information from the ECS, the source EES determines that the first target EES is a plurality of first target EESs, and EASs managed by any one of the plurality of EESs include a part of the group of EASs. The second information may indicate the source EES to send EAS discovery requests to the plurality of EESs, the second information may indicate that the target EES is a plurality of target EESs, the second information may indicate the source EES to obtain the information about the EASs from the plurality of EESs, or the second information may indicate that the plurality of EESs are associated. In addition, optionally, when the at least one target EES includes a plurality of second target EESs, to further improve a success rate of application context transfer, the source EES may send EAS discovery requests to the plurality of second target EESs, to request information about target EASs from at least one second target EES. The EAS discovery requests may include the first information.

As another implementation of obtaining the information about the first target EES, the source EES may receive, from the ECS, information about EASs managed by at least one EES, and the source EES determines the first target EES from the at least one EES based on the first information and the information about the EASs managed by the at least one EES. Optionally, the source EES may receive, from the ECS, information about the at least one EES and the information about the EASs managed by the at least one EES, and the source EES determines the first target EES from the at least one EES based on the first information, the information about the at least one EES, and the information about the EASs managed by the at least one EES. The at least one EES may be an EES registered with the ECS, an EES managed by the ECS, or an EES that is online in the ECS.

Optionally, the information about the at least one EES may include an identifier, an address, or information about a data center of the at least one EES. The information about the data center is, for example, an EDN identifier or a DNAI identifier.

Similar to the case in which the source EES obtains the information about the first target EES from the ECS, when the source EES determines the first target EES from the at least one EES based on the first information, the information about the at least one EES, and the information about the EASs managed by the at least one EES, the first target EES may be one EES. EASs managed by the EES include a group of EASs, and the group of EASs is indicated by the first information; or information about the EASs managed by the EES includes the information about the group of EASs in the first information. Therefore, when determining, based on the first information and the information about the EASs managed by the at least one EES, that EASs managed by an EES include the group of EASs, the source EES may determine the EES as a target EES. Information about the EES is information about the target EES.

The first target EES may alternatively include a plurality of EESs. EASs managed by any EES may include the group of EASs, or EASs managed by any EES include a part of the group of EASs. Therefore, when the source EES determines that EASs managed by each of a plurality of EESs include some EASs in the group of EASs, and a set of EASs managed by the plurality of EESs includes the group of EASs, the source EES may determine the plurality of EESs as target EESs. In an optional example, when the source EES determines that the plurality of EESs have same data center information, the EASs managed by each of the plurality of EESs include the some EASs in the group of EASs, and the set of the EASs managed by the plurality of EESs includes the group of EASs, the source EES may determine the plurality of EESs as target EESs.

For example, the source EES receives, from the ECS, information about EASs managed by a plurality of EESs; and when EASs managed by a target EES include the group of EASs, the source EES uses the target EES as the first target EES, in other words, the source EES may determine one target EES from the at least one EES. For another example, when EASs managed by each of a plurality of target EESs include some EASs in the group of EASs, the source EES may determine the plurality of target EESs as first target EESs, in other words, the source EES may determine a plurality of target EESs from the at least one EES (or a plurality of EESs). Optionally, the plurality of target EESs are located in a same data center. Optionally, when no managed EASs include the group of EASs, the source EES determines the plurality of target EESs as first target EESs.

Optionally, the source EES may further receive the information about the data center of the at least one EES from the ECS. For example, the ECS sends the identifier and the information about the data center of the at least one EES to the source EES.

Optionally, when the source EES determines that EASs managed by each of the at least one EES do not include all EASs in the group of EASs, the source EES may determine a plurality of EESs from the EAS as first target EESs.

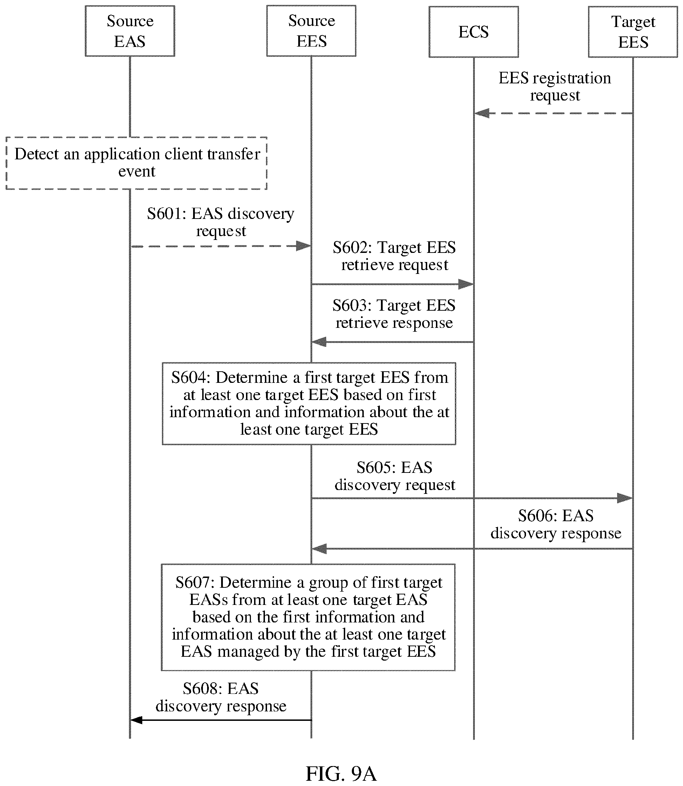

The following describes, with reference to FIG. 9A, a procedure in which the source EES obtains the information about the first target EES in this implementation, and details are not described herein.

S102: The first target EES determines information about at least one group of target EASs based on the first information.

Optionally, the at least one group of target EASs is at least one group of second target EASs, and the at least one group of second target EASs includes one group of first target EASs. Alternatively, the at least one group of target EASs is one group of target EASs, and the group of target EASs is one group of first target EASs. Therefore, it may also be understood that the at least one group of target EASs or the group of first target EASs is determined based on the first information. In this application, the group of first target EASs may include a plurality of associated target EASs, and the plurality of associated target EASs are configured to serve the first application after application context transfer.

Specifically, the first target EES may determine, based on the first information and information about EASs managed by the first target EES, the information about the at least one group of target EASs from the information about the EASs managed by the first target EES. Optionally, the information about the at least one group of target EASs is the same as the information about the group of EASs in the first information.

The information about the EASs managed by the first target EES may include identifiers of the EASs managed by the first target EAS and/or type information of the EASs.

In an example of this application, the EASs managed by the EES may include EASs registered with the EES, and the EES may obtain, in an EAS registration process, the information about the EASs managed by the EES. For example, the EASs may send the EAS identifiers and/or the EAS type information to the EES in a process of registration with the first target EES.

In another example, the information about the EASs managed by the EES may be configured in the EES. For example, the information about the EASs managed by the first target EES may include the EAS identifiers and/or the EAS type information stored in EES profile information (for example, EES profile), and the information about the EASs may be configured by the EES based on EAS registration information and the EES profile information, or may be configured in the EES by using an operation, administration and maintenance (operations and maintenance, OAM) system. A specific manner is not limited.

It should be understood that the information about the EASs managed by the first target EES may be stored by using the associated EAS list shown in Table 1, may be stored by using the EAS list shown in Table 2, or may be stored by using an existing EAS list, for example, the EAS list includes the EAS identifiers and/or type information but does not include the information indicating that the plurality of associated EASs serve the first application. This application makes no specific requirement.

In a possible implementation of S102, for example, the at least one group of target EASs includes at least one group of second target EASs. The first target EES may search, based on the first information, the EASs managed by the first target EES for EASs that have same identifiers and/or type information as the plurality of associated EASs included in the first information, and use the EASs as the at least one group of second target EASs. Any group of second target EASs includes a plurality of associated EASs, in other words, the plurality of EASs in the any group of second target EASs serve the first application. Optionally, the EASs in the any group of second target EASs have same identifiers and/or type information as the EASs in the first information. In other words, the any group of second target EASs has same identifiers and/or type information as the plurality of associated EASs. Therefore, a group of target EESs (first target EESs) in the at least one group of second target EASs may be used as EASs that provide services for the first application after application context transfer.

For example, if the EAS identifiers included in the first information are an EAS ID #1, an EAS ID #2, and an EAS ID #3 respectively, identifiers of the EASs in the any group of second target EASs are the EAS ID #1, the EAS ID #2, and the EAS ID #3. For another example, if the EAS type information included in the first information is a type #1, a type #2, and a type #3 respectively, type information of the EASs in the any group of second target EASs is EASs of the type #1, the type #2, and the type #3 respectively.

It should be understood that, if the first target EES includes a plurality of EESs, in S102, the plurality of target EESs separately determine, based on the first information and information about EASs separately managed by the plurality of target EESs, target EASs from the information about the EASs separately managed by the target EESs, where information about the target EASs is included in the information about the at least one group of target EASs.

For example, if the first target EES includes an EES #1 and an EES #2, and the EES #1 and the EES #2 separately receive the first information from the source EES, the EES #1 and the EES #2 may separately determine target EASs based on the first information. Specifically, if identifiers that are of the group of EASs and that are included in the first information are an EAS ID #1, an EAS ID #2, and an EAS ID #3 respectively, the EAS ID #1 and the EAS ID #2 are identifiers of an EAS #1 and an EAS #2 that are managed by the EES #1, respectively, and the EAS ID #3 is an identifier of an EAS #3 managed by the EES #2, in S102, the EES #1 may determine the EAS #1 and the EAS #2 as EASs in the second target EASs based on the first information, and the EES #2 may determine the EAS #3 as an EAS in the second target EASs based on the first information. In other words, EASs in the second target EASs include the EAS #1, the EAS 2, and the EAS #3.

S103: The first target EES sends the information about the at least one group of target EASs to the source EES.

Correspondingly, the source EES receives the information about the at least one group of target EASs from the first target EES.

In S103, the information about the at least one group of target EASs may be included in at least one discovered associated EAS list (discovered linkage EAS list) or at least one EAS list. In this application, the discovered associated EAS list may include the information about the at least one group of target EASs, and may specifically include at least one of end point (end point) information, identifiers, or type information of the at least one group of target EASs. Optionally, the discovered associated EAS list may further include the identifier of the first application, to indicate that the EASs in the discovered associated EAS list serve the first application. The end point information of the EASs may also be referred to as address information of the EASs, for example, may include at least one of URIs, FQDNs, or IP addresses of the EASs.

It may be understood that, for a structure of the discovered associated EAS list, refer to Table 3. It should be understood that, in Table 3, an example in which the end point information is the IP addresses is used for description. In specific implementation, the IP addresses may be changed to the URIs, the FQDNs, or the like based on a network requirement. This application makes no specific requirement.

**Table 3**

| | |
|---|---|
| Name | Discovered associated EAS list |
| EAS end point information | IP address #1, IP address #2, and IP address #3 |
| EAS identifiers | EAS ID #1, EAS ID #2, and EAS ID #3 |
| EAS type information | Type #1, type #2, and type #3 |
| Information about a first application | Indicating the first application |

In addition, in another manner in which the first target EES sends the information about the at least one group of target EASs to the source EES, the at least one group of target EASs may be carried in an EAS list. As shown in Table 4, the EAS list may include at least one of end point information of a plurality of associated EASs in the at least one group of target EASs, information indicating that the plurality of EASs are associated, or identifiers or type information of the at least one group of target EASs. Optionally, for the information indicating that the plurality of EASs are associated, refer to the descriptions of the information in Table 2. For example, the information indicating that the plurality of EASs are associated may include information indicating that the plurality of associated EASs serve the first application. For example, the information is the identifier of the first application. In addition, the EAS list may further include the information about the first application. Alternatively, the information indicating that the plurality of EASs are associated may indicate that the group of EASs needs to provide services for the terminal device, indicate that the target EASs need to be selected for the group of EASs, or indicate that the EASs in the EAS list need to perform application context transfer simultaneously or together, and may include, for example, some EAS identifiers and/or type information, to indicate that EASs having the EAS identifiers and/or type information need to perform application context transfer simultaneously or together.

**Table 4**

| | |
|---|---|
| Name | EAS list |
| EAS end point information | IP address #1, IP address #2, and IP address #3 |
| Name | EAS list |
| EAS identifiers | EAS ID #1, EAS ID #2, and EAS ID #3 |
| EAS type information | Type #1, type #2, and type #2 |
| Information indicating that a plurality of EASs are associated | The information is, for example, information about a first application, used by EASs in the list to serve the first application; or may include a specific identifier or indication information, indicating that a group of EASs is needed to provide services for a terminal device, indicating that target EASs need to be selected for a group of EASs, or indicating that EASs in the EAS list need to perform application context transfer simultaneously. |

As shown in Table 4, Table 4 may include at least one of the information indicating that the plurality of associated EASs serve the first application, or the identifiers or the type information of the plurality of associated EASs.

It may be understood that, if the first target EES determines a plurality of groups of target EASs, the first target EES may use a plurality of discovered associated EAS lists, a plurality of EAS lists, at least one discovered associated EAS list, or at least one EAS list to separately carry information about the plurality of groups of target EASs. In addition, the information about the plurality of groups of target EASs may alternatively be carried in a same discovered associated EAS list or EAS list. For example, information about each group of EASs may be distinguished by being associated with a different index or identifier. This is not specifically limited in this application.

It may be further understood that, if the first target EES includes a plurality of EESs, in S103, the plurality of target EESs separately send information about target EASs to the source EES, so that the source EES may obtain the information about the at least one group of target EASs from the plurality of EESs. For example, in the foregoing example, if the EES #1 determines the EAS #1 and the EAS #2 as EASs in the second target EASs based on the first information, and the EES #2 determines the EAS #3 as an EAS in the second target EASs based on the first information, in S103, the EES #1 may send information about the EAS #1 and information about the EAS #2 to the source EES, and the EES #2 may send information about the EAS #3 to the source EES. Therefore, the source EES may obtain information about a group of EASs from the EES #1 and the EES #2, where the group of EASs includes the EAS #1, the EAS #2, and the EAS #3.

Based on the procedure shown in FIG. 4, the source EES may obtain the information about the at least one group of target EASs from the first target EES based on the first information. The information about the at least one group of target EASs is determined based on the information about the group of EASs. Therefore, when the plurality of EASs serve the terminal device, the source EES performs application context transfer based on the information about the group of target EASs, so that a success rate of application context transfer can be improved.

Based on a same inventive concept, an embodiment of this application further provides another communication method to improve an application transfer success rate.

As shown in FIG. 5, for example, a source EES and a target EES perform the method. The communication method may include the following steps.

S201: The source EES receives, from a first target EES, information about EASs managed by the first target EES.

The information about the EASs that is obtained by the source EES from the first target EES may be some or all of EASs managed by the first target EES. This application makes no specific requirement.

For example, the information about the EASs managed by the first target EES may include EAS identifiers and/or EAS type information.

It may be understood that, for the information about the EASs managed by the first target EES in S201, refer to the descriptions of the information about the EASs managed by the first target EES in S102. Details are not described again in S201.

Optionally, the EASs managed by the first target EES may include at least one group of third target EASs. EASs in any group of third target EASs serve a same application (including, for example, a first application, or another application that is other than the first application and that can be served by a plurality of EASs), or serve a same terminal device (or AC). Therefore, the source EES may determine a group of first target EASs from the at least one group of third target EASs managed by the first target EES. The first target EASs include a plurality of associated target EASs, and the plurality of associated target EASs may be configured to provide services for the first application after application context transfer. For example, the first application includes an online game application, and in addition to at least one group of associated EASs configured to serve the online game application, the at least one group of third target EASs may optionally further include at least one group of associated EASs configured to serve another application such as social software. For example, the information that is about the EASs managed by the first target EES and that is received by the source EES from the first target EES may include at least one associated EAS list, or at least one EAS list that includes information indicating EAS association. Herein, the associated EAS list or the EAS list that includes the information indicating EAS association may include one or more groups of third target EASs, and any group of third target EASs may be configured to serve one application, terminal device, or AC. It should be understood that, for a manner of using the associated EAS list or the EAS list to carry information about the at least one group of third target EASs, refer to the descriptions of using the associated EAS list or the EAS list to carry the at least one group of target EASs in this application. Details are not described herein.

For example, in S201, the source EES may receive, from the first target EES, at least one associated EAS list shown in Table 1, for example, EASs whose EAS identifiers shown in Table 1 are an EAS ID #1, an EAS ID #2, and an EAS ID #3 respectively are associated and configured to provide services for a same application, and the plurality of EASs may be considered as a group of third target EASs; and/or the source EES may receive, from the first target EES, at least one EAS list shown in Table 2, where the EAS list may include at least one of information indicating that a plurality of EASs are associated, or identifiers or type information of the plurality of EASs, EASs whose EAS identifiers shown in Table 2 are an EAS ID #1, an EAS ID #2, and an EAS ID #3 respectively are associated and configured to provide services for a same application, and the plurality of EASs may be considered as a group of third target EASs.

As an example, before S201, the source EES may further request the information about the EASs managed by the first target EES from the first target EES. Optionally, the source EES may obtain information about the first target EES in a context transfer process, to request the information about the EASs managed by the first target EES from the first target EES based on the information about the first target EES.

For example, before S201, the source EES may obtain the information about the first target EES in the context transfer process, and further, the source EES may send an EAS discovery request to the first target EES based on the information about the first target EES, so that the first target EES sends the information about the EASs managed by the first target EES to the source EES based on the EAS discovery request. The following describes, with reference to FIG. 8 and FIG. 9A, a procedure in which the source EES obtains the information about the first target EES, and details are not described herein.

Optionally, the source EES may obtain the information about the first target EES with reference to the manner that is described in S101 and in which the source EES obtains the information about the first target EES, to request the information about the EASs managed by the first target EES from the first target EES. Therefore, for the first target EES, refer to the descriptions in S101. Specifically, for a specific manner of obtaining the information about the first target EES, refer to descriptions in FIG. 8 or FIG. 9A.

As described in S101 in this application, the first target EES in this application may be one EES. EASs managed by the EES include a group of EASs, and the group of EASs is indicated by the first information. The first target EES may alternatively include a plurality of EESs. EASs managed by any EES may include a group of EASs, or EASs managed by any EES include a part of a group of EASs.

If the first target EES includes a plurality of EESs, and EASs managed by any one of the plurality of EESs include a part of a group of EASs, in S201, the source EES may receive information about EASs separately managed by the plurality of EESs. Optionally, the source EES may separately request the information about the EASs separately managed by the plurality of EESs from the plurality of EESs. For example, the plurality of EESs are an EES #1 and an EES #2. The source EES may receive information about EASs managed by the EES #1 from the EES #1, and receive information about EASs managed by the EES #2 from the EES #2. Optionally, the EES #1 and the EES #2 are located in a same data center.

S202: The source EES determines, based on the first information and the information about the EASs managed by the first target EES, a group of first target EASs from the EASs managed by the first target EES.

The first information includes information about a group of EASs, the group of EASs includes a plurality of associated EASs, and the plurality of associated EASs serve the first application or serve a same terminal device or AC. It should be understood that, in the procedure shown in FIG. 5, for the first information, refer to the descriptions of the first information in the procedure shown in FIG. 4. Details are not described herein again. For example, the source EES may receive the first information from a terminal device or an EAS. For details, refer to the descriptions of the manner in which the source EES obtains the first information from the terminal device or the EAS in S102. The source EES may receive the first information from the terminal device in a manner described below in FIG. 6 or FIG. 7.

In addition, the group of first target EASs may include a plurality of associated target EASs, and the plurality of associated target EASs are configured to serve the first application after application context transfer.

Optionally, in S202, the source EES may determine, based on the first information, at least one group of target EASs from the EASs managed by the first target EES, or the at least one group of target EASs is determined based on the first information. Optionally, the at least one group of target EASs is one group of target EASs, and the group of target EASs is one group of first target EASs. In addition, if the at least one group of target EASs is at least one group of second target EASs, and the at least one group of second target EASs includes one group of first target EASs, the source EES may further determine the group of first target EASs from a plurality of groups of second target EASs.

Referring to the manner that is described in S102 shown in FIG. 4 and in which the first target EES determines the information about the at least one target EAS based on the first information and the information about the EASs managed by the first target EES, in S202, information about the at least one group of target EASs determined by the source EES is the same as the information about the group of EASs in the first information. The information about the EASs managed by the first target EES may include identifiers of the EASs managed by the first target EAS and/or type information of the EASs.

For example, the target EASs include at least one group of second target EASs. The source EES may search, based on the first information, the EASs managed by the first target EES for EASs that have same identifiers and/or type information as the plurality of associated EASs included in the first information, and use the EASs as the at least one group of second target EASs. Any group of second target EASs includes a plurality of associated EASs, in other words, the plurality of EASs in the any group of second target EASs serve the first application or serve a same terminal device or AC. Optionally, the EASs in the any group of second target EASs have same identifiers and/or type information as the EASs in the first information. In other words, the any group of second target EASs has same identifiers and/or type information as the plurality of associated EASs in the first information. Therefore, a group of target EESs (first target EESs) in the at least one group of second target EASs may be used as EASs that provide services for the first application after application context transfer.

For example, if EAS identifiers included in the first information are an EAS ID #1, an EAS ID #2, and an EAS ID #3 respectively, identifiers of the EASs in the any group of second target EASs are the EAS ID #1, the EAS ID #2, and the EAS ID #3. For another example, if EAS type information included in the first information is a type #1, a type #2, and a type #3 respectively, type information of the EASs in the any group of second target EASs is EASs of the type #1, the type #2, and the type #3 respectively.

Further, if the at least one group of target EASs includes a plurality of groups of second target EASs, the source EES may determine a group of first target EASs from at least one group of second target EASs based on service KPIs, loads, or other conditions of the at least one group of second target EASs. For example, the source EES may select, as the group of first target EASs based on the service KPIs of the at least one group of second target EASs, a group of second target EASs having relatively good service KPIs. Alternatively, the source EES may select, as the group of first target EASs based on load statuses of the at least one group of second target EASs, a group of second target EASs having relatively small (or relatively light) loads.

Optionally, if the first target EES includes a plurality of EESs, in S201, the group of first target EASs determined by the source EES may include EASs belonging to the plurality of EESs. Still in an example in which the first target EES includes an EES #1 and an EES #2, if identifiers that are of the group of EASs and that are included in the first information are an EAS ID #1, an EAS ID #2, and an EAS ID #3 respectively, the EAS ID #1 and the EAS ID #2 are identifiers of an EAS #1 and an EAS #2 managed by the EES #1, respectively, and the EAS ID #3 is an identifier of an EAS #3 managed by the EES #2, in S202, the source EES may determine the EAS #1, the EAS #2, and the EAS #3 as a group of target EASs. The EAS #1 and the EAS #2 are managed by the EES #1, and the EAS #3 is managed by the EES #2.

Further optionally, when determining that managed EASs in any EES do not include the group of EASs indicated by the first information, the source EES uses EASs managed by the plurality of EESs as the group of first target EASs.

Based on the procedure shown in FIG. 5, the source EES may determine, based on the first information and the information about the EASs managed by the first target EES, the information about the group of first target EASs managed by the same target EES. Therefore, when application context transfer is performed based on the information about the target EASs, a success rate of application context transfer can be improved.

With reference to an EES discovery process shown in FIG. 6, the following describes a manner in which a terminal device (including an AC and an EEC, as shown in FIG. 6) sends first information to an EES. The EES herein may include the source EES in the procedure shown in FIG. 4 and/or the source EES in the procedure shown in FIG. 5.

As shown in FIG. 6, the EAS discovery procedure may include the following steps.

S300: At least one EES including a source EES sends an EES registration request (EES registration request) to an ECS. The EES herein may include the source EES in the procedure shown in FIG. 4 and/or the source EES in the procedure shown in FIG. 5.

The EES registration request may include EES profile. Optionally, the EES profile may include information about EASs managed by the EES. Optionally, the information about the EASs managed by the EES may be sent by an EAS to the EES when the EAS requests registration from the EES, or the information about the EASs managed by the EES may be configured in EES profile information. Optionally, the EES registration request may further include information about a data center of the EES, for example, an EDN identifier and/or a DNAI identifier.

Optionally, the ECS may send an EES registration response (EES registration response) to the EES. For example, the registration response may indicate an EES registration result.

It should be understood that S300 is not mandatory in each EES discovery or EAS discovery process. For example, the EES performs S300 only when requesting registration from the ECS for the first time.

S301: An AC obtains first information from AC profile information.

For descriptions of the first information, refer to S 101. Details are not described herein again.

Optionally, in the AC profile information, the first information may be stored in a form of the associated EAS list shown in Table 1, and/or may be stored in a form of the EAS list that is shown in Table 2 and that includes the information indicating that the plurality of EASs are associated.

In addition, optionally, the first information may include information indicating that the plurality of EASs need to perform application context transfer simultaneously or together. For example, the information includes the information indicating that the plurality of EASs are associated in Table 2 or Table 4.

S302: The AC sends the first information to an EEC.

Optionally, in S302, the AC may send an AC registration request (AC registration request) to the EES. The AC registration request may include an AC identifier and the AC profile information, and the AC profile information includes the first information.

Optionally, if the AC sends the AC registration request to the EES, the EEC may send an AC registration response (AC registration response) to the AC. For example, the registration response may indicate an AC registration result.

It should be understood that the first information may alternatively be carried in another message other than the AC registration request. This is not specifically limited herein.

S303: The EEC obtains the first information from EEC profile information.

In some implementations, if the EEC obtains the information indicating that the plurality of EASs need to perform application context transfer simultaneously or together, the EEC determines that EES and/or EAS discovery need/needs to be performed for a group of EASs simultaneously or together. For example, the indication information is carried in the first information. The indication information is, for example, the information indicating that the plurality of EASs are associated in Table 2 or Table 4.

It should be understood that in S301 to S303, S301 and S302 may be performed, and/or S303 may be performed. In other words, the EEC may obtain the first information by using S301 and 302, or may obtain the first information by using S302.

For example, optionally, when the AC determines that application context transfer needs to be performed, the EEC may obtain the first information by using S301 and S302; or when the EEC determines that application context transfer needs to be performed, the EEC may obtain the first information by using S303.

S304: The EEC sends the first information to the ECS.

Optionally, in S304, the EEC may send a service provisioning request (service provisioning request) to the ECS. The request may be used for EES discovery. For example, the service provisioning request may include the first information. For example, the service provisioning request may include the AC profile information, and the AC profile information may include the first information.

S305: Optionally, the ECS determines, based on the first information, an EES from EESs registered with the ECS.

In some implementations, if the ECS obtains the information indicating that the plurality of EASs need to perform application context transfer simultaneously or together, the ECS determines that EES discovery needs to be performed for the group of EASs simultaneously or together. For example, the first information includes the indication information, and the indication information is, for example, the information indicating that the plurality of EASs are associated in Table 2 or Table 4.

The ECS may determine an EES from the at least one EES based on the first information and information about EASs managed by the at least one EES. Optionally, the EES may be an EES registered with the ECS. Further optionally, information about EASs managed by the EES may be sent to the ECS in a process in which the EES is registered with the ECS. For example, in S300, the EES sends the information about the EASs managed by the EES to the ECS.

For example, the EASs managed by the EES include at least one group of EASs, the group of EASs includes a plurality of associated EASs, and the plurality of EASs may be configured to serve a first application of a terminal device, serve the terminal device, or serve the AC.

It may be understood that the ECS determines one or more EESs in S305.

If the ECS determines one EES, EASs managed by the EES include a group of EASs, and the group of EASs is indicated by the first information. If the ECS determines a plurality of EESs, EASs managed by any EES may include a group of EASs, or EASs managed by any EES include a part of a group of EASs.

Optionally, if no EES managing the group of EASs exists in the EESs registered with the ECS, the ECS may use a plurality of EESs as EESs determined in S305, where EASs managed by any one of the plurality of EESs include a part of the group of EASs. Subsequently, for ease of description, the plurality of EESs may be referred to as associated EESs. Alternatively, in this application, when associated EASs are located in different EESs in a same data center (for example, have a same EDN identifier and/or DNAI), these EESs may be considered as associated EESs. No EES managing the group of EASs exists in the EESs registered with the ECS, or any EES registered with the ECS does not manage all EASs in the group of EASs, in other words, EASs managed by any EES do not include all EASs in the group of EASs indicated by the first information.

For example, if identifiers of the group of EASs are an EAS ID #1, an EAS ID #2, and an EAS ID #3, the EAS ID #1 and the EAS ID #2 are identifiers of EASs managed by an EES #1, the EAS ID #3 is an identifier of an EAS managed by an EES #2, and the EESs registered with the ECS are the EES #1 and the EES #2, when the ECS determines that EASs managed by any EES do not include EASs whose identifiers are the EAS ID #1, the EAS ID #2, and the EAS ID #3, the ECS may determine that no EES managing the group of EASs exists in the EESs registered with the ECS, or the ECS may determine that the plurality of EESs manage the EASs included in the group of EASs. Alternatively, for another example, if types of the group of EASs are a type #1, a type #2, and a type #3, and the EESs registered with the ECS are an EES #1 and an EES #2, if EASs managed by the EES #1 do not include EASs whose types are the type #1, the type #2, and the type #3, and EASs managed by the EES #2 do not include EASs whose types are the type #1, the type #2, and the type #3, the ECS may determine that no EES managing the group of EASs exists in the EESs registered with the ECS.

Further optionally, if the EES determined by the ECS includes a plurality of EESs, and EASs managed by any one of the plurality of EESs include a part of the group of EASs, the plurality of EESs are located in a same data center, the plurality of EESs have a same EDN identifier, or the plurality of EESs have a same DNAI. In other words, the ECS may determine the plurality of EESs from EESs in a same data center. The information about the data center of the EES may be obtained in S300, to be specific, the information about the data center of the EES may be from the EES, or may be obtained by the ECS by querying another network element or a local configuration based on an identifier of the EES. No specific requirement is made. It may be understood that, in S305, the EES determined by the ECS may be used as a source EES and/or a target EES. No specific requirement is made herein.

S306: The ECS sends information about the EES to the EEC.

Optionally, in S306, the ECS may send a service provisioning response (service provisioning response) to the EEC. The service provisioning response may include the information about the EES. Further optionally, the service provisioning response may further include the information about the EASs managed by the EES. For example, the information about the EASs managed by the EES is included in an EAS list. Further optionally, the service provisioning response may further include information about a data center in which the EES is located, for example, an EDN identifier or a DNAI identifier of the EES.

S304 to S306 are optional steps. Alternatively, information about the source EES may be configured in the terminal device, for example, configured in the AC profile information or the EEC profile information. In this case, S304 to S306 do not need to be performed.

Optionally, if in S305, the ECS determines a plurality of EESs, and EASs managed by any one of the plurality of EESs include a part of the group of EASs, in S306, the ECS may send information about the plurality of EESs, for example, send identifiers of the plurality of EESs and/or EDN identifiers or DNAI identifiers of the plurality of EESs, to the EEC.

It may be understood that S305 and S306 may alternatively be replaced with the following: The ECS sends the information about the EASs managed by the at least one EES to the EEC, and the EEC determines the EES from the at least one EES based on the information about the EASs managed by the at least one EES. For a manner of determining the information about the EASs managed by the at least one EES, refer to the descriptions in S305.

Alternatively, if the ECS determines the EES in S305, the ECS may determine a plurality of EESs from the at least one EES, where EASs managed by any one of the plurality of EESs include a part of the group of EASs.

S307: The EEC sends the first information to the EES based on the information about the EES.

In some implementations, if the EEC obtains the information indicating that the plurality of EASs need to perform application context transfer simultaneously or together, the EEC determines that target EES and/or target EAS discovery need/needs to be performed for the group of EASs simultaneously or together. For example, the first information includes the indication information, and the indication information is, for example, the information indicating that the plurality of EASs are associated in Table 2 or Table 4.

Optionally, in S307, the first information may be carried in an EAS discovery request (EAS discovery request). For example, the EAS discovery request may include the AC profile information.

Optionally, if the ECS sends information about a plurality of EESs to the EEC in S306, the EEC may separately send the first information to the plurality of EESs in S307. Further optionally, the EEC may send the information about the plurality of EESs to each EES, or send information about another EES in the plurality of EESs to each EES. For example, the EEC may send an EAS discovery request or a selected EAS announcement request (selected EAS announcement request) to any EES. The EAS discovery request or the selected EAS announcement request carries information shown in Table 5. As shown in Table 5, the EAS discovery request, the selected EAS announcement request, or another message sent by the EEC may include information about an associated EES, for example, an identifier, an address, and/or other information of the associated EES. For example, the EEC sends an EAS discovery request to each target EES. The EAS discovery request may further include the first information. The EAS discovery request may further include an indication indicating whether application context transfer needs to be performed for the associated EES/an associated EAS together, and/or include information (for example, an AC ID) about an application for which application context transfer needs to be performed together.

**Table 5**

| | |
|---|---|
| Information about an associated EES | Identifier, address, and/or other information of the associated EES |
| > First information | Including, for example, an associated EAS list, an EAS list, or other information indicating a group of associated EASs |
| > Indication indicating whether application context transfer needs to be performed for the associated EES/an associated EAS together | Indicating whether application context transfer needs to be performed for associated EASs in a plurality of EESs together |
| > > Information about an application for which application context transfer needs to be performed together | For example, an AC ID or EAS information of the application for which application context transfer needs to be performed together |

It may be understood that, when the EES receives the EAS discovery request, the selected EAS announcement request, or another message used to carry the information about the associated EES, the EES may store the information about the associated EES, so that the associated EASs in the plurality of associated EESs can perform application context transfer together. Optionally, the EAS discovery request may carry an indication indicating that application context transfer needs to be performed for the associated EES/the associated EAS together. Further optionally, the EES may send corresponding information to the EEC. Therefore, based on the procedure shown in FIG. 6, the EES may obtain the first information in the EES discovery process, and store the first information. The EES herein may be the source EES in the procedure shown in FIG. 4 or the source EES in the procedure shown in FIG. 5. The EES may be one or more EESs. If the EES is a plurality of EESs, as described in FIG. 6, the EEC may request EAS information from the plurality of EESs in an initial EES discovery process, to access a plurality of EASs belonging to one group of EASs.

Optionally, if the first information is included in the EAS discovery request, the EES may further determine, in response to the EAS discovery request based on the first information, a group of EASs from EASs managed by the EES. In some implementations, if the EEC obtains the information indicating that the plurality of EASs need to perform application context transfer simultaneously or together, the EEC determines that EES and/or EAS discovery need/needs to be performed for the group of EASs simultaneously or together. For example, the first information includes the information, and the information is, for example, the information indicating that the plurality of EASs are associated in Table 2 or Table 4. A principle of a manner in which the EES determines the group of EASs based on the first information is the same as a principle in which the source EES or the first target EES determines the group of first target EASs based on the first information. Therefore, reference may be made to the descriptions of determining, by the source EES or the first target EES based on the first information, the group of first target EASs from the information about the EASs managed by the first target EES in this application, and details are not described in this application.

Further optionally, in FIG. 6, the EES may further send information about the group of EASs to the EEC, and then the EEC sends the information about the group of EASs to the AC. The information about the group of EASs may be included in an EAS discovery response (EAS discovery response).

In addition, in the procedure shown in FIG. 6, when the EASs managed by the EES include only some EASs in the group of EASs in the first information (or do not include any EAS in the group of EASs, or do not include all EASs in the group of EASs in the first information), the EES may send information about EASs included in the EASs managed by the EES to the EEC; the EES may send error information to the EEC to indicate that no group of associated EASs meets the first information; or the EES may send information to the EEC to indicate the EEC to reselect an EES. For example, if the EES determines, in an application context transfer process, that the EASs managed by the EES include only some EASs in the group of EASs in the first information (or do not include any EAS in the group of EASs), the EES may send an application context transfer failure indication to the EEC, to terminate the application context transfer process, in other words, skip performing a subsequent application context transfer process.

It should be understood that dashed lines in the procedure shown in FIG. 6 represent optional steps.

If a terminal device (including an AC and an EEC) sends first information to a source EES after an EAS discovery procedure, the procedure may include steps shown in FIG. 7.

S400: Before an EAS discovery procedure, at least one EAS sends an EAS registration request to an EES.

In FIG. 7, an example in which a source EAS sends an EAS registration request to a source EES is used for description. In actual application, there is no limitation that the source EAS is registered with the source EES, and a process in which another EAS requests registration from another EES may also be included.

Optionally, the EAS registration request may include EAS profile information.

The at least one EAS may include the source EAS. Optionally, EAS profile information of the source EAS may include first information, to indicate that a plurality of source EASs serve a first application. For descriptions of the first information, refer to S101. Details are not described herein again.

Optionally, the source EES may send an EAS registration response (EAS registration response) to the at least one EAS. For example, the EAS registration response may indicate an EAS registration result.

It may be understood that the source EES may receive and store the EAS profile information sent by the at least one EAS. Therefore, the source EES may store the first information from the source EAS.

Therefore, based on S400, the source EAS may send the first information to the source EES.

It should be understood that S400 is not mandatory in each EES discovery or EAS discovery process. For example, the EAS performs S400 only when requesting registration from the source EES for the first time.

Optionally, based on an EES discovery procedure, the source EES is determined as an EES that serves a terminal device. In addition, based on the EAS discovery procedure, a group of EASs (including, for example, the source EAS shown in FIG. 7) is determined as source EASs that serve the first application of the terminal device. Therefore, the group of EASs may be referred to as a group of source EASs.

An AC receives an EAS discovery response in the EAS discovery procedure. The discovery response may include addresses or other information of the group of source EASs. It should be understood that this application makes no requirement for steps of the EAS discovery procedure herein.

Optionally, if the EAS discovery response includes information about a plurality of groups of EASs, the AC may select a group of EASs from the plurality of groups of EASs, for example, select a group of EASs having relatively small loads.

S401: After receiving the EAS discovery response from an EEC, the AC obtains the first information from AC profile information.

For example, after receiving the EAS discovery response from the EEC, if the AC determines that application context transfer needs to be performed, the AC may perform S401.

For descriptions of the first information, refer to S101. Details are not described herein again.

Optionally, in the AC profile information, the first information may be stored in a form of the associated EAS list shown in Table 1, and/or may be stored in a form of the EAS list that is shown in Table 2 and that includes the information indicating that the plurality of EASs are associated.

S402: The AC sends the first information to the EEC.

Optionally, in S402, the AC may send a selected EAS announcement request (selected EAS announcement request) or another message to the EES. The selected EAS announcement request or another message may include an AC identifier and the AC profile information, and the AC profile information includes the first information.

S403: The EEC obtains the first information from EEC profile information.

It should be understood that in S400 to S403, S400 may be performed, S401 and S402 may be performed, S403 may be performed, or a plurality of S400, S401 and S402, or S403 may be performed.

For example, optionally, when the AC determines that application context transfer needs to be performed, the EEC may obtain the first information by using S401 and S402; or when the EEC determines that application context transfer needs to be performed, the EEC may obtain the first information by using S403.

S404: The EEC sends the first information to the source EES.

Optionally, in S404, the EEC may send a selected EAS announcement request to the source EES. The selected EAS announcement request carries the first information. For example, the selected EAS announcement request may include the AC profile information, and the AC profile information may include the first information.

Optionally, the EEC may determine, in the EES discovery procedure, that the source EES provides a service for the terminal device, and therefore may establish communication with the source EES.

Therefore, based on the procedure shown in FIG. 7, the source EES may receive the first information from the terminal device after the EAS discovery process ends. Alternatively, based on S401, the source EES may receive the first information from the source EAS.

It should be understood that, in this application, another manner in which the source EES obtains the first information may be preconfiguring the first information in an EAS, where the EAS is referred to as a main EAS (main EAS). For example, the first information is stored in EAS profile information of the main EAS. For the first information, refer to the descriptions of the first information in S101 in this application. For example, the first information includes information about a plurality of associated EASs. The plurality of associated EASs serve the first application, or the plurality of associated EASs serve a same terminal device or AC. The main EAS is one of the plurality of associated EASs. Information about the main EAS may be stored in the AC profile information or the EEC profile information. Therefore, the source EES may obtain the information about the main EAS from the terminal device with reference to the method shown in FIG. 6 or FIG. 7, to search for the main EAS based on the information about the main EAS, to obtain the first information stored in the main EAS. For example, the information about the main EAS includes an identifier and/or type information of the main EAS.

For example, after obtaining the information about the main EAS, the source EES may request the first information from the main EAS, and receive the first information from the main EAS. In addition, the first information may be stored in the EAS profile information of the main EAS. When requesting registration from the source EES, the main EAS may send, to the source EES, a registration request including the EAS profile information. After obtaining the information about the main EAS from the terminal device, the source EES obtains the first information from the profile information of the main EAS based on the information about the main EAS.

It should be understood that dashed lines in the procedure shown in FIG. 7 represent optional steps.

With reference to procedures shown in FIG. 8 and FIG. 9A, the following specifically describes the communication method provided in embodiments of this application. A difference between FIG. 8 and FIG. 9A lies in the following: In FIG. 8, a source EES sends first information to an ECS. Therefore, the ECS determines at least one target EES based on the first information, and sends information about the at least one target EES to the source EES, where the information about the at least one target EES may include information about a first target EES. However, in a procedure shown in FIG. 9A, a source EES determines first target EASs based on first information and information about EASs managed by an EES from an ECS. It should be understood that the procedure shown in FIG. 9A may be implemented in an application context transfer process.

As shown in FIG. 8, in an application context transfer process, a procedure of a communication method provided in an embodiment of this application may include the following steps.

S501: After detecting an ACR event, a source EAS sends an EAS discovery request to a source EES, where the EAS discovery request includes first information.

The EAS discovery request may further include an identifier of the source EAS.

In S501, for descriptions of the first information, refer to S101. Details are not described herein again. For example, the first information includes information about a plurality of associated source EASs. The plurality of associated source EASs serve a first application, and the source EAS is one of the plurality of associated source EASs. Therefore, the source EES may further obtain the first information from the source EAS. Optionally, the source EES may send an EAS registration response to the source EAS. It may be understood that information about the source EAS in this application may include information about an EAS currently connected to an AC, for example, at least one of an EAS ID, EAS address information, or other information.

Optionally, the first information may include information indicating that the plurality of EASs need to perform application context transfer simultaneously or together. For example, the information includes the information indicating that the plurality of EASs are associated in Table 2 or Table 4. It may be understood that the plurality of EASs may or may not transfer contexts to target EASs simultaneously.

In addition, optionally, the first information may further include information indicating that a plurality of EESs are to perform application context transfer simultaneously or together.

It should be understood that S501 is an optional step. If S501 is not performed, as a possible alternative manner, when requesting registration from the source EES, the source EAS may send profile information of the source EAS. The EAS profile information may include the first information. In this case, the source EES may obtain the first information from the profile information of the source EAS in the application context transfer process. In another alternative manner, the source EES may alternatively obtain the first information from a terminal device with reference to the procedure shown in FIG. 6 or the procedure shown in FIG. 7.

It should be further understood that, if the source EAS detects the ACR event, the source EAS may trigger application context transfer. In addition, application context transfer may alternatively be initiated by the terminal device, the source EES, or the like. This application makes no specific requirement.

S502: The source EES sends a target EES retrieve request (retrieve the T-EES request) to an ECS, where the request includes the first information.

Optionally, the target EES retrieve request may further include an identifier of the source EES.

Further optionally, the target EES retrieve request may further include information indicating that target EASs need to be selected for a group of source EASs, to enable, in an explicit indication manner, the ECS to select the target EASs for the group of source EASs indicated by the first information. For example, the information indicating that the target EASs need to be selected for the group of source EASs is carried in the first information shown in Table 2. Table 2 may carry implicit indication information such as a specific identifier, to indicate that the target EASs need to be selected for the group of source EASs.

It may be understood that the target EES retrieve request may be used to request the ECS to provide information about a target EES for the source EES.

S503: Optionally, the ECS determines at least one target EES based on the first information and information about EASs managed by an EES.

In some implementations, if the ECS obtains the information indicating that the plurality of EASs need to perform application context transfer together, the ECS determines that EES discovery needs to be performed for the group of EASs, in other words, the EES needs to be determined based on the first information in S503. For example, the first information includes the indication information, and the indication information is, for example, the information indicating that the plurality of EASs are associated in Table 2 or Table 4.

The information about the EASs managed by the EES may be sent by EESs to the ECS by using EES registration requests in a process in which the EESs (including the target EES) are registered with the ECS. The information about the EASs managed by the EES may include information about EASs registered with the EES, and may further include EAS information configured in EES profile information of the EES. For details, refer to the descriptions of the information about the EASs managed by the EES in S102.

Specifically, the ECS may search, based on the first information, the information about the EASs managed by the EES, and determine, as the target EES, an EES whose information about managed EASs includes the first information. For example, if identifiers of the source EASs in the first information include an EAS ID #1, an EAS ID #2, and an EAS ID #3, and identifiers that are of EASs managed by an EES and that are obtained by the ECS include the EAS ID #1, the EAS ID #2, and the EAS ID #3, the ECS may determine that the target EES includes the EES.

As described in S305, the target EES determined by the ECS may include one or more EESs. For a determining method of the one or more EESs, refer to the descriptions in S305. Details are not described herein again.

S504: The ECS sends a target EES retrieve response (retrieve the T-EES response) to the source EES, where the target EES retrieve response includes information about the at least one target EES.

Optionally, the target EES retrieve response may include an identifier or an address of the at least one target EES, information about EASs managed by the at least one target EES, or the like.

The information about the EASs managed by the target EES may be sent by target EESs to the ECS by using EES registration requests in a process in which the target EESs are registered with the ECS. The information about the EASs managed by the target EES may include information about EASs registered with the EES, and may further include EAS information configured in EES profile information of the target EES. For details, refer to the descriptions of the information about the EASs managed by the EES in S102.

Optionally, if the target EES includes a plurality of EESs, the ECS may further send second information to the source EES. The second information may indicate the source EES to send EAS discovery requests to the plurality of EESs. For example, the target EES retrieve response carries the second information, or the second information may be carried in other signaling.

It may be further understood that S503 and S504 may alternatively be replaced with the following: The ECS sends the target EES retrieve response to the source EES, where the target EES retrieve response includes the information about the EASs managed by the at least one EES, and the at least one EES may include the target EES; and the source EES determines a source EES from the at least one EES based on the information about the EASs managed by the at least one EES. For a manner of determining the information about the EASs managed by the at least one source EES, refer to the descriptions in S503.

S505: The source EES sends an EAS discovery request to a first target EES, where the EAS discovery request may include the first information.

It should be understood that, if the target EES retrieve response in S504 includes information about a plurality of second target EESs, the source EES may determine one second target EES as the first target EES based on service KPIs, loads of the target EESs, or other indicators.

Alternatively, if the first target EES may include a plurality of EESs, the source EES may send EAS discovery requests to the plurality of EESs. Optionally, when the source EES receives the second information from the ECS, the source EES sends the EAS discovery requests to the plurality of EESs.

S506: The first target EES determines at least one group of target EASs based on the first information.

In some implementations, if the first target EES obtains the information indicating that the plurality of EASs need to perform application context transfer together, the first target EES determines that EAS discovery needs to be performed for the group of EASs together, in other words, the at least one group of target EASs needs to be determined based on the first information in S506. For example, the first information includes the indication information, and the indication information is, for example, the information indicating that the plurality of EASs are associated in Table 2 or Table 4.

Optionally, the at least one group of target EASs includes one group of first target EASs, the group of first target EASs includes a plurality of associated target EASs, and the plurality of associated target EASs are configured to serve the first application after application context transfer.

The target EES may determine, based on the first information and information about at least one EAS managed by the target EES, the at least one group of target EASs from the at least one EAS managed by the target EES. Optionally, information about EASs managed by the target EES may be sent by the EASs to the target ECS in a process in which the EASs are registered with the target EES.

Specifically, the target EES may search, based on the first information, the information about the EASs managed by the target EES, and determine, as target EASs, EASs whose EAS information includes the first information. For example, if identifiers of the source EASs in the first information include an EAS ID #1, an EAS ID #2, and an EAS ID #3, and identifiers of the EASs managed by the target EES include the EAS ID #1, the EAS ID #2, and the EAS ID #3, the target EES may determine, as target EASs, EASs to which the EAS ID #1, the EAS ID #2, and the EAS ID #3 belong. In addition, in this example, if a plurality of EASs are identified by the EAS ID #1, the EAS ID #2, and the EAS ID #3, the plurality of EASs may constitute a plurality of groups of target EASs. For example, if EASs whose identifiers are the EAS ID #1 include EASs whose IP addresses are an IP #11 and an IP #12, EASs whose identifiers are the EAS ID #2 include EASs whose IP addresses are an IP #21 and an IP #22, and EASs whose identifiers are the EAS ID #3 include EASs whose IP addresses are an IP #31 and an IP #32, the at least one group of target EASs may include two groups of second target EASs, one group of second target EASs includes an EAS whose identifier is the EAS ID #1 and IP address is the IP #11, an EAS whose identifier is the EAS ID #2 and IP address is the IP #21, and an EAS whose identifier is the EAS ID #3 and IP address is the IP #31, and the other group of second target EASs includes an EAS whose identifier is the EAS ID #1 and IP address is the IP #12, an EAS whose identifier is the EAS ID #2 and IP address is the IP #22, and an EAS whose identifier is the EAS ID #3 and IP address is the IP #32.

In addition, in S506, when the EASs managed by the first target EES include only some EASs in the group of EASs in the first information (or do not include any EAS in the group of EASs, or do not include all EASs in the group of EASs in the first information), the first target EES may send, to an EEC, information about the some EASs that are in the group of EASs and that are included in the EASs managed by the first target EES; the first target EES may send error information to the source EES, to indicate that no group of associated EASs meets the first information; or the first target EES may send information to the source EES to indicate the source EES to reselect an EES. For example, in this case, the first target EES may further send an EAS discovery failure indication to the source EES, to terminate the application context transfer process, in other words, skip performing a subsequent application context transfer process.

In addition, when EASs managed by any first target EES include only some EASs in the group of EASs in the first information, the first target EES may use, as target EASs, information about the some EASs that are in the group of EASs and that are included in the EASs managed by the first target EES, and sends information about the target EASs to the source EES. If the source EES separately receives information about EASs from a plurality of first target EESs, and a combination of the EASs from the plurality of first target EESs includes all EASs in the group of EASs, the source EES may use these EASs as target EASs, to improve a success rate of application context transfer. Optionally, in S504, if the target EES retrieve response includes information about a plurality of target EESs, the source EES separately receives information about EASs from the plurality of first target EESs, and a combination of EASs from the plurality of first target EESs includes all EASs in the group of EASs, the source EES may use these EASs as target EASs.

S507: The first target EES sends an EAS discovery response to the source EES, where the EAS discovery response includes information about the at least one group of target EASs.

For example, if the EASs managed by the first target EES include a group of EASs, at least one target EAS may include information about the group of EASs. For another example, if the first target EES is a plurality of first target EESs, and EASs managed by any first target EES include some EASs in the group of EASs, an EAS discovery response sent by the any first target EES to the source EES includes information about the some EASs in the group of EASs, so that application contexts can be transferred to a plurality of EASs managed by the plurality of EESs, thereby improving efficiency of application context transfer.

Optionally, in some cases, the target EES may send error information to the EES, to indicate that no group of associated EASs meets the first information. For example, when information about EASs that is returned by the first target EES to the source EES includes information about some EASs that are in the group of EASs and that are included in the EASs managed by the first target EES, but does not include information about all EASs in the group of EASs, the source EES may send error information to the EEC, to indicate that no group of associated EASs meets the first information; and/or the source EES may send information to the EEC, to indicate the EEC to reselect an EES. For example, in this case, the source EES may further send an EAS discovery failure indication to the EEC, to terminate the application context transfer process, in other words, skip performing a subsequent application context transfer process.

In addition, if associated EASs do not need to be located in a same EES, for example, to improve a success rate of application context transfer, one group of target EASs is managed by a plurality of target EESs. In this case, it may be understood that the first target EES is a plurality of first target EESs, and any one of the first target EESs may send information about only some EASs in the group of EASs to the source EES.

The information about the at least one group of target EASs may include identifiers and end point information, such as URIs, FQDNs, or IP addresses, of the at least one group of target EASs.

If the at least one group of target EASs includes a plurality of groups of second target EASs, the source ESS may determine a group of second target EASs as a group of first target EASs based on service KPIs, loads of the target EESs, or other indicators.

S508: The source EES sends an EAS discovery response to the source EAS, where the EAS discovery response includes information about a group of first target EASs.

Optionally, the information about the group of first target EASs includes identifiers and end point information of a plurality of associated target EASs, and the source EES may send information about a target EAS having a same identifier to each source EAS based on the identifiers of the source EASs and the identifiers of the target EASs in the group of first target EASs. The information about the target EAS may be address information, such as an IP address or an FQDN.

The source EAS is a plurality of EASs. The source EES may determine, based on identifiers of the source EASs and the identifiers of the first target EASs, a source EAS and a target EAS that have a same identifier, and send information about the target EAS to the source EAS that has the same EAS identifier.

S508 is an optional step.

It may be understood that the procedure shown in FIG. 8 may be used as a possible implementation of the procedure shown in FIG. 4. S505 may be considered as a possible implementation of S101 shown in FIG. 4, S506 may be considered as a possible implementation of S 102 shown in FIG. 4, and S507 may be considered as a possible implementation of S 103 shown in FIG. 4.

It should be understood that dashed lines in the procedure shown in FIG. 8 represent optional steps.

As shown in FIG. 9A, in an application context transfer process, a procedure of another communication method provided in an embodiment of this application may include the following steps.

S601: Optionally, after detecting an ACR event, a source EAS sends an EAS discovery request to a source EES, where the EAS discovery request includes first information.

Optionally, the source EES may obtain the first information in another manner.

For descriptions of S601, refer to the descriptions of S501.

It should be understood that the first information may include information indicating that a plurality of EASs need to perform application context transfer together. For example, the information includes the information indicating that the plurality of EASs are associated in Table 2 or Table 4.

S602: The source EES sends a target EES retrieve request to an ECS.

Optionally, the target EES retrieve request may further include an identifier of the source EES.

S603: The ECS sends a target EES retrieve response to the source EES. The target EES retrieve response includes information about EASs managed by at least one EES, information about a data center, and/or the like.

The information about the EASs managed by the target EES may be sent by target EESs to the ECS by using EES registration requests in a process in which the target EESs are registered with the ECS. The information about the EASs managed by the target EES may include information about EASs registered with the EES, and may further include EAS information configured in EES profile information of the target EES. For details, refer to the descriptions of the information about the EASs managed by the EES in S102.

Optionally, the target EES retrieve response may further include an identifier of the at least one target EES.

Optionally, the at least one target EES may be some or all EESs managed by the ECS.

Optionally, the ECS may obtain the information about the EASs managed by the EES and/or the information about the data center from the EES in an EES registration process.

S604: The source EES determines a first target EES from the at least one target EES based on the first information and information about the at least one target EES.

In some implementations, if the source EES obtains the information indicating that the plurality of EASs need to perform application context transfer together, the source EES determines that EES discovery needs to be performed for a group of EASs together, in other words, the first target EES needs to be determined based on the first information in S604. For example, the first information includes the indication information, and the indication information is, for example, the information indicating that the plurality of EASs are associated in Table 2 or Table 4.

Specifically, the source EES may search, based on the first information, the information about the EASs managed by the target EES, and determine, as a second target EES, a target EES whose information about managed EASs includes the first information. For example, if identifiers of the source EASs in the first information include an EAS ID #1, an EAS ID #2, and an EAS ID #3, and identifiers that are of EASs managed by an EES and that are obtained by the ECS include the EAS ID #1, the EAS ID #2, and the EAS ID #3, the source EES may determine that the second target EES includes the EES.

It may be understood that, if the source EES determines a plurality of target EESs as second target EESs, the source EES may further determine a first target EES from the plurality of second target EESs based on service KPIs, loads, or other information of the second target EESs.

It may be further understood that the first target EES includes one or more EESs.

S605: The source EES sends an EAS discovery request to the first target EES.

If the first target EES includes a plurality of EESs, the source EES may send EAS discovery requests to the plurality of target EESs.

S606: The first target EES sends an EAS discovery response to the source EES, where the EAS discovery response includes information about at least one target EAS managed by the first target EES.

The information about the at least one target EAS may include an identifier and end point information, such as a URI, an FQDN, or an IP address, of the at least one target EAS.

It should be understood that, in S606, the at least one target EAS may include some or all of EASs managed by the first target EES.

For example, if the EASs managed by the first target EES include a group of EASs, the at least one target EAS may include information about the group of EASs. For another example, if the first target EES is a plurality of first target EESs, and EASs managed by any first target EES include some EASs in the group of EASs, an EAS discovery response sent by the any first target EES to the source EES includes information about the some EASs in the group of EASs.

Optionally, the information about the at least one target EAS may include information about at least one group of third target EASs. Any group of third target EASs may include a plurality of associated EASs, and the plurality of associated EASs serve a same application (which may be a first application or another service, and is not limited), terminal device, or AC. Further optionally, the information about the at least one group of third target EASs may be included in the EAS list shown in Table 3 or Table 4.

In addition, the information about the at least one target EAS may include information about at least one group of second target EASs, any group of second target EASs may include a plurality of associated EASs, and the plurality of associated EASs serve the first application. Further optionally, the information about the at least one group of second target EASs may be included in the EAS list shown in Table 3 or Table 4.

S607: Optionally, the source EES determines a group of first target EASs from the at least one target EAS based on the first information and the information about the at least one target EAS managed by the first target EES.

In some implementations, if the source EES obtains the information indicating that the plurality of EASs need to perform application context transfer together, the source EES determines that EAS discovery needs to be performed for the group of EASs together, in other words, the group of target EASs needs to be determined based on the first information in S607. For example, the first information includes the indication information, and the indication information is, for example, the information indicating that the plurality of EASs are associated in Table 2 or Table 4, or explicit indication information indicating that the plurality of EASs need to perform application context transfer together.

The group of first target EASs includes a plurality of associated target EASs, and the plurality of associated target EASs are configured to serve the first application after application context transfer.

The source EES may determine at least one group of target EASs from the at least one target EAS based on the first information and the information about the at least one target EAS.

Specifically, the source EES may search the information about the at least one target EAS based on the first information, and determine, as first target EASs, target EASs whose EAS information includes the first information. For example, if identifiers of the source EASs in the first information include an EAS ID #1, an EAS ID #2, and an EAS ID #3, and identifiers of the EASs managed by the target EES include the EAS ID #1, the EAS ID #2, and the EAS ID #3, the target EES may determine, as first target EASs, EASs to which the EAS ID #1, the EAS ID #2, and the EAS ID #3 belong.

In addition, in this example, if a plurality of EASs are identified by the EAS ID #1, the EAS ID #2, and the EAS ID #3, the plurality of EASs may constitute a plurality of groups of second target EASs. For example, if EASs whose identifiers are the EAS ID #1 include EASs whose IP addresses are an IP #11 and an IP #12, EASs whose identifiers are the EAS ID #2 include EASs whose IP addresses are an IP #21 and an IP #22, and EASs whose identifiers are the EAS ID #3 include EASs whose IP addresses are an IP #31 and an IP #32, the at least one group of target EASs may include two groups of second target EASs, one group of second target EASs includes an EAS whose identifier is the EAS ID #1 and IP address is the IP #11, an EAS whose identifier is the EAS ID #2 and IP address is the IP #21, and an EAS whose identifier is the EAS ID #3 and IP address is the IP #31, and the other group of second target EASs includes an EAS whose identifier is the EAS ID #1 and IP address is the IP #12, an EAS whose identifier is the EAS ID #2 and IP address is the IP #22, and an EAS whose identifier is the EAS ID #3 and IP address is the IP #32.

If the source EES determines a plurality of groups of second target EASs from the at least one group of target EASs based on the first information, the source ESS may determine a group of second target EASs as a group of first target EASs based on service KPIs, loads of the target EESs, or other indicators.

In addition, in S607, when the EASs managed by the first target EES include only some EASs in the group of EASs in the first information (or do not include any EAS in the group of EASs, or do not include all EASs in the group of EASs in the first information), the source EES may send, to an EEC, information about the some EASs that are in the group of EASs and that are included in the EASs managed by the first target EES; the source EES may send error information to the source EEC, to indicate that no group of associated EASs meets the first information; or the source EES may send information to the EEC to indicate the EEC to reselect an EES. For example, in this case, the source EES may further send an EAS discovery failure indication to the EEC, to terminate the application context transfer process, in other words, skip performing a subsequent application context transfer process.

In addition, if associated EASs do not need to be located in a same EES, for example, to improve a success rate of application context transfer, one group of target EASs is managed by a plurality of target EESs. In this case, it may be understood that the first target EES is a plurality of first target EESs, EASs managed by any first target EES may include some EASs in the group of EASs, and the first source EES may use, as target EASs, EASs separately managed by the plurality of target EESs.

S608: The source EES sends an EAS discovery response to the group of source EASs, where the EAS discovery response includes information about the group of first target EASs.

Optionally, the information about the group of first target EASs includes identifiers and end point information of a plurality of associated target EASs, and the source EES may send information about a target EAS having a same identifier to each source EAS based on the identifiers of the source EASs and the identifiers of the target EASs in the group of first target EASs.

S608 is an optional step.

It may be further understood that S607 and S608 may alternatively be replaced with the following: The source EES sends an EAS discovery response to the source EAS, where the EAS discovery response includes the information about the at least one target EAS managed by the first target EES; and the source EAS determines a group of first target EASs based on the first information and the information about the at least one target EAS managed by the first target EES. For a manner of determining the group of first target EASs, refer to the descriptions in S607.

It may be understood that the procedure shown in FIG. 9A may be used as a possible implementation of the procedure shown in FIG. 5. S606 may be considered as a possible implementation of S201 shown in FIG. 5, and S607 may be considered as a possible implementation of S202 shown in FIG. 5.

Based on the foregoing procedures shown in FIG. 8 and FIG. 9A, the source EES may obtain the information about the target EASs based on the first information in the application context transfer process, so that a success rate of application context transfer can be improved. It should be understood that some steps in the procedures shown in FIG. 8 and FIG. 9A may be replaced with each other for implementation. For example, S502 to S504 in FIG. 8 and SS602 to S604 in FIG. 9A may be replaced with each other.

It should be understood that dashed lines in the procedure shown in FIG. 9A represent optional steps.

It may be further understood that some procedures in FIG. 8 and FIG. 9A may be used in combination. For example, S605 to S607 are performed after S502 to S504. Alternatively, S505 to S507 may be performed after S602 to S604.

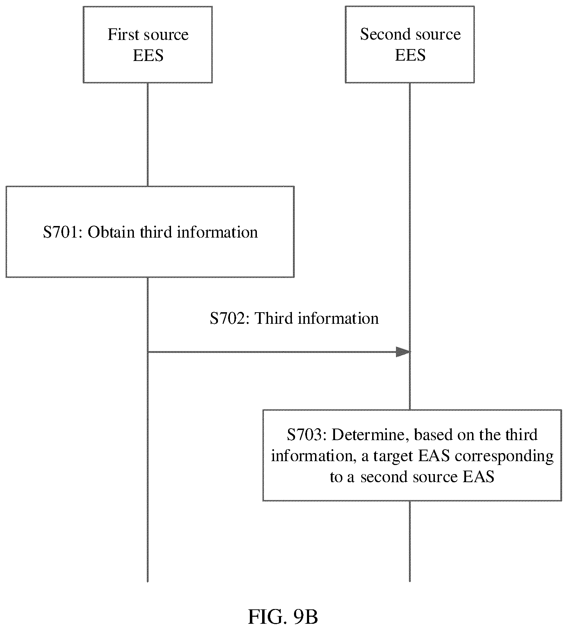

As shown in FIG. 9B, an embodiment of this application provides another communication method, to implement application context transfer when a first source EES and a second source EES separately manage different EASs in a group of EASs. The method may be performed by the first source EES, the second source EES, or the like. The first source EES and the second source EES each may be used as a source EES, to be specific, may be configured to perform the actions performed by the source EES in this application, for example, the actions of the source EES in FIG. 4 to FIG. 9A.

As shown in FIG. 9B, the method may include the following steps.

S701: The first source EES obtains third information, where EASs managed by the first source EES include a first source EAS, the first source EAS and a second source EAS are included in a group of EASs, and the second source EAS is managed by the second source EES. The third information may be used by the second source EES to determine a target EAS corresponding to the second source EAS.

For a definition of the group of EASs, refer to the descriptions in this application. For example, the group of EASs includes a plurality of associated EASs. To be specific, the first source EAS and the second source EAS are associated EASs, or the first source EAS and the second source EAS are EASs serving a same application. The first source EAS and the second source EAS are managed by different EESs (the first source EES and the second source EES).

Optionally, in examples of this application, the first source EES may receive information about the second source EES and/or information about the second source EAS from a terminal device; and/or the second source EES may receive information about the first source EES and/or information about the first source EAS from the terminal device. After accessing the first source EAS and the second source EAS, the terminal device (for example, an EEC) may send the information about the second source EES and/or the information about the second source EAS to the first source EES, and/or send the information about the first source EES and/or the information about the first source EAS to the second source EES. Therefore, the first source EES and the second source EES learn of information about each other, so that the first source EES and the second source EES can perform application context transfer together.

Alternatively, the terminal device may report information about associated EESs to some source EESs (for example, one source EES) in a group of source EESs, so that the source EES can learn of information about another associated EES.

For example, the terminal device may access the first source EAS of the first source EES and the second source EAS of the second source EES with reference to the procedure shown in FIG. 6, to obtain services of the first source EAS and the second source EAS. According to S307 shown in FIG. 6, after accessing the first source EES and/or the second source EES, the EEC may send the information about the second source EES and/or the information about the second source EAS to the first source EES, and/or send the information about the first source EES and/or the information about the first source EAS to the second source EAS.

Optionally, the terminal device may send an explicit indication to the first source EES and/or the second source EES, to indicate that the EASs managed by the first source EES and EASs managed by the second source EES need to perform application context transfer together, indicate that the first source EES is associated with the second source EES, indicate that the first source EAS and the second source EAS are to perform application context transfer together, indicate that the first source EAS is associated with the second source EAS, or indicate that the EASs managed by the first source EES and EASs managed by the second source EES are included in a group of EASs.

For example, for formats of the EES information, the EAS information, and the information explicitly indicating association between the EESs that are sent by the EEC, refer to Table 5.

As a specific example, the first source EES is an EES #1, and the second source EES is an EES #2. The EEC may send information shown in Table 6-1 to the EES #1, to indicate the associated EES #2, and the EEC may send information shown in Table 6-2 to the EES #2, to indicate the associated EES #1.

**Table 6-1**

| | |
|---|---|
| Information about an associated EES #2 | Identifier or address of the EES #2 |
| > First information | Including, for example, an associated EAS list, an EAS list, or other information indicating a group of associated EASs (including, for example, information about a first source EAS and information about a second source EAS) |
| > > Information about an application for which application context transfer needs to be performed together | For example, an AC ID or EAS information of the application for which application context transfer needs to be performed together (for example, the information about the second source EAS) |

After receiving the information, the EES #1 may store the information about the associated EES #2, to determine, when the first source EAS needs to perform application context transfer, that the EES #2 (or the second EAS) needs to perform application context transfer together.

**Table 6-2**

| | |
|---|---|
| Information about an associated EES #1 | Identifier or address of the EES #1 |
| > First information | Including, for example, an associated EAS list, an EAS list, or other information indicating a group of associated EASs (including, for example, information about a first source EAS and information about a second source EAS) |
| > > Information about an application for which application context transfer needs to be performed together | For example, an AC ID or EAS information of the application for which application context transfer needs to be performed together (for example, the information about the first source EAS) |

After receiving the information, the EES #2 may store the information about the associated EES #1, to determine, when the second source EAS needs to perform application context transfer, that the EES #1 (or the first EAS) needs to perform application context transfer together.

The following describes the third information.

Example 1: The third information includes information about a target EES. EASs managed by the target EES include the target EAS corresponding to the second source EAS. Therefore, the target EES may also be referred to as a target EES corresponding to the second source EES (or a target EES corresponding to the second source EAS).

In the example 1, a manner in which the first source EES obtains the information about the target EES is, for example, that the first source EES obtains the information about the target EES by using an EES discovery process. The target EES herein includes the target EES corresponding to the second source EES. For example, the first source EES sends an EES discovery request to an ECS, where the EES discovery request includes the information about the second source EAS (for example, an identifier and/or an address of the second source EAS), and is used to request the information about the target EES. It should be understood that the EES discovery request and a target EES retrieve request in this application may be replaced with each other.

Optionally, the first source EES may send the first information, namely, information about the group of EASs, to the ECS, to obtain a target EES corresponding to the first source EES (or a target EES corresponding to the first source EAS) and the target EES corresponding to the second source EES (or the target EES corresponding to the second source EAS). It may be understood that the target EES corresponding to the first source EES may be a target EES determined based on the first source EAS, and the target EES corresponding to the second source EES may be a target EES determined based on the second source EAS.

For another example, the first source EES may receive, from the ECS, information about at least one EES and information about EASs managed by the at least one EES, and determine the target EES from the at least one EES based on the first information, the information about the at least one EES, and the information about the EASs managed by the at least one EES. In the at least one EES, an EES whose managed EASs include the first source EAS may be used as the target EES corresponding to the first source EES, and an EES whose managed EASs include the second source EAS may be used as the target EES corresponding to the second source EES.

Example 2: The third information includes information about EASs managed by at least one EES, for example, information about EASs managed by a target EES.

The information about the EASs managed by the target EES may be from an ECS.

For example, the first source EES may send an EES discovery request to the ECS, where the EES discovery request may include the information about the second source EAS, for example, an identifier and/or an address of the second source EAS. In response to the EES discovery request, the ECS may determine, from the at least one EES based on information about the at least one EES and the information about the EASs managed by the at least one EES, an EES whose managed EASs include the second source EAS, and sends the information about the EASs managed by the at least one EES to the first source EES.

In addition, the first source EES may alternatively receive, from the ECS, information about the at least one EES and the information about the EASs managed by the at least one EES, and determine, from the at least one EES based on the information about the second source EAS, the information about the at least one EES, and the information about the EASs managed by the at least one EES, an EES whose managed EASs include the second source EAS, and sends the information about the EASs managed by the at least one EES to the first source EES. The at least one EES may be an EES corresponding to the ECS.

In addition, in the example 2, the following case is not excluded: After receiving, from the ECS, the information about the at least one EES and the information about the EASs managed by the at least one EES, the first source EES sends the information about the at least one EES and the information about the EASs managed by the at least one EES to the second source EES as the third information (or information about the target EES and the EASs managed by the target EES).

In this application, the information about the EASs managed by the EES may include identifiers, addresses, types, or other information of the EASs.

Example 3: The third information includes information about at least one data center.

For example, the third information includes information about a data center of a target EES, for example, an EDN identifier and/or a DNAI identifier of the target EES. The target EES is a target EES corresponding to the first source EES.

The first source EES may obtain the target EES corresponding to the first source EES, and then determine the information about the data center of the target EES. For example, the first source EES may query the information about the data center of the target EES from an ECS or another network element.

In addition, the information about the data center of the target EES may alternatively be received by the first source EES from the ECS after the first source EES sends an EES discovery request to the ECS.

Optionally, the EES may send the information about the data center of the EES to the ECS in a process of registration with the ECS. Correspondingly, the ECS may send the information about the data center of the EES after receiving the EES discovery request.

It may be understood that, in the example 3, a manner in which the first source EES determines the target EES is, for example, that the first source EES sends an EES discovery request to the ECS, where the EES discovery request may include the information about the first source EAS. Correspondingly, the first source EES may receive information about at least one target EES from the ECS, to determine a target EES as the target EES corresponding to the first source EES. Optionally, the information about the at least one target EES may include information about a data center of the at least one EES. Alternatively, after determining the target EES, the first source EES may query the information about the data center of the target EES from the ECS or another network element.

For another example, the third information may include information about a data center in which at least one EES is located, and the at least one EES may include a target EES. Alternatively, the third information may include the information about the at least one data center. After receiving the information about the data center in which the at least one EES is located, the first source EES may determine a data center from the at least one data center. Optionally, after a data center is determined, or when the third information includes information about a data center, the first source EES may determine, based on information about an EES corresponding to the data center, the target EES from the at least one EES corresponding to the data center. Alternatively, the first source EES may determine the target EES from EESs corresponding to one or more data centers.

Example 4: The third information includes information about the target EAS corresponding to the second source EAS.

In the example 4, the first source EES may determine, based on the information about the second source EAS, the target EAS corresponding to the second source EAS.

For example, the first source EES may send an EAS discovery request to a target EES corresponding to the second source EES, where the discovery request may include the information about the second source EAS; and the first source EES may further receive information about a target EAS from the target EES, where the target EAS is the target EAS corresponding to the second source EAS.

Alternatively, the first source EES may receive, from a target EES corresponding to the second source EES, information about EASs managed by the target EES, and determine, based on the information about the second source EAS, the target EAS corresponding to the second source EAS from the EASs managed by the target EES. For example, after determining the target EAS corresponding to the second source EAS, the first source EES requests the information about the EASs managed by the target EES from the target EES, to obtain the EASs managed by the target EES.

It should be understood that, in the example 4, for a manner in which the first source EES determines the target EAS corresponding to the second source EAS, refer to the descriptions in the example 1.

It may be understood that the foregoing example 1 to example 4 are merely examples for description. In actual application, the third information may include a combination of at least two pieces of information in the example 1 to the example 4, or may include only one piece of information in the example 1 to the example 4.

S702: The first source EES sends the third information to the second source EES, where the EASs managed by the second source EES include the second source EAS.

Correspondingly, the second source EES receives the third information. It may be understood that the third information may be used by the second source EES to perform EAS discovery, or the second source EES may perform EAS discovery based on the third information, to determine the target EAS corresponding to the second source EAS. The third information may be further used for EES discovery. For example, when the third information includes the information about the data center of the target EES (for example, the EDN identifier and/or the DNAI identifier), the second EES may perform EES discovery, to be specific, discover, based on the data center in the third information, a target EES consistent with the data center, where information about a data center to which the target EES belongs is consistent with the information about the data center in the third information.

S703: The second source EES determines, based on the third information, the target EAS corresponding to the second source EAS. The second source EES may determine the target EAS in different manners based on different content included in the third information. The following separately provides descriptions for a type of the third information.

Corresponding to the foregoing example 1, the third information includes the information about the target EES.

As a possible implementation, when the third information includes the information about the target EES, the second source EES may send an EAS discovery request to the target EES corresponding to the second source EES, where the discovery request may include the information about the second source EAS; and the second source EES may further receive the information about the target EAS from the target EES, where the target EAS is the target EAS corresponding to the second source EAS.

Alternatively, when the third information includes the information about the target EES, the second source EES may receive the information about the EASs managed by the target EES from the target EES corresponding to the second source EES, and determine, based on the information about the second source EAS, the target EAS corresponding to the second source EAS from the EASs managed by the target EES. For example, the second source EES may request the information about the EASs managed by the target EES from the target EES, to obtain the EASs managed by the target EES.

Therefore, based on the example 1, EAS discovery is actually performed by the first source EES instead of the second source EES.

Corresponding to the foregoing example 2, if the third information includes the information about the EASs managed by the target EES, the second source EES may determine, based on the information about the second source EAS and the information about the EASs managed by the target EES, the target EES corresponding to the second source EES and the target EAS corresponding to the second source EAS.

For example, referring to the descriptions in S202 and S604, the second source EES may use, as the target EES, an EES whose identifiers of managed EASs include the identifier of the second source EAS. In addition, the second source EES may use, as the target EAS, an EAS that is in the EASs managed by the EES and whose identifier is the same as the identifier of the second source EAS.

Corresponding to the foregoing example 3, the third information includes the information about the data center of the target EES corresponding to the first source EES.

The second source EES may send an EES discovery request to the ECS, where the EES discovery request may carry the information about the data center of the target EES corresponding to the first source EES. It may be understood that the information about the data center of the target EES corresponding to the first source EES may be information about data centers of one or more EESs. This is not specifically limited. If information about a plurality of data centers is different, in other words, a plurality of EESs are located in different data centers, the second source EES may select a data center from the plurality of data centers, and use the EES discovery request to carry information about an EES in the corresponding data center. In this application, a manner of selecting a data center is, for example, selecting a data center based on a location or a load of the data center. This application makes no specific requirement.

Alternatively, the third information may include the information about the data center in which the at least one EES is located, and the at least one EES may include the target EES. Alternatively, the third information may include the information about the at least one data center. After receiving the information about the data center in which the at least one EES is located, the second source EES may determine a data center from the at least one data center. Optionally, after a data center is determined, or when the third information includes information about a data center, the second source EES may determine, based on information about an EES corresponding to the data center, the target EES from the at least one EES corresponding to the data center. Alternatively, the second source EES may determine the target EES from EESs corresponding to one or more data centers. After determining the target EES, optionally, the second source EES may determine the target EAS from the EASs managed by the target EES, or the second source EES may request the information about the target EAS from the target EES.

Optionally, the EES discovery request may further include the information about the second source EAS. Correspondingly, the second source EES may receive, from the ECS, information about the target EES corresponding to the second source EES, where a data center in which the target EES is located is the same as the data center in which the target EES corresponding to the first source EES is located. Therefore, based on the example 3, although the first source EES and the second source EES separately perform target EES discovery, it may be ensured, by using the third information transmitted between the first source EES and the second source EES, that target EESs separately discovered by the first source EES and the second source EES are located in a same data center, thereby improving a success rate of application context transfer.

Corresponding to the foregoing example 4, the third information includes the information about the target EAS corresponding to the second source EAS, for example, an EAS identifier and/or address.

The second source EES may determine the target EAS by using the third information. Therefore, the second source EES does not need to perform EAS discovery, and the second source EES may send the information about the target EAS to the second source EAS, so that the second source EAS can perform application context transfer based on the information about the target EAS. Therefore, based on the example 4, EAS discovery is actually performed by the first source EES instead of the second source EES.

It may be understood that, when the third information includes the information about the target EES corresponding to the second source EES and the information about the target EAS corresponding to the second source EAS, the first source EES performs an EES discovery process and an EAS discovery process that originally need to be performed by the second source EES in an application context transfer process. In addition, when the third information includes only the information about the target EES corresponding to the second source EES, the second source EES still needs to perform an EAS discovery process. When the third information includes only the information about the data center of the target EES corresponding to the first source EES, the second source EES still needs to perform EES discovery and EAS discovery. In this case, the second source EES may perform EES discovery in the data center of the target EES corresponding to the first source EES, to improve a success rate of application context transfer. It may be understood that when the third information includes information about data centers of a plurality of EESs, the second source EES may select a data center from the plurality of data centers, use an EES in the corresponding data center as the target EES, and may further perform EAS discovery based on the target EES.

In addition, it may be further understood that, in addition to sending the third information to the second source EES, the first source EES may further perform EES discovery and EAS discovery, to determine the target EES corresponding to the first source EES, the target EES corresponding to the second source EES, and the target EAS corresponding to the second source EAS. The target EES corresponding to the first source EES and the target EES corresponding to the second source EES may be located in a same data center, to improve a success rate of application context switching.

Optionally, in the embodiment shown in FIG. 9B, the first source EES and the second source EES each may be used as an EES initiating application context transfer, or the first source EAS and the second source EAS each may be used as an EAS initiating application context transfer. In other words, application context transfer may be triggered by the first source EES, the second source EES, the first source EAS, or the second source EAS. Alternatively, the first source EES, the second source EES, the first source EAS, or the second source EAS may detect an ACR event, or the first source EES, the second source EES, the first source EAS, or the second source EAS determines that context transfer needs to be performed.

For example, if the second source ESS or the second source EAS initiates application context transfer, before S701, the second source EES may further send fourth information to the first source EES. The fourth information may indicate that an ACR event is detected, or the fourth information may be used to request the first source EES to discover the target EES and/or the target EAS, or the fourth information may indicate that an ACR event is detected. Correspondingly, the first source EES may perform S701 after receiving the fourth information. For example, the fourth information may be sent by the second source EES after the second source EES determines that the ACR event is detected or determines that context transfer needs to be performed. Alternatively, the fourth information may be sent by the second source EAS to the second source EES after the second source EAS detects the ACR event or determines that context transfer needs to be performed. Alternatively, the fourth information may be sent by the second source EES after the second source EES receives an EAS discovery request from the second source EAS, and the EAS discovery request may be sent by the second source EAS after the second source EAS detects the ACR event or determines that context transfer needs to be performed.

For another example, if the first source ESS or the first source EAS initiates application context transfer, the first source EES may perform S701. For example, S701 may be performed by the first source EES after the first source EES determines that the ACR event is detected or determines that context transfer needs to be performed. Alternatively, S701 may be performed by the first source EES after the first source EES receives an EAS discovery request from the first source EAS, and the EAS discovery request may be sent by the first source EAS after the first source EAS detects the ACR event or determines that context transfer needs to be performed. Alternatively, after the first EAS detects the ACR event, the first EAS sends an ACR event message to the first source EES, and the first source EES may perform S701 after receiving the ACR event message. Alternatively, after determining the ACR event, the first source EAS may send ACR execution information to the first source EES, and the first source EES may perform S701 after receiving the ACR execution information.

Optionally, the first source EES may send response information corresponding to the fourth information to the second source EES.

Optionally, the third information may be request information, for example, an EAS discovery request, and the fourth information may be response information corresponding to the third information.

In addition, optionally, to prevent the first source EES and the second source EES from repeatedly initiating application context transfer, in the example shown in FIG. 9B, the first source EES may further send fifth information to the second source EES, to indicate that the first source EES performs target EES discovery and/or target EAS discovery, indicate the second source EES not to perform target EES discovery and/or target EAS discovery, or indicate the second source EES to suspend target EES discovery and/or target EAS discovery. The fifth information may include information about an EAS initiating application context transfer or information about a group of EASs, or indicate that the ACR event is detected or determine that context transfer needs to be performed.

For example, the fifth information may be sent by the first source EES after the first source EES determines that the ACR event is detected or determines that context transfer needs to be performed. Alternatively, the fifth information may be sent by the first source EAS to the first source EES after the first source EAS detects the ACR event or determines that context transfer needs to be performed. Alternatively, the fifth information may be sent by the first source EES after the first source EES receives an EAS discovery request from the first source EAS, and the EAS discovery request may be sent by the first source EAS after the first source EAS detects the ACR event or determines that context transfer needs to be performed.

Optionally, the second source EES may send response information corresponding to the fifth information to the first source EES.

A manner in which EESs subscribe to information about EASs managed by the EESs from each other is described herein. It may be understood that the EESs may learn of at least one of ACR event information, target EES information, or target EAS information in an associated EAS scenario from each other through information subscription, to implement steps in corresponding embodiments of this application, thereby improving a success rate of application context transfer of a group of EASs.

For example, an EES #1 performs subscription from an EES #2. The EES #1 and the EES #2 are EESs associated with each other. For example, the EES #1 and the EES #2 each are a source EES. The EES #1 may send a subscription request to the EES #2. The subscription request may be used to subscribe to an associated EES (for example, a target EES) and/or an associated EAS (for example, a target EAS).

Optionally, the subscription request may indicate at least one of a subscription event and/or notification content.

The subscription event is an event condition that is met when the EES #2 sends subscribed content to the EES #1. For example, the event condition includes at least one of detecting an ACR event, discovering a target EES, or discovering a target EAS.

For example, the ACR event is as follows: When an EAS managed by the EES #2 needs to perform application context transfer, the EES #2 detects that the EAS is one of associated EASs, and the EES #2 determines, depending on whether another EAS needs to perform transfer together, whether to notify another associated EES of the ACR event, to trigger the associated EAS and/or EES to perform application context transfer. In this case, the EES #2 may notify the another associated EES that there is an ACR requirement.

The target EES discovery event means that after the EES #1 subscribes to the foregoing information from the EES #2, when the EES #2 detects an ACR event, and the EES #2 discovers a target EES for an EAS in the group or discovers a corresponding target EES for an EAS in another associated EES, the EES #2 may send a target EES discovery result, such as address information of the target EES corresponding to the EES #2, to a corresponding associated EES (including but not limited to the EES #1). Alternatively, the EES #2 may send information about all target EESs to the associated EES.

The target EAS discovery event means that after the EES #1 subscribes to the foregoing information from the EES #2, when the EES #2 detects an ACR event, and the EES #2 discovers a target EES and/or a target EAS for an EAS in the group or discovers a corresponding target EAS for an EAS in another associated EES, the EES #2 may send a target EAS discovery result, such as address information of the target EAS corresponding to the associated EAS in the EES #2, to a corresponding associated EES (including but not limited to the EES #1). Alternatively, the EES #2 may send information about all target EASs to the associated EES.

In addition, an EAS may subscribe to the foregoing information from an EES. For example, in the subscription process, the EES #1 may be replaced with an EAS, for example, a source EAS. For example, in this case, the ACR event is as follows: When an EAS managed by the EES #1 needs to perform application context transfer, the EAS detects that the EAS is one of associated EASs, and the EAS determines, depending on whether another EAS needs to perform transfer together, whether to notify another associated EES of the ACR event, to trigger an associated EAS and/or the associated EES to perform application context transfer. In this case, the EAS or the EES #1 managing the EAS may notify the another associated EES that there is an ACR requirement. The target EES discovery event and the target EAS discovery event may be implemented through reference, and details are not described.

The notification content is content carried in a notification sent by the EES #2 to the EES #1 based on the subscription request. For example, the notification content includes at least one of information indicating that an ACR event is detected, target EES information, or target EAS information.

After receiving the subscription request, the EES #2 may send response information to the EES #1, to indicate that subscription succeeds or fails.

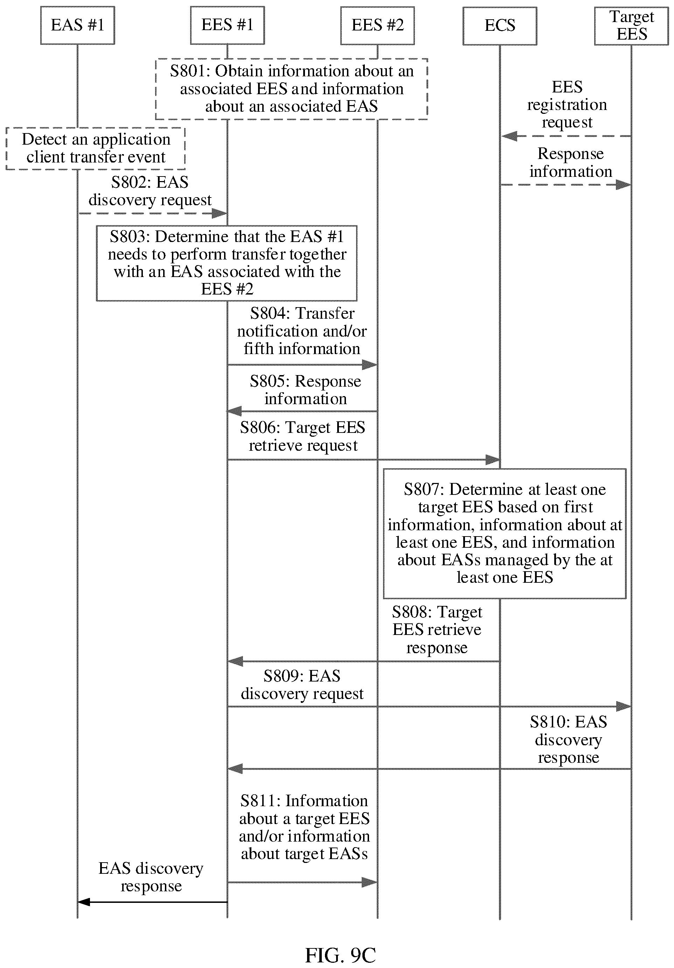

Optionally, after an ACR event occurs (for example, the EES #2 detects the ACR event or is notified that the ACR event is detected), the EES #2 may send a notification message to the EES #1, to indicate that the ACR event is detected. For example, in a procedure shown in FIG. 9C, S801 may be replaced with the following: An EES #1 sends a subscription request to an EES #2. Optionally, the EES #2 sends response information to the EES #1, to indicate that subscription succeeds. Further, if the EES #2 detects an ACR event, S804 and S805 may be replaced with the following: The EES #2 sends a notification message to the EES #1, to indicate that the ACR event is detected. For another example, in FIG. 9C, the EES #1 may alternatively be replaced with the EES #2 in actions of S806 to S808. To be specific, the EES #2 sends a target EES retrieve request to an ECS; and after the ECS determines at least one target EES, the ECS sends a target EES retrieve response to the EES #2, where the target EES retrieve response may carry information about the at least one target EES. Further, optionally, the EES #2 may send a notification message to the EES #1, to notify the information about the at least one target EES. Likewise, in FIG. 9C, actions of S809 and S810 may also be implemented by the EES #2, and after obtaining information about at least one target EAS in S801, the EES #2 may send the information about the at least one target EAS to the EES #1 by using a notification message.

It may be understood that because the EES #1 sends the subscription request to the EES #2, one or more of actions of ACR event detection, EES discovery, or EAS discovery performed by the EES #1 in another procedure in this embodiment of this application may alternatively be replaced with being performed by the EES #2, and the EES #2 notifies the EES #1 of an ACR event detection result, an EES discovery result, or an EAS discovery result by using a notification message.

The following describes, with reference to FIG. 9C to FIG. 9J, a communication method provided in an embodiment of this application when a first source EES and a second source EES separately manage different EASs in a group of EASs. In examples shown in FIG. 9C to FIG. 9J, an EAS #1 (which may also be referred to as an S-EAS #1), an EAS #2 (which may also be referred to as an S-EAS #2), an EAS #3 (which may also be referred to as an S-EAS #3), and an EAS #4 (which may also be referred to as an S-EAS #4) all provide services for one AC of an EEC, in other words, the EAS #1, the EAS #2, the EAS #3, and the EAS #4 are a group of EASs, or the EAS #1, the EAS #2, the EAS #3, and the EAS #4 are associated EASs. The EAS #1 and the EAS #2 are managed by an EES #1 (which may also be referred to as an S-EES #1), and the EAS #3 and the EAS #4 are managed by an EES #2 (which may also be referred to as an S-EES #2). Therefore, the EES #1 and the EES #2 are associated ESSs.

As shown in FIG. 9C, a communication method provided in an embodiment of this application may include the following steps. In an example shown in FIG. 9C, third information includes the information shown in the example 1 and the information shown in the example 4, the EAS #1 initiates application context transfer, and an ECS selects a target EES. It may be understood that, in an example shown in FIG. 9C, the EES #1 corresponds to the first source EES in FIG. 9B, the EAS #1 and the EAS #2 correspond to the first source EAS in FIG. 9B, the EES #2 corresponds to the second source EES in FIG. 9B, and the EAS #3 and the EAS #4 correspond to the second source EAS in FIG. 9B.

For example, a procedure shown in FIG. 9C may include steps shown in S801 to S811.

S801: The EES #1 and the EES #2 each obtain information about an associated EES and information about an associated EAS.

The EES #1 and/or the EES #2 may each receive the information about the associated EES and the information about the associated EAS from the EEC. Therefore, the EES #1 and/or the EES #2 may learn that the EAS #1, the EAS #2, the EAS #3, and the EAS #4 are associated EASs. For example, the EES #1 and/or the EES #2 each receive, from the EEC, the information shown in Table 5, Table 6-1, or Table 6-2, to obtain the information about the associated EES and the information about the associated EAS.

For example, the EES #1 may obtain information about the EES #2, and obtain information about the EAS #3 and the EAS #4. The EES #2 may obtain information about the EES #1, and obtain information about the EAS #1 and the EAS #2.

S801 is an optional step.

Optionally, S801 may be replaced with the following: The EES #1 obtains information about an associated EES and information about an associated EAS.

S802: The EAS #1 sends an EAS discovery request to the EES #1.

The EAS discovery request may include an identifier of the EAS #1.

Optionally, the EAS discovery request may include first information. In this example, the first information may include information about the EAS #1, information about the EAS #2, information about the EAS #3, and information about the EAS #4. For the first information, refer to the format shown in Table 1 or Table 2. For example, as shown in Table 2, the first information may include information indicating that a plurality of EASs are associated.

If the EAS #1 does not serve a same AC with another EAS, the EAS #1 does not need to perform application context transfer together with the another EAS, or the EAS #1 may independently perform transfer. In this case, the EAS discovery request in S802 may not include the first information.

Optionally, the EAS discovery request may include the information about the associated EES and the information about the associated EAS. In this case, S801 may not be performed.

If the EES #1 initiates application context transfer, S802 is an optional step.

S803: The EES #1 determines that the EAS #1 needs to perform transfer together with an EAS associated with the EES #2.

In S803, the EES #1 may learn, based on the first information in S802 and/or the information about the associated EES and the information about the associated EAS from the EEC in S801, that the EAS #1 needs to perform transfer together with the EAS (the EAS #3 or the EAS #4) associated with the EES #2. For example, when the EAS discovery request in S802 includes the identifier of the EAS #1, and the information about the associated EES and the information about the associated EAS that are received by the EES #1 from the EEC indicate that the EAS #1 and the EAS #2 are associated with the EAS #3 and the EAS #4 in the EES #2, the first information in S802 is optional information in the EAS discovery request.

In addition, if the EES #1 determines that the EAS #1 can independently perform transfer, for example, the EES #1 does not receive the first information in S802, the EES #1 may perform EES discovery and/or EAS discovery in a manner of independently performing transfer for the EAS. This application makes no requirement for an EES discovery process and/or an EAS discovery process. For example, the EES #1 performs EES discovery and/or EAS discovery based on the information about the EAS #1.

Alternatively, if the EES #1 determines that the EAS #1 only needs to perform transfer together with an EAS managed by the EES #1, the EES #1 may perform S502 shown in FIG. 8, and subsequently perform application context transfer in the manner shown in FIG. 8; or the EES #1 may perform S602 shown in FIG. 9A, and subsequently perform application context transfer in the manner shown in FIG. 9A. In this case, the EES #1 performs EES discovery or EAS discovery based on EASs (for example, a plurality of EASs including the EAS #1) managed by the EES #1.

S804: The EES #1 sends a transfer notification and/or fifth information to the EES #2.

The transfer notification may be used to notify the EES #2 that application context transfer needs to be performed.

The transfer notification may include the information about the EAS #1, or include the first information, to indicate an EAS that needs to perform transfer.

Optionally, the transfer notification may include the fifth information, to indicate that the EES #1 performs target EES discovery and/or target EAS discovery, indicate the EES#2 not to perform target EES discovery and/or target EAS discovery, or indicate the EES#2 to suspend target

EES discovery and/or target EAS discovery.

S804 is an optional step.

Further optionally, in S804, after receiving the transfer notification and/or the fifth information, the EES #1 may determine whether to perform application context transfer.

S805: The EES #2 may send a response message to the EES #1.

The response information may be a success response or a failure response.

Optionally, the failure response may indicate that application context transfer is not to be performed. In this case, the response information may further include a failure cause.

S805 is an optional step.

Optionally, the transfer notification and/or the fifth information in S804 may be an application context transfer request, and the response message in S805 may be a response message corresponding to the application context transfer request.

S806: The EES #1 sends a target EES retrieve request to the ECS.

The target EES retrieve request includes the first information, or includes information about a group of EASs.

Further optionally, the target EES retrieve request may carry information indicating the ECS to select target EESs and/or target EASs for the group of EASs.

Optionally, the target EES retrieve request may further include the information about the EES #1 (for example, an identifier of the EES #1) and the information about the EES #2 (for example, an identifier of the EES #2).

S807: The ECS determines at least one target EES based on the first information, information about at least one EES, and information about EASs managed by the at least one EES.

The target EES may include a target EES corresponding to the EES #1 and a target EES corresponding to the EES #2.

Optionally, the target EES corresponding to the EES #1 and the target EES corresponding to the EES #2 may be a same EES, or the target EES corresponding to the EES #1 and the target EES corresponding to the EES #2 may be a plurality of different EESs.

For example, for a manner in which the ECS determines the target EES, refer to the descriptions of S305 in the procedure shown in FIG. 6 in this application. For example, the ECS determines, based on the first information, the information about the at least one EES, and the information about the EASs managed by the at least one EES, whether there is an EES whose managed EASs include the EAS #1, the EAS #2, the EAS #2, and the EAS #4, and uses the EES as a target EES. In this case, the target EES corresponds to the EES #1 and the EES #2.

If there is no EES whose managed EASs include the EAS #1, the EAS #2, the EAS #2, and the EAS #4, a plurality of EESs may be used as target EESs, where EASs managed by the plurality of EESs separately include some EASs in the EAS #1, the EAS #2, the EAS #2, and the EAS #4. For example, if EASs managed by an EES #3 include a target EAS corresponding to the EAS #1 and a target EAS corresponding to the EAS #2, and EASs managed by an EES #4 include a target EAS corresponding to the EAS #3 and a target EAS corresponding to the EAS #4, the EES #3 and the EES #4 may be used as target EESs. In this case, the EES #3 is the target EES corresponding to the EES #1, and the EES #4 is the target EES corresponding to the EES #2.

In addition, the following case is not excluded: The EES #1 corresponds to a plurality of target EESs. For example, when EASs managed by an EES #5 include a target EAS corresponding to the EAS #1, and EASs managed by an EES #6 include a target EAS corresponding to the EAS #2, the EES #5 and the EES #6 may be used as target EESs corresponding to the EES #1. Likewise, the target EES corresponding to the EES #2 may include one or more EESs.

Optionally, the information about the at least one EES and the information about the EASs managed by the at least one EES may be sent by EESs to the ECS by using EES registration requests in a process in which the EESs are registered with the ECS. Correspondingly, the ECS may send response information to the EES. The information about the EASs managed by the EES may include information about EASs registered with the EES, and may further include EAS information configured in EES profile information of the target EES. For details, refer to the descriptions of the information about the EASs managed by the EES in S102. Further optionally, the information about the EES may include at least one of an identifier or an address of the EES or information about a data center corresponding to the EES (for example, an EDN identifier and/or a DNAI identifier).

S808: The EES #1 receives a target EES retrieve response from the ECS.

The target EES retrieve response may include information about the at least one target EES.

Optionally, the target EES retrieve response may include an identifier or an address of the at least one target EES, information about EASs managed by the at least one target EES, or the like. In this application, the information about the at least one target EES may further include information about a source EES corresponding to the target EES, or include a correspondence between the target EES and the source EES.

Optionally, if the target EES includes a plurality of EESs, the ECS may further send second information to the source EES. The second information may indicate the EES #1 to send EAS discovery requests to the plurality of EESs. For example, the target EES retrieve response carries the second information, or the second information may be carried in other signaling.

For example, the target EES retrieve response may include correspondences between the target EESs and the target EASs. For example, the target EES retrieve response may include identifiers of the EASs managed by the target EES, to distinguish between the EASs associated with the target EES. If identifiers of EASs managed by a target EES include an identifier of an EAS managed by the EES #1, the target EES is a target EES corresponding to the EES #1. Likewise, if identifiers of EASs managed by a target EES include an identifier of an EAS managed by the EES #2, the target EES is a target EES corresponding to the EES #2.

Alternatively, S807 and S808 may be replaced with the following: The ECS sends a target EES retrieve response to the EES #1, where the target EES retrieve response includes information about EASs managed by at least one EES; and the EES #1 determines at least one target EES based on the first information and information about at least one target EAS managed by a first target EES. For a manner of determining the at least one target EES, refer to the descriptions of determining the at least one target EES by the ECS in S607.

S809: The EES #1 sends an EAS discovery request to the target EES, where the EAS discovery request may include the first information.

The target EES includes the target EES corresponding to the EES #1 and the target EES corresponding to the EES #2.

As shown in the example in S807, the target EES corresponding to the EES #2 may be the same as or different from the target EES corresponding to the EES #1. If the target EES corresponding to the EES #1 and the target EES corresponding to the EES #2 are a plurality of target EESs, the EES #1 may separately send EAS discovery requests to the plurality of target EESs.

It may be understood that the first information includes the information about the EAS #1, the EAS #2, the EAS #2, and the EAS #4. Therefore, the EAS discovery request may be used to request to discover EASs respectively corresponding to the EAS #1, the EAS #2, the EAS #2, and the EAS #4.

S810: The EES #1 receives an EAS discovery response from the target EES.

The EAS discovery response may include information about the target EASs.

For a process in which the target EES determines the target EASs, refer to the descriptions in this application, for example, refer to the descriptions in S506. Details are not described again.

It may be understood that the target EASs include the EASs respectively corresponding to the EAS #1, the EAS #2, the EAS #2, and the EAS #4.

Optionally, the EES #1 may further send information about the target EAS corresponding to the EAS #1 to the EAS #1, and send information about the target EAS corresponding to the EAS #2 to the EAS #2. For example, the EES #1 may send an EAS discovery response to each of the EAS #1 and/or the EAS #2, as described in S508.

S811: The EES #1 sends information about a target EES and/or information about target EASs to the EES #2.

The target EES is the target EES corresponding to the EES #2. The target EASs are the target EAS corresponding to the EAS #3 and the target EAS corresponding to the EAS #4.

For example, in the example in S807, the target EES corresponding to the EES #2 may be the same as or different from the target EES corresponding to the EES #1. In addition, the target EES corresponding to the EES #2 may include one or more EESs.

Optionally, the information about the target EES may include an identifier or an address of the EES, information about the EASs managed by the EES, or the like. The information about the target EASs may include identifiers and/or addresses of the EASs.

Based on S811, the EES #2 may obtain the information about the target EES and the information about the target EASs. Optionally, the EES #2 may further send information about the target EAS corresponding to the EAS #3 to the EAS #3, and send information about the target EAS corresponding to the EAS #4 to the EAS #4. For example, the EES #2 may send an EAS discovery response or another message to each of the EAS #3 and/or the EAS #4, as described in S508.

It may be understood that in FIG. 9C, the information about the target EES and the information about the target EASs that are sent by the EES #1 to the EES #2 in S811 respectively correspond to the example 1 and the example 4 of the third information in S701. Therefore, S811 may be used as an example of an implementation of S702. Correspondingly, S808 and S810 may be used as an example of an implementation of S701.

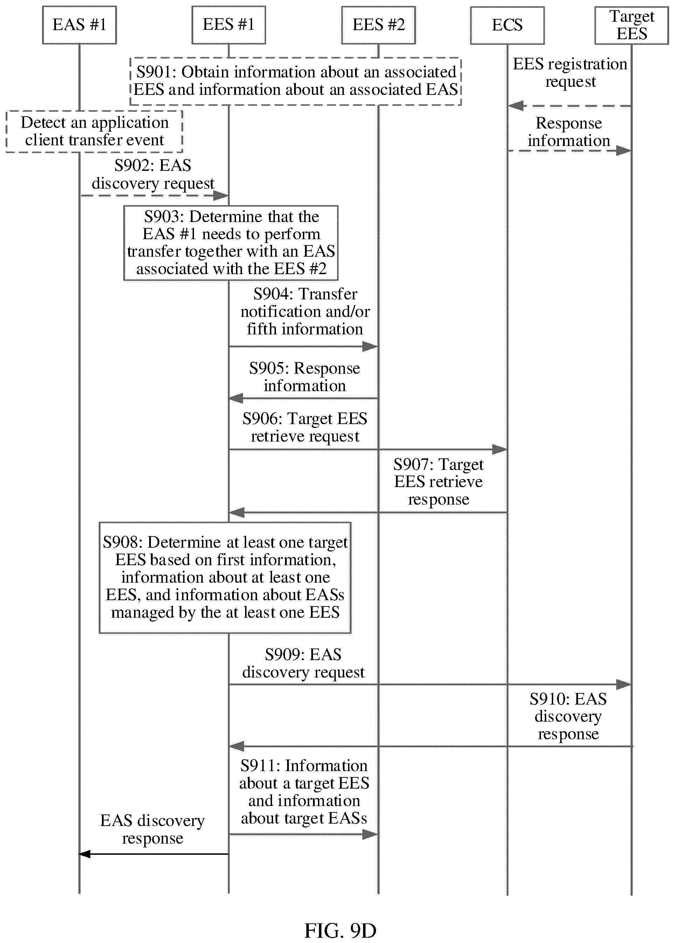

As shown in FIG. 9D, third information includes the information shown in the example 1 and the information shown in the example 4, the EAS #1 initiates application context transfer, and the EES #1 selects a target EES. It may be understood that, in an example shown in FIG. 9D, the EES #1 corresponds to the first source EES in FIG. 9B, the EAS #1 and the EAS #2 correspond to the first source EAS in FIG. 9B, the EES #2 corresponds to the second source EES in FIG. 9B, the EAS #3 and the EAS #4 correspond to the second source EAS in FIG. 9B.

For example, a procedure shown in FIG. 9D may include steps shown in S901 to S911.

For S901 to S905, respectively refer to S801 to S805. Details are not described again.

S906: The EES #1 sends a target EES retrieve request to an ECS.

Optionally, the target EES retrieve request may further include an identifier of the EES #1.

S907: The ECS sends a target EES retrieve response to the EES #1. The target EES retrieve response includes information about at least one EES, information about EASs managed by the at least one EES, information about a data center corresponding to the EES, and/or the like. The information about the data center corresponding to the EES is, for example, an EDN identifier or a DNAI identifier.

S908: The EES #1 determines at least one target EES based on the first information, the information about the at least one EES, and the information about the EASs managed by the at least one EES.

It may be understood that a manner in which the EES #1 determines the at least one target EES based on the first information, the information about the at least one EES, and the information about the EASs managed by the at least one EES is similar to the manner in which the ECS determines the at least one target EES based on the first information, the information about the at least one EES, and the information about the EASs managed by the at least one EES. Therefore, for S908, refer to the descriptions of S807.

The target EES may include a target EES corresponding to the EES #1 and a target EES corresponding to the EES #2. For example, if identifiers of EASs managed by a target EES include an identifier of an EAS managed by the EES #1, the target EES is a target EES corresponding to the EES #1. Likewise, if identifiers of EASs managed by a target EES include an identifier of an EAS managed by the EES #2, the target EES is a target EES corresponding to the EES #2.

Optionally, the information about the at least one EES includes information about a data center corresponding to the at least one EES. Therefore, in S908, the at least one target EES determined by the EES #1 may correspond to a same data center.

For example, in S908, the at least one target EES determined by the EES #1 includes at least one target EES corresponding to the EES #1 and at least one target EES corresponding to the EES #2, an EDN identifier of the at least one target EES corresponding to the EES #1 is the same as an EDN identifier of the at least one target EES corresponding to the EES #2; and/or a DNAI identifier of the at least one target EES corresponding to the EES #1 is the same as a DNAI identifier of the at least one target EES corresponding to the EES #2.

For S909 to S911, respectively refer to the descriptions of S809 to S811. Details are not described again.

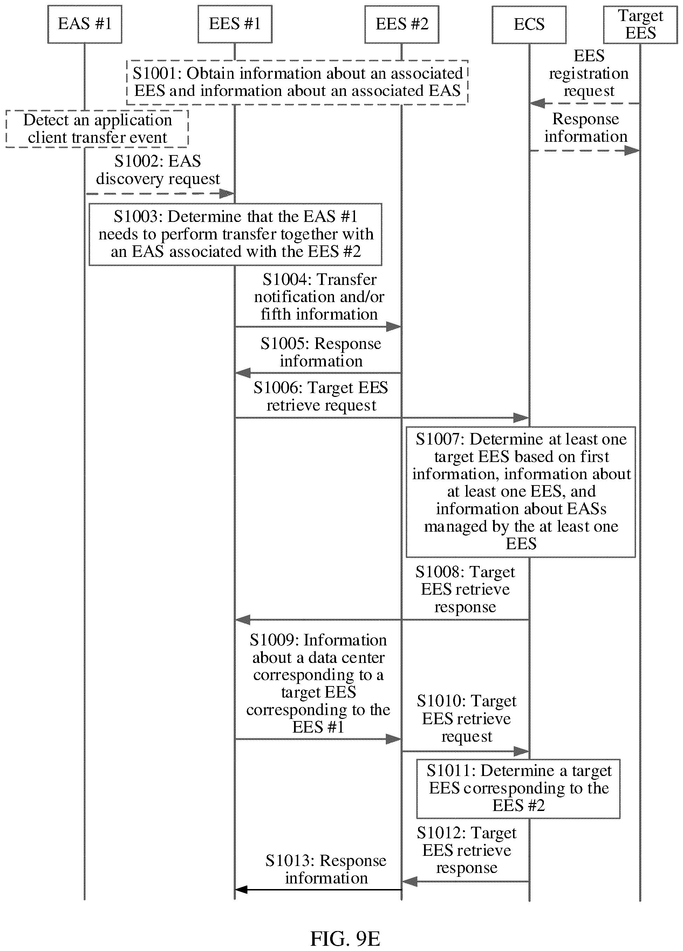

As shown in FIG. 9E, third information includes the information shown in the example 3, the EAS #1 initiates application context transfer, and an ECS selects a target EES corresponding to the EES #1. In addition, the ECS selects a target EES corresponding to the EES #2. It may be understood that, in an example shown in FIG. 9E, the EES #1 corresponds to the first source EES in FIG. 9B, the EAS #1 and the EAS #2 correspond to the first source EAS in FIG. 9B, the EES #2 corresponds to the second source EES in FIG. 9B, the EAS #3 and the EAS #4 correspond to the second source EAS in FIG. 9B.

For example, a procedure shown in FIG. 9E may include steps shown in S1001 to S1013.

For S 1001 to S 1005, respectively refer to S801 to S805. Details are not described again.

S1006 to S1008 may be respectively implemented with reference to S806 to S808. A difference lies in that the target EES retrieve request in S1006 may include only information about a first source EAS, for example, an identifier of the EAS #1 and an identifier of the EAS #2. Optionally, the target EES retrieve request may further include the first information, for example, an associated EAS list, to indicate an association relationship between the EAS #1, the EAS #2, the EAS #3, and the EAS #4. However, in S806, the first information is mandatory. Correspondingly, in S1007 and S1008, the target EES determined by the ECS is the target EES corresponding to the EES #1.

In addition, in S1008, the target EES retrieve response may carry information about a data center corresponding to the target EES corresponding to the EES #1, for example, an EDN identifier and/or a DNAI identifier.

It may be understood that the information about the data center corresponding to the EES may be included in an EES registration request sent by the EES to the ECS.

S1009: The EES #1 sends the information about the data center corresponding to the target EES corresponding to the EES #1 to the EES #2.

It may be understood that S1009 corresponds to S702, to be specific, the third information in S702 may include the information about the data center corresponding to the target EES corresponding to the EES #1 herein.

S 1010: The EES #2 sends a target EES retrieve request to the ECS.

The target EES retrieve request may include the information about the EAS #3 and the information about the EAS #4. Optionally, the target EES retrieve request further includes the information about the data center corresponding to the target EES corresponding to the EES #1. Based on the first information, the ECS may select one or more target EESs having the same data center information.

Optionally, the target EES retrieve request may further include the first information, for example, an associated EAS list, to indicate an association relationship between the EAS #1, the EAS #2, the EAS #3, and the EAS #4.

Optionally, if the EES #1 may send information about the target EES and information about a plurality of data centers corresponding to a plurality of target EESs, or send only information about a plurality of EDNs to the EES #2 in S1009, correspondingly, in S1010, the target EES retrieve request sent by the EES #2 to the ECS may include the information about the plurality of data centers, and the ECS selects information about a data center from the information about the plurality of data centers. Further optionally, the ECS may send the information about the selected data center to the EES #2, and optionally, may further with information about a target EES corresponding to the selected data center.

Alternatively, if the EES #1 may send information about a plurality of target EESs and information about a plurality of data centers corresponding to the plurality of target EESs, or send only information about a plurality of EDNs to the EES #2 in S1009, correspondingly, the EES #2 selects information about a data center from the information about the plurality of data centers, and uses the target EES retrieve request in S1010 to carry the information about the selected data center.

In addition, if the EES #1 sends information about a plurality of target EESs and information about a plurality of corresponding data centers to the EES #2 in S1009, the EES #2 may alternatively select information about a data center from the information about the plurality of data centers, and use, as the target EES, a target EES corresponding to the data center. In other words, in this case, S1010 to S1112 may be skipped, and S1013 may be performed.

S1011: The ECS determines, based on the information about the EAS #3, the information about the EAS #4, the information about the data center corresponding to the target EES corresponding to the EES #1, information about at least one EES, and information about EASs managed by the at least one EES, the target EES corresponding to the EES #2.

It may be understood that, in S1011, the target EES corresponding to the EES #2 is determined based on the information about the data center corresponding to the target EES corresponding to the EES #1, in other words, the data center corresponding to the target EES corresponding to the EES #1 is the same as a data center corresponding to the EES corresponding to the EES #2.

S1012: The ECS sends a target EES retrieve response to the EES #2, where the target EES retrieve response includes information about the target EES corresponding to the EES #2.

Optionally, the target EES retrieve response may further include the information about the EASs managed by the at least one EES and the information about the EES. Therefore, the EES #2 may determine the target EES based on the information about the EASs managed by the at least one EES. The information about the EES may include information about a data center of the EES.

S1013: Optionally, the EES #2 sends response information to the EES #1.

The response information corresponds to the information/signaling sent by the EES #1 to the EES #2 in S1009.

Optionally, the response information may further include the information about the data center selected by the EES #2. Optionally, the response information may further include information about the target EES corresponding to the selected data center.

The response information may be a success response or a failure response.

Optionally, the failure response may indicate that application context transfer is not to be performed. In this case, the response information may further include a failure cause. The failure cause may be that application context transfer is not to be performed. When the EES #2 determines not to perform application context transfer, steps S1010 to S1012 may be skipped. In addition, when determining not to perform application context transfer, the EES #1 may further notify the EAS #1 and the EAS #2 that application context transfer is not to be performed. Likewise, the EES #2 may further notify the EAS #3 and the EAS #4 that application context transfer is not to be performed.

Optionally, the EES #2 may determine, between S1004 and S1005 or between S1009 to S 1013, whether to perform ACR; or the EES #2 may notify the EAS #3 and/or the EAS #4, and the EAS #3 and/or the EAS #4 determine/determines whether to perform application context transfer.

It may be understood that, after S1013, the EES #1 and the EES #2 may separately perform EAS discovery based on respective corresponding target EESs. For an EAS discovery process, refer to the descriptions in this application. Details are not described herein.

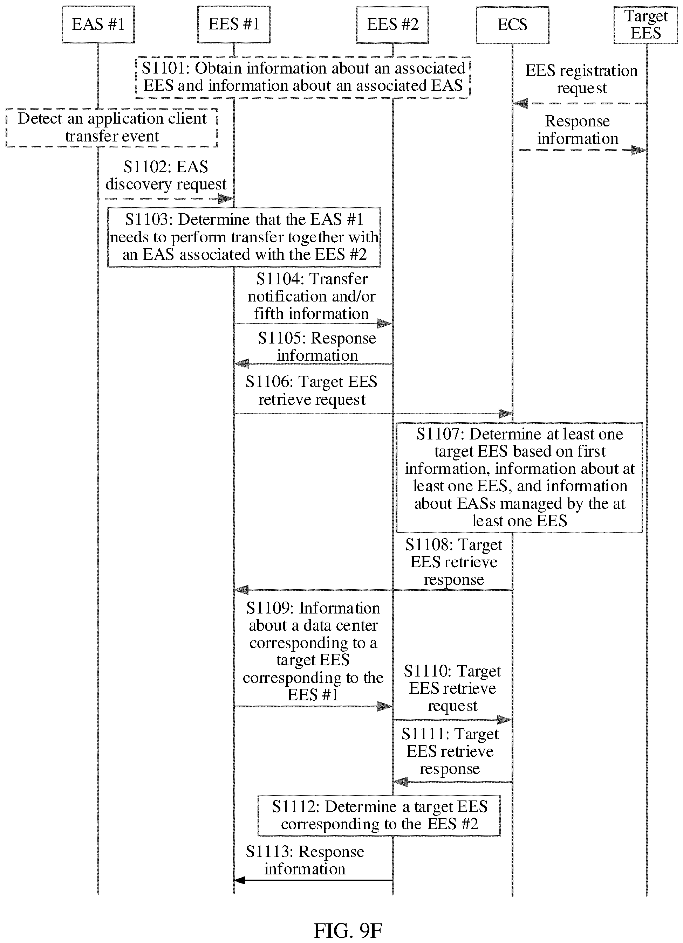

As shown in FIG. 9F, third information includes the information shown in the example 3, the EAS #1 initiates application context transfer, and an ECS selects a target EES corresponding to the EES #1. In addition, the EES #2 selects a target EES corresponding to the EES #2. It may be understood that, in an example shown in FIG. 9F, the EES #1 corresponds to the first source EES in FIG. 9B, the EAS #1 and the EAS #2 correspond to the first source EAS in FIG. 9B, the EES #2 corresponds to the second source EES in FIG. 9B, the EAS #3 and the EAS #4 correspond to the second source EAS in FIG. 9B.

For example, a procedure shown in FIG. 9F may include steps shown in S1101 to S1113.

For S1101 to S1109, respectively refer to S1001 to S1009.

S1110: The EES #2 sends a target EES retrieve request to the ECS.

The target EES retrieve request may include the information about the EAS #3 and the information about the EAS #4.

Optionally, the target EES retrieve request may further include the first information, for example, an associated EAS list, to indicate an association relationship between the EAS #1, the EAS #2, the EAS #3, and the EAS #4.

S 1111: The ECS sends a target EES retrieve response to the EES #2, where the target EES retrieve response includes information about at least one EES and information about EASs managed by the at least one EES.

The information about the EES may include information about a data center of the EES, for example, an EDN identifier or a DNAI identifier.

S1112: The EES #2 determines, based on the information about the EAS #3, the information about the EAS #4, the information about the data center corresponding to the target EES corresponding to the EES #1, the information about the at least one EES, and the information about the EASs managed by the at least one EES, the target EES corresponding to the EES #2.

It may be understood that, in S1112, the target EES corresponding to the EES #2 is determined based on the information about the data center corresponding to the target EES corresponding to the EES #1, in other words, the data center corresponding to the target EES corresponding to the EES #1 is the same as a data center corresponding to the EES corresponding to the EES #2.

S1111 and S1112 may alternatively be replaced with the following: The ECS determines, based on the information about the EAS #3, the information about the EAS #4, the information about the data center corresponding to the target EES corresponding to the EES #1, information about at least one EES, and information about EASs managed by the at least one EES, at least one target EES corresponding to the EES #2; and the ECS sends a target EES retrieve response to the EES #2, where the target EES retrieve response includes information about the at least one target EES corresponding to the EES #2.

Managed EASs in any target EES include an EAS having a same EAS ID as the EAS #3 and/or an EAS having a same EAS ID as the EAS #4.

In addition, the at least one target EES may be determined based on the information about the data center corresponding to the target EES corresponding to the EES #1, in other words, the data center corresponding to the target EES corresponding to the EES #1 is the same as a data center corresponding to the EES corresponding to the EES #2. Optionally, the information about the at least one target EES may include information about a data center of the target EES.

It can be learned that in S1112, the EES #2 may select, as the target EES corresponding to the EES #2, an EES whose data center is the same as the data center corresponding to the target

EES corresponding to the EES #1.

For S1113, refer to the descriptions of S1013.

It may be understood that, after S1113, the EES #1 and the EES #2 may separately perform EAS discovery based on respective corresponding target EESs. For an EAS discovery process, refer to the descriptions in this application. Details are not described herein. Optionally, after the EES #1 and the EES #2 each perform an EAS discovery process, the EES #1 and the EES #2 each send information about a target EAS to a source EAS.

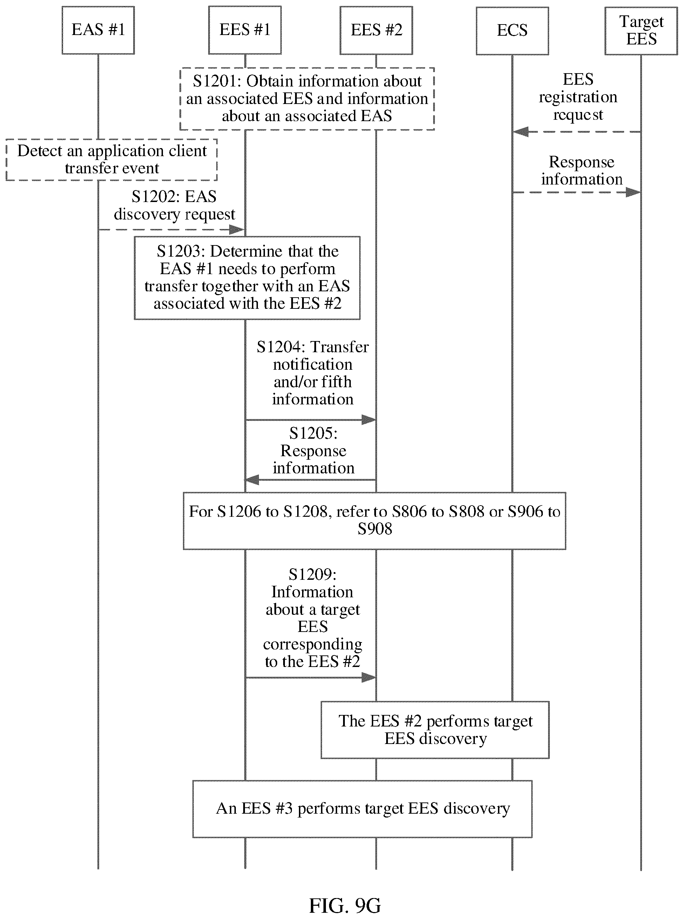

As shown in FIG. 9G, third information includes the information shown in the example 1, the EAS #1 initiates application context transfer, and the EES #1 selects a target EES corresponding to the EES #2. In addition, the EES #2 may further perform target EAS discovery. It may be understood that, in an example shown in FIG. 9G, the EES #1 corresponds to the first source EES in FIG. 9B, the EAS #1 and the EAS #2 correspond to the first source EAS in FIG. 9B, the EES #2 corresponds to the second source EES in FIG. 9B, the EAS #3 and the EAS #4 correspond to the second source EAS in FIG. 9B.

For example, a procedure shown in FIG. 9G may include steps shown in S1201 to S 1209.

For S1201 to S 1205, respectively refer to S801 to S805. Details are not described again.

For S1206 to S 1208, respectively refer to S806 to S808; or for S1206 to S 1208, refer to S906 to S908. Details are not described again.

S1209: The EES #1 sends information about the target EES corresponding to the EES #2 to the EES #2.

If the information that is about the target EES and that is sent by the EES #1 includes information about a plurality of EESs, optionally, the EES #2 may select a required target EES to perform EAS discovery, or after initiating EAS discovery to the plurality of target EESs, the EES #2 may select an EES and an EAS based on an EAS discovery result.

S 1209 may correspond to S702.

Optionally, the EES #1 may further indicate the EES #2 to initiate EAS discovery to the target EES corresponding to the EES #2.

Based on S1206 to S1208, the EES #1 may receive or determine target EESs respectively corresponding to the EES #1 and the EES #2. In addition, based on S1209, the EES #2 may obtain the information about the target EES corresponding to the EES #2. Therefore, the EES #1 and the EES #2 may separately initiate EAS discovery processes based on respective corresponding target EESs. For an EAS discovery process, refer to the descriptions in this application. Details are not described herein. Optionally, after the EES #1 and the EES #2 each perform an EAS discovery process, the EES #1 and the EES #2 each send information about a target EAS to a source EAS.

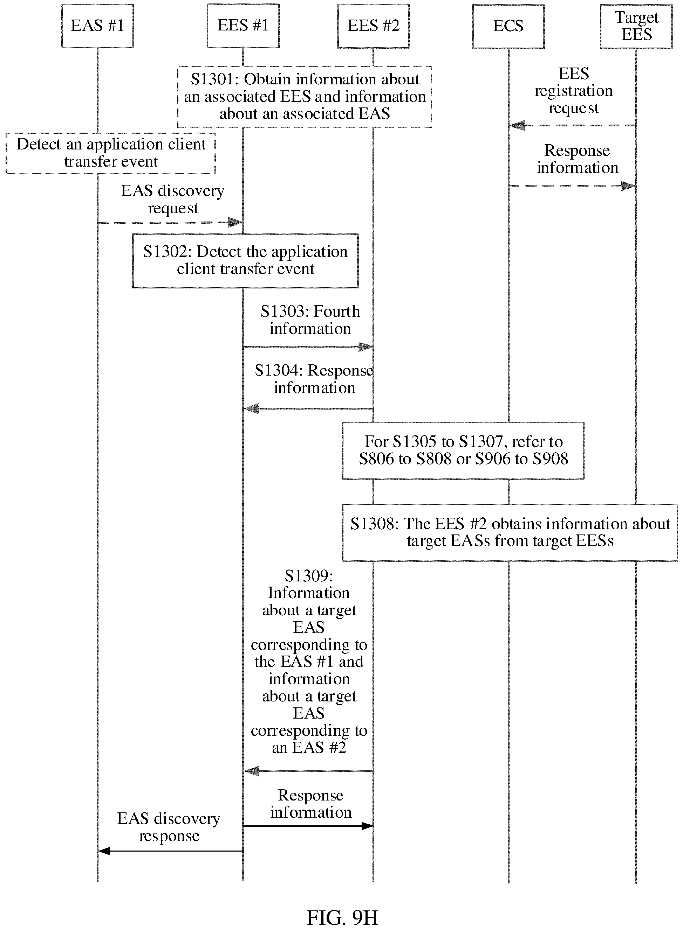

As shown in FIG. 9H, third information includes the information shown in the example 1 and the information shown in the example 4, the EES #1 initiates application context transfer, and the EES #2 selects a target EES corresponding to the EES #1. In addition, the EES #2 may further perform target EAS discovery. It may be understood that, in an example shown in FIG. 9H, the EES #2 corresponds to the first source EES in FIG. 9B, the EAS #3 and the EAS #4 correspond to the first source EAS in FIG. 9B, the EES #1 corresponds to the second source EES in FIG. 9B, and the EAS #1 and the EAS #2 correspond to the second source EAS in FIG. 9B.

For example, a procedure shown in FIG. 9H may include steps shown in S1301 to S 1309.

For S1301, refer to S801. Details are not described again.

S 1302: The EES #1 detects an ACR event.

Optionally, before S1302, the EAS #1 may send an EAS discovery request to the EES #1.

Optionally, the EAS discovery request may include first information. In this example, the first information may include information about the EAS #1, information about the EAS #2, information about the EAS #3, and information about the EAS #4. For the first information, refer to the format shown in Table 1 or Table 2. For example, as shown in Table 2, the first information may include information indicating that a plurality of EASs are associated.

S1303: The EES #1 sends fourth information to the EES #2.

The fourth information may indicate that the ACR event is detected. Optionally, the fourth information may indicate the EES #2 to perform EES discovery and/or EAS discovery.

For example, the fourth information may be sent by the EES #1 after the EES #1 determines that the ACR event is detected or determines that context transfer needs to be performed. Alternatively, the fourth information may be sent by the EES #1 to the second source EES after the EES #1 detects the ACR event or determines that context transfer needs to be performed. Alternatively, the fourth information may be sent by the EES #1 after the EES #1 receives EAS discovery requests/an EAS discovery request from the EAS #3 and/or the EAS #4, and the EAS discovery requests/EAS discovery request may be sent by the EAS #3 and/or the EAS #4 after the EAS #3 and/or the EAS #4 detect/detects the ACR event or determine/determines that context transfer needs to be performed.

For the fourth information, refer to the descriptions in S703.

S1304: The EES #2 sends response information to the EES #1.

For S1305 to S1307, refer to S806 to S808 or S906 to S908. A difference lies in that the EES #1 and the EES #2 are exchanged, to be specific, the EES #1 in S806 to S808 or S906 to S908 is replaced with the EES #2, and the EES #2 in S806 to S808 or S906 to S908 is replaced with the EES #1.

It may be understood that, based on S 1305 to S 1307, the EES #2 may determine target EESs respectively corresponding to the EES #1 and the EES #2.

S1308: The EES #2 obtains information about target EASs from the target EESs.

S1308 may be implemented with reference to S809 and S810. A difference lies in that the EES #1 and the EES #2 are exchanged.

It may be understood that, if the target EES is a plurality of target EESs, the EES #2 may separately send EAS discovery requests to the plurality of target EESs, to separately obtain the information about the target EASs from the plurality of target EESs.

It may be further understood that, based on S1308, the target EASs obtained by the EES #2 include a target EAS corresponding to the EAS #1, a target EAS corresponding to the EAS #2, a target EAS corresponding to the EAS #3, and a target EAS corresponding to the EAS #4.

S 1309: The EES #2 sends information about the target EAS corresponding to the EAS #1 and information about the target EAS corresponding to the EAS #2 to the EES #1.

Optionally, the EES #2 may determine, based on received or determined identifiers of the target EASs, an identifier of the EAS #1, and an identifier of the EAS #2, the information (for example, an identifier and an address) about the target EAS corresponding to the EAS #1 and the information (for example, an identifier and an address) about the target EAS corresponding to the EAS #2.

Optionally, the EES #1 may send response information to the EES #2.

Based on S1309, the EES #1 may send the information (for example, the information is carried in an EAS discovery response) about the target EAS corresponding to the EAS #1 to the EAS #1, and may send the information about the target EAS corresponding to the EAS #2 to the EAS #2. Correspondingly, the EAS #1 and the EAS #2 may send response information to the EES #1.

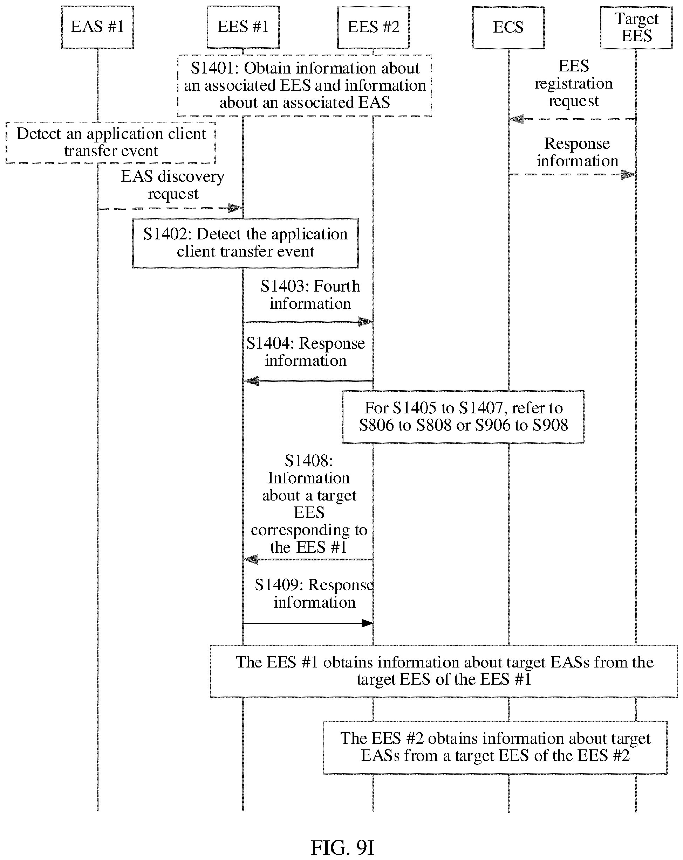

As shown in FIG. 9I, third information includes the information shown in the example 1, the EES #1 initiates application context transfer, and the EES #2 selects a target EES corresponding to the EES #1. In addition, the EES #2 may further perform target EAS discovery. It may be understood that, in an example shown in FIG. 9I, the EES #2 corresponds to the first source EES in FIG. 9B, the EAS #3 and the EAS #4 correspond to the first source EAS in FIG. 9B, the EES #1 corresponds to the second source EES in FIG. 9B, and the EAS #1 and the EAS #2 correspond to the second source EAS in FIG. 9B.

For example, a procedure shown in FIG. 9I may include steps shown in S1401 to S1409.

For S1401 to S1407, respectively refer to S1301 to S1307. Details are not described again.

Based on S 1401 to S1407, the EES #2 may determine the at least one target EES, where the at least one target EES may include the target EES corresponding to the EES #1 and the target EES corresponding to the EES #2.

S1408: The EES #2 sends information about the target EES corresponding to the EES #1 to the EES #1.

The target EES may include the target EES corresponding to the EES #1 and the target EES corresponding to the EES #2. For example, if identifiers of EASs managed by a target EES include an identifier of an EAS managed by the EES #1, the target EES is a target EES corresponding to the EES #1. Likewise, if identifiers of EASs managed by a target EES include an identifier of an EAS managed by the EES #2, the target EES is a target EES corresponding to the EES #2.

S1409: Optionally, the EES #1 sends response information to the EES #2.

Based on S1408, the EES #1 may obtain the information about the target EES corresponding to the EES #1 from the EES #2. In addition, based on S1401 to S1407, the EES #2 may determine the target EES corresponding to the EES #2. Therefore, after S1408 and/or S1409, the EES #1 and the EES #2 may separately perform EAS discovery based on respective corresponding target EESs. For an EAS discovery process, refer to the descriptions in this application. Details are not described herein.

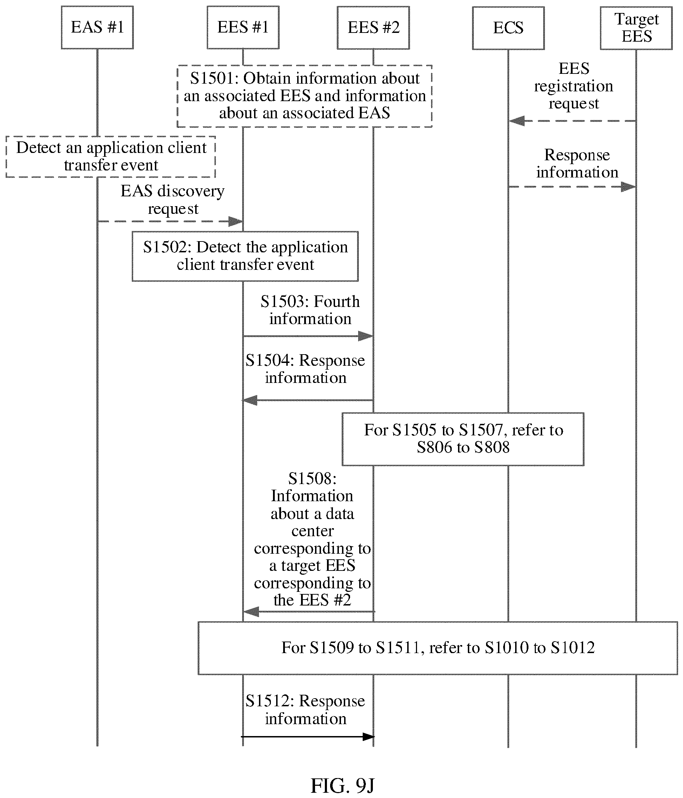

As shown in FIG. 9J, third information includes the information shown in the example 1, the EES #1 initiates application context transfer, and the EES #2 selects a target EES corresponding to the EES #1. In addition, the EES #2 may further perform target EAS discovery. It may be understood that, in an example shown in FIG. 9J, the EES #2 corresponds to the first source EES in FIG. 9B, the EAS #3 and the EAS #4 correspond to the first source EAS in FIG. 9B, the EES #1 corresponds to the second source EES in FIG. 9B, and the EAS #1 and the EAS #2 correspond to the second source EAS in FIG. 9B.

For example, a procedure shown in FIG. 9J may include steps shown in S1501 to S1512.

For S1501 to S1504, respectively refer to S1301 to S1304. Details are not described again.

Based on S 1503 to S1504, the EES #2 may learn that the EES #1 detects the ACR event. Correspondingly, after the EES #2 detects the ACR event or receives the fourth information, the EES #2 may initiate EAS discovery for the EES #1 and the EES #2.

S1505 to S1507 may be implemented with reference to S806 to S808. A difference lies in that the target EES retrieve request in S1505 may include an identifier of the EAS #3 and an identifier of the EAS #4. Optionally, the target EES retrieve request may further include the first information, for example, an associated EAS list, to indicate an association relationship between the EAS #1, the EAS #2, the EAS #3, and the EAS #4. Correspondingly, in S1506 and S1507, the target EES determined by the ECS is the target EES corresponding to the EES #2.

In addition, in S1507, the target EES retrieve response may carry information about a data center corresponding to the target EES corresponding to the EES #2, for example, an EDN identifier and/or a DNAI identifier.

S1508: The EES #2 sends the information about the data center corresponding to the target EES corresponding to the EES #2 to the EES #1.

It may be understood that S1508 corresponds to S702.

For S1509 to S1511, refer to S1010 to S1012. A difference lies only in that the EES #1 performs target EES discovery in S1509 to S1511, and data center information carried in the discovery request is the information about the data center corresponding to the target EES corresponding to the EES #2.

S1512: Optionally, the EES #1 sends response information to the EES #2.

The response information corresponds to the information/signaling sent by the EES #2 to the EES #1 in S1509.

The response information may be a success response or a failure response.

Optionally, the failure response may indicate that application context transfer is not to be performed. In this case, the response information may further include a failure cause. The failure cause may be that application context transfer is not to be performed. When the EES #2 determines not to perform application context transfer, steps S1509 to S1511 may be skipped.

It may be understood that, after S1512, the EES #1 and the EES #2 may separately perform EAS discovery based on respective corresponding target EESs. For an EAS discovery process, refer to the descriptions in this application. Details are not described herein.

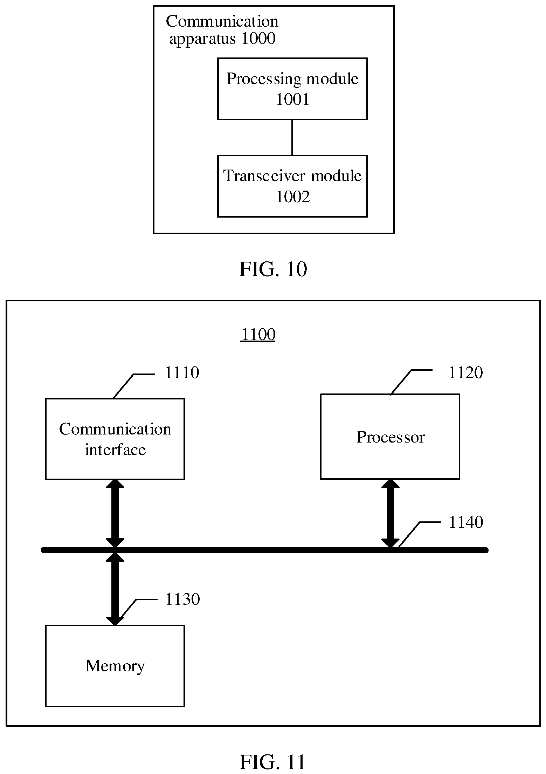

Based on the foregoing content and a same concept, FIG. 10 and FIG. 11 are diagrams of structures of possible communication apparatuses according to this application. The communication apparatuses may be configured to implement the functions of the terminal device or the network device in the foregoing method embodiments, and therefore can also implement the beneficial effects in the foregoing method embodiments.

In this application, the communication apparatus may be any one of an EEC, an EES (including a source EES and/or a target EES), an AC, or an EAS (including a source EAS and/or a target EAS) shown in FIG. 1. No specific requirement is made.

As shown in FIG. 10, a communication apparatus 1000 includes a processing module 1001 and a transceiver module 1002.

The processing module 1001 in the communication apparatus 1000 may be configured to implement functions of any one of the EEC, the EES (including the source EES and/or the target EES), the AC, or the EAS (including the source EAS and/or the target EAS) in the method embodiments shown in FIG. 4 to FIG. 9J, for example, perform actions represented by using rectangular boxes in the flowcharts shown in FIG. 4 to FIG. 9J. The transceiver module 1002 may be configured to support communication between the communication apparatus 1000 and another communication device. For example, when the communication apparatus 1000 is a source EES, the transceiver module 1002 may be used by the source EES to communicate with at least one of an EEC, a target EES, an ECS, or an EAS. For example, the transceiver module 1002 may be configured to perform actions represented by using arrow connection lines in the flowcharts shown in FIG. 4 to FIG. 9J.

FIG. 11 shows an apparatus 1100 according to an embodiment of this application. The apparatus shown in FIG. 11 may be an implementation of a hardware circuit of the apparatus shown in FIG. 10. The apparatus is applicable to performing functions of any one of the EEC, the EES (including the source EES and/or the target EES), the AC, or the EAS (including the source EAS and/or the target EAS) in the foregoing method embodiments in the flowcharts described above.

For ease of description, FIG. 11 shows only main components of the apparatus.

The apparatus 1100 shown in FIG. 11 includes a communication interface 1110, a processor 1120, and a memory 1130. The memory 1130 is configured to store program instructions and/or data. The processor 1120 may operate in cooperation with the memory 1130. The processor 1120 may execute the program instructions stored in the memory 1130. When the instructions or programs stored in the memory 1130 are executed, the processor 1120 is configured to perform the operations performed by the processing module 1001 in the foregoing embodiment, and the communication interface 1110 is configured to perform the operations performed by the transceiver module 1002 in the foregoing embodiment.

The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. At least one of memories 1130 may be included in the processor 1120.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver or a communication interface into which sending and receiving functions are integrated.

The apparatus 1100 may further include a communication line 1140. The communication interface 1110, the processor 1120, and the memory 1130 may be connected to each other through the communication line 1140. The communication line 1140 may be a peripheral component interconnect (peripheral component interconnect, PCI) bus, an extended industry standard architecture (extended industry standard architecture, EISA) bus, or the like. The communication line 1140 may be classified as an address bus, a data bus, a control bus, or the like. For ease of representation, only one bold line is used to represent the communication line 1140 in FIG. 11, but this does not mean that there is only one bus or only one type of bus.

An embodiment of this application further provides a computer-readable storage medium, including instructions. When the instructions are run on a computer, the computer is enabled to perform a method performed by any one of the EEC, the EES (including the source EES and/or the target EES), the AC, or the EAS (including the source EAS and/or the target EAS) in the embodiments shown in FIG. 4 to FIG. 9J.

An embodiment of this application further provides a computer program product, including computer instructions. When the computer instructions are run on a computer, the computer is enabled to perform a method performed by any one of the EEC, the EES (including the source EES and/or the target EES), the AC, or the EAS (including the source EAS and/or the target EAS) in the embodiments shown in FIG. 4 to FIG. 9J.

An embodiment of this application further provides a chip system, including a processor. The processor is coupled to a memory. The memory is configured to store programs or instructions. When the programs or the instructions are executed by the processor, the chip system is enabled to perform a method performed by any one of the EEC, the EES (including the source EES and/or the target EES), the AC, or the EAS (including the source EAS and/or the target EAS) in the embodiments shown in FIG. 4 to FIG. 9J.

An embodiment of this application further provides a communication system, including any one or more of the EEC, the EES (including the source EES and/or the target EES), the AC, or the EAS (including the source EAS and/or the target EAS) in the embodiments shown in FIG. 4 to FIG. 9J.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium accessible by a computer, or a data storage device, such as a server or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may be any conventional processor, controller, microcontroller, or state machine. The processor may alternatively be implemented by using a combination of computing apparatuses, for example, a digital signal processor and a microprocessor, a plurality of microprocessors, one or more microprocessors with a digital signal processor core, or any other similar configuration.

In one or more example designs, the foregoing functions described in this application may be implemented in hardware, software, firmware, or any combination thereof. If the foregoing functions are implemented in software, the functions may be stored in a computer-readable medium or transmitted to a computer-readable medium in a form of one or more instructions or code. The computer-readable medium includes a computer storage medium and a communication medium that enables a computer program to move from one place to another place. The storage medium may be an available medium accessible by any general-purpose or special computer. For example, such a computer-readable medium may include but is not limited to a RAM, a ROM, an EEPROM, a CD-ROM or another optical disc storage, a disk storage or another magnetic storage apparatus, or any other medium that may be configured to bear or store program code in a form of instructions, a data structure, or the like that can be read by a general-purpose or special computer or a general-purpose or special processor. In addition, any connection may be appropriately defined as a computer-readable medium. For example, if software is transmitted from a website, a server, or another remote resource through a coaxial cable, an optical fiber computer, a twisted pair, a digital subscriber line (DSL) or in a wireless manner, such as infrared, radio, or microwave, the software is also included in the defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data in a magnetic manner, and the disk usually optically copies data in a laser manner. A combination of the foregoing apparatuses may also be included in the computer-readable medium.

A person skilled in the art should be aware that in the foregoing one or more examples, the functions described in this application may be implemented by hardware, software, firmware, or any combination thereof. When software is used to implement the functions, the functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible by a general-purpose or dedicated computer.

Although this application is described with reference to specific features and embodiments thereof, it is clear that various modifications and combinations may be made to this application without departing from the spirit and scope of this application. Correspondingly, the specification and accompanying drawings are merely example descriptions of this application defined by the accompanying claims, and are considered as covering any or all modifications, variations, combinations, or equivalents within the scope of this application. It is clear that a person skilled in the art can make various modifications and variations to this application without departing from the scope of this application. In this way, this application is also intended to include these modifications and variations to this application provided that they fall within the scope of the claims of this application and equivalent technologies thereof.

## Claims

1. A communication method, comprising:
sending, by a source edge enabler server EES, first information to a target EES, wherein the first information comprises information about a group of edge application servers EASs, the group of EASs comprises a plurality of associated EASs, and the plurality of associated EASs serve a first application; and
receiving, by the source EES, information about at least one group of target EASs from the target EES, wherein the at least one group of target EASs is determined based on the information about the group of EASs.

2. The method according to claim 1, wherein the at least one group of target EASs is at least one group of second target EASs, and the method further comprises:
determining, by the source EES, a group of first target EASs from the at least one group of second target EASs, wherein the group of first target EASs comprises a plurality of associated target EASs, and the plurality of associated target EASs are configured to serve the first application after application context transfer.

3. A communication method, comprising:
receiving, by a source edge enabler server EES, information about EASs corresponding to a target EES from the target EES; and
determining, by the source EES based on first information and the information about the EASs corresponding to the target EES, a group of target EASs from the EASs corresponding to the target EES, wherein the first information comprises information about a group of EASs, the group of EASs comprises a plurality of associated edge application servers EASs, the plurality of associated EASs serve a first application, the group of target EASs comprises a plurality of associated target EASs, and the plurality of associated target EASs are configured to serve the first application after application context transfer.

4. The method according to claim 3, wherein the EASs corresponding to the target EES comprise at least one group of third target EASs, and the determining, by the source EES based on first information and the information about the EASs corresponding to the target EES, a group of target EASs from the EASs corresponding to the target EES comprises:
determining, by the source EES, information about first target EASs from information about the at least one group of third target EASs based on the first information, wherein EASs in any group of third target EASs serve a same application.

5. The method according to any one of claims 1 to 4, wherein
the plurality of associated EASs correspond to the source EES; or
the plurality of associated EASs correspond to the source EES and at least one EES other than the source EES.

6. The method according to any one of claims 1 to 5, wherein the method further comprises:
sending, by the source EES, the first information to an edge configuration server ECS; and
receiving, by the source EES, information about the target EES from the ECS, wherein the target EES is determined based on the first information.

7. The method according to claim 6, wherein the target EES is a plurality of target EESs.

8. The method according to claim 7, wherein the plurality of target EESs correspond to a same data center.

9. The method according to claim 7, wherein the method further comprises:
receiving, by the source EES, second information from the ECS, wherein the second information indicates that the plurality of target EESs serve the group of EASs.

10. The method according to any one of claims 1 to 9, wherein the method further comprises:
receiving, by the source EES, information about at least one EES and information about EASs corresponding to the at least one EES from the ECS; and
determining, by the source EES, the target EES from the at least one EES based on the first information, the information about the at least one EES, and the information about the EASs corresponding to the at least one EES.

11. The method according to claim 10, wherein the information about the at least one EES comprises information about a data center of the at least one EES.

12. The method according to claim 10 or 11, wherein the determining, by the source EES, the target EES from the at least one EES based on the first information, the information about the at least one EES, and the information about the EASs corresponding to the at least one EES comprises:
determining, by the source EES, one target EES from the at least one EES, wherein EASs corresponding to the target EES comprise the group of EASs; or
determining, by the source EES, a plurality of target EESs from the at least one EES, wherein EASs corresponding to each of the plurality of target EESs comprise some EASs in the group of EASs.

13. The method according to claim 12, wherein the plurality of target EESs correspond to a same data center.

14. The method according to any one of claims 1 to 13, wherein the method further comprises:
receiving, by the source EES, the first information from a terminal device; or
receiving, by the source EES, the first information from one or more EASs in the group of EASs.

15. The method according to any one of claims 1 to 14, wherein the first information further comprises information indicating that the plurality of associated EASs in the group of EASs serve the first application.

16. The method according to any one of claims 1 to 15, wherein the information about the group of EASs comprises identifiers and/or type information of the plurality of associated EASs.

17. A communication method, comprising:
receiving, by a target EES, first information from a source EES, wherein the first information comprises information about a group of EASs, the group of EASs comprises a plurality of associated edge application servers EASs, and the plurality of associated EASs serve a first application;
determining, by the target EES, information about at least one group of target EASs based on the first information; and
sending, by the target EES, the information about the at least one group of target EASs to the source EES.

18. The method according to claim 17, wherein the determining, by the target EES, information about at least one group of target EASs based on the first information comprises:
determining, by the target EES based on the first information and information about EASs corresponding to the target EES, the information about the at least one group of target EASs from the EASs corresponding to the target EES.

19. The method according to claim 17 or 18, wherein the at least one group of target EASs comprises a group of first target EASs, the group of first target EASs comprises a plurality of associated target EASs, and the plurality of associated target EASs are configured to serve the first application after application context transfer.

20. The method according to claim 19, wherein the method further comprises:
sending, by the target EES, the information about the EASs corresponding to the target EES to an ECS.

21. The method according to claim 20, wherein the information about the EASs corresponding to the target EES comprises identifiers of the EASs corresponding to the target EES, and comprises at least one of uniform resource identifiers URIs, fully qualified domain names FQDNs, or IP addresses of the EASs corresponding to the target EES.

22. The method according to any one of claims 17 to 21, wherein the first information further comprises information indicating that the plurality of associated EASs in the group of EASs serve the first application.

23. The method according to any one of claims 17 to 22, wherein the information about the group of EASs comprises identifiers and/or type information of the plurality of associated EASs.

24. A communication method, comprising:
receiving, by an ECS, first information from a source EES, wherein the first information comprises information about a group of EASs, the group of EASs comprises a plurality of associated edge application servers EASs, and the plurality of associated EASs serve a first application;
determining, by the ECS, at least one target EES from at least one EES based on the first information; and
sending, by the ECS, information about the at least one target EES to the source EES.

25. The method according to claim 24, wherein the determining, by the ECS, at least one target EES from at least one EES based on the first information comprises:
determining, by the ECS, the at least one target EES from the at least one EES based on the first information, information about the at least one EES, and information about EASs corresponding to the at least one EES.

26. The method according to claim 25, wherein the determining, by the ECS, the at least one target EES from the at least one EES based on the first information, information about the at least one EES, and information about EASs corresponding to the at least one EES comprises:
determining, by the ECS, one target EES from the at least one EES, wherein EASs corresponding to the target EES comprise the group of EASs; or
determining, by the ECS, a plurality of target EESs from the at least one EES, wherein EASs corresponding to each of the plurality of target EESs comprise some EASs in the group of EASs.

27. The method according to claim 26, wherein the plurality of target EESs correspond to a same data center.

28. The method according to any one of claims 24 to 27, wherein the target EES is a plurality of target EESs, and the method further comprises:
sending, by the ECS, second information to the source EES, wherein the second information indicates that the plurality of target EESs serve the group of EASs.

29. The method according to any one of claims 24 to 28, wherein the method further comprises:
receiving, by the ECS, the information about the EASs corresponding to the at least one EES from the at least one EES.

30. The method according to any one of claims 24 to 29, wherein the first information further comprises information indicating that the plurality of associated EASs in the group of EASs serve the first application.

31. The method according to any one of claims 24 to 30, wherein the information about the group of EASs comprises identifiers and/or type information of the plurality of associated EASs.

32. A communication method, comprising:
obtaining, by a first source edge enabler server EES, third information, wherein EASs corresponding to the first source EES comprise a first source EAS, the first source EAS and a second source EAS are comprised in a group of EASs, the second source EAS corresponds to a second source EES, the group of EASs comprises a plurality of associated EASs, and the plurality of associated EASs serve a first application; and
sending, by the first source EES, the third information to the second source EES, wherein EASs corresponding to the second source EES comprise the second source EAS, wherein
the third information is used to determine a target EAS corresponding to the second source EAS.

33. The method according to claim 32, wherein the third information comprises at least one of the following:
information about a target EES;
information about EASs corresponding to the target EES, wherein the EASs corresponding to the target EES comprise the target EAS corresponding to the second source EAS;
information about one or more data centers; or
information about the target EAS corresponding to the second source EAS.

34. The method according to claim 32 or 33, wherein the method further comprises:
receiving, by the first source EES, fourth information from the second source EES, wherein the fourth information is used to request the first source EES to discover the target EES and/or the target EAS.

35. The method according to any one of claims 32 to 34, wherein the method further comprises:
receiving, by the first source EES from a terminal device, information about the second source EES and/or information indicating that the first source EAS and the second source EAS are to perform application context transfer together.

36. The method according to any one of claims 32 to 35, wherein the method further comprises:
sending, by the first source EES, information about the group of EASs to an edge configuration server ECS; and
receiving, by the first source EES, the information about the target EES from the ECS, wherein the target EES is determined based on the information about the group of EASs.

37. The method according to any one of claims 32 to 35, wherein the method further comprises:
receiving, by the first source EES, information about at least one EES and information about EASs corresponding to the at least one EES from an ECS; and
determining, by the first source EES, the target EES from the at least one EES based on information about the group of EASs, the information about the at least one EES, and the information about the EASs corresponding to the at least one EES.

38. The method according to claim 37, wherein the information about the at least one EES comprises information about a data center of the at least one EES.

39. The method according to any one of claims 32 to 38, wherein the method further comprises:
sending, by the first source EES, an EAS discovery request to the target EES, wherein the EAS discovery request comprises information about the second source EAS; and
receiving, by the first source EES, the information about the target EAS corresponding to the second source EAS from the target EES.

40. The method according to any one of claims 32 to 39, wherein the method further comprises:
receiving, by the first source EES, the information about the EASs corresponding to the target EES from the target EES; and
determining, by the first source EES based on the information about the second source EAS and the information about the EASs corresponding to the target EES, the target EAS corresponding to the second source EAS from at least one EAS corresponding to the target EAS.

41. The method according to claim 39 or 40, wherein the method further comprises:
receiving, by the first source EES, the information about the second source EAS from the terminal device.

42. The method according to any one of claims 32 to 41, wherein the method further comprises:
sending, by the first source EES, fifth information to the second source EES, wherein the fifth information indicates at least one of the following:
that the first source EES performs EES discovery and/or EAS discovery;
that an application context transfer ACR event is detected; or
that application context transfer needs to be performed.

43. A communication method, comprising:
receiving, by a second source edge enabler server EES, third information from a first source EES, wherein EASs corresponding to the first source EES comprise a first source EAS, EASs corresponding to the second source EES comprise a second source EAS, the first source EAS and the second source EAS are comprised in a group of EASs, the group of EASs comprises a plurality of associated EASs, and the plurality of associated EASs serve a first application; and
determining, by the second source EES based on the third information, a target EAS corresponding to the second source EAS.

44. The method according to claim 43, wherein the third information comprises at least one of the following:
information about a target EES;
information about EASs corresponding to the target EES, wherein the EASs corresponding to the target EES comprise the target EAS corresponding to the second source EAS;
information about one or more data centers; or
information about the target EAS corresponding to the second source EAS.

45. The method according to claim 44, wherein the third information comprises information about a plurality of data centers, and the method further comprises:
determining, by the second source EES, a data center from the plurality of data centers.

46. The method according to claim 44 or 45, wherein the method further comprises:
determining, by the second source EES, the target EES from at least one EES corresponding to the data center.

47. The method according to claim 46, wherein the determining, by the second source EES based on the third information, a target EAS corresponding to the second source EAS comprises:
obtaining, by the second source EES, the information about the target EAS from the target EES, or determining, by the second source EES, the target EAS from the EASs managed by the target EES.

48. The method according to claim 43 or 44, wherein the third information comprises the information about the target EES, and the determining, by the second source EES based on the third information, a target EAS corresponding to the second source EAS comprises:
sending, by the second source EES, an EAS discovery request to the target EES; and
receiving, by the second source EES, the information about the target EAS from the target EES.

49. The method according to claim 43 or 44, wherein the third information comprises the information about the EASs corresponding to the target EES, and the determining, by the second source EES based on the third information, a target EAS corresponding to the second source EAS comprises:
determining, by the second source EES based on information about the second source EAS and the information about the EASs corresponding to the target EES, the target EAS from the EASs corresponding to the target EES.

50. The method according to claim 43 or 44, wherein the third information comprises information about a data center in which the target EES is located, and the method further comprises:
sending, by the second source EES, an EES discovery request to an ECS, wherein the EES discovery request comprises the information about the data center; and
receiving, by the second source EES, the information about the target EES from the ECS.

51. The method according to any one of claims 43 to 50, wherein the method further comprises:
receiving, by the second source EES from a terminal device, information about the first source EES and/or information indicating that the first source EAS and the second source EAS are to perform application context transfer together.

52. The method according to any one of claims 43 to 51, wherein the method further comprises:
receiving, by the second source EES, fifth information from the first source EES, wherein the fifth information indicates at least one of the following:
that the first source EES performs EES discovery and/or EAS discovery;
that an application context transfer ACR event is detected; or
that application context transfer needs to be performed.

53. A communication method, comprising:
obtaining, by a terminal device, information about a group of EESs, wherein the group of EASs comprises a first source EES and a second source EES, a first source EAS corresponds to the first source EES, and a second source EAS corresponds to the second source EES; and
sending, by the terminal device, information about the second source EES to the first source EES; and/or
sending, by the terminal device, information about the first source EES to the second source EES.

54. The method according to claim 53, wherein the sending, by the terminal device, information about the second source EES to the first source EES comprises:
sending, by the terminal device, the information about the group of EESs to the first source EES.

55. The method according to claim 53 or 54, wherein the sending, by the terminal device, information about the first source EES to the second source EES comprises:
sending, by the terminal device, the information about the group of EESs to the first source EES.

56. The method according to any one of claims 53 to 55, wherein the method further comprises:
sending, by the terminal device, information about the second source EAS to the first source EES.

57. The method according to claim 56, wherein the sending, by the terminal device, information about the second source EAS to the first source EES comprises:
sending, by the terminal device, information about a group of EASs to the first source EES.

58. The method according to any one of claims 53 to 57, wherein the method further comprises:
sending, by the terminal device, information about the first source EAS to the second source EES.

59. The method according to claim 58, wherein the sending, by the terminal device, information about the first source EAS to the second source EES comprises:
sending, by the terminal device, the information about the group of EASs to the second source EES.

60. The method according to any one of claims 53 to 59, wherein the method further comprises:
sending, by the terminal device to the first source EES, information indicating that the first source EAS and the second source EAS are to perform application context transfer together; and/or
sending, by the terminal device to the second source EES, information indicating that the first source EAS and the second source EAS are to perform application context transfer together.

61. A communication apparatus, comprising a processor and a communication interface, wherein the communication interface is configured to communicate with another communication apparatus, and the processor is configured to run a group of programs, so that the method according to any one of claims 1 to 16 is implemented, the method according to any one of claims 17 to 23 is implemented, the method according to any one of claims 24 to 31 is implemented, the method according to any one of claims 32 to 42 is implemented, the method according to any one of claims 43 to 52 is implemented, or the method according to any one of claims 53 to 60 is implemented.

62. A computer-readable storage medium, wherein the readable storage medium stores computer programs or instructions, and when the computer programs or the instructions are executed by a communication apparatus, the method according to any one of claims 1 to 16 is implemented, the method according to any one of claims 17 to 23 is implemented, the method according to any one of claims 24 to 31 is implemented, the method according to any one of claims 32 to 42 is implemented, the method according to any one of claims 43 to 52 is implemented, or the method according to any one of claims 53 to 60 is implemented.

63. A computer program product, wherein the program product stores computer programs or instructions, and when the computer programs or the instructions are executed by a communication apparatus, the method according to any one of claims 1 to 16 is implemented, the method according to any one of claims 17 to 23 is implemented, the method according to any one of claims 24 to 31 is implemented, the method according to any one of claims 32 to 42 is implemented, the method according to any one of claims 43 to 52 is implemented, or the method according to any one of claims 53 to 60 is implemented.

64. A communication system, comprising a source EES and a target EES, wherein the source EES is configured to perform the method according to any one of claims 1 to 16, and the target EES is configured to perform the method according to any one of claims 17 to 23.

65. The communication system according to claim 64, further comprising an ECS, wherein the ECS is configured to perform the method according to any one of claims 24 to 31.

66. A communication system, comprising a first source EES and a second source EES, wherein the source EES is configured to perform the method according to any one of claims 32 to 42, and the target EES is configured to perform the method according to any one of claims 43 to 52.

67. The communication system according to claim 66, further comprising a terminal device, wherein the terminal device is configured to perform the method according to any one of claims 53 to 60.

68. A chip, comprising a processor, wherein the processor is configured to execute programs stored in a memory, to implement the method according to any one of claims 1 to 16, implement the method according to any one of claims 17 to 23, implement the method according to any one of claims 24 to 31, implement the method according to any one of claims 32 to 42, implement the method according to any one of claims 43 to 52, or implement the method according to any one of claims 53 to 60.

69. A communication apparatus, configured to implement the method according to any one of claims 1 to 16, configured to implement the method according to any one of claims 17 to 23, configured to implement the method according to any one of claims 24 to 31, configured to implement the method according to any one of claims 32 to 42, configured to implement the method according to any one of claims 43 to 52, or configured to implement the method according to any one of claims 53 to 60.
